(19) Europäisches Patentamt / European Patent Office / Office européen des brevets

(11) EP 2 351 792 A1

(12) **EUROPEAN PATENT APPLICATION**
published in accordance with Art. 153(4) EPC

(43) Date of publication:
**03.08.2011 Bulletin 2011/31**

(21) Application number: **09824865.1**

(22) Date of filing: **02.11.2009**

(51) Int Cl.:
***C08L 67/04*** *(2006.01)*
***C08K 3/00*** *(2006.01)*
***C08K 5/00*** *(2006.01)*
***C08K 5/521*** *(2006.01)*
***C08K 5/5317*** *(2006.01)*
***C08L 67/02*** *(2006.01)*
***C08L 101/16*** *(2006.01)*

(86) International application number:
**PCT/JP2009/069022**

(87) International publication number:
**WO 2010/053167 (14.05.2010 Gazette 2010/19)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.11.2008 JP 2008284280**
**05.11.2008 JP 2008284274**
**24.03.2009 JP 2009071909**

(71) Applicants:
- **Teijin Chemicals, Ltd.**
  **Chiyoda-ku**
  **Tokyo 100-0013 (JP)**
- **Teijin Limited**
  **Osaka-shi, Osaka 541-0054 (JP)**

(72) Inventors:
- **MATSUNO, Yuichi**
  **Tokyo 100-0013 (JP)**
- **MITSUNAGA, Masaki**
  **Tokyo 100-0013 (JP)**
- **ODA, Jitsuo**
  **Tokyo 100-0013 (JP)**
- **DOTEGUCHI, Mitsuru**
  **Tokyo 100-0013 (JP)**
- **SHIBATA, Yoshitake**
  **Tokyo 100-0013 (JP)**
- **TOYOHARA, Kiyotsuna**
  **Iwakuni-shi**
  **Yamaguchi 740-0014 (JP)**
- **IWAI, Masahiro**
  **Iwakuni-shi**
  **Yamaguchi 740-0014 (JP)**
- **KITAMURA, Takuro**
  **Tokyo 100-0013 (JP)**

(74) Representative: **Hallybone, Huw George**
**Carpmaels & Ransford**
**One Southampton Row**
**London**
**WC1B 5HA (GB)**

# (54) POLYLACTIC ACID COMPOSITIONS AND MOLDED ARTICLES THEREOF

(57) A composition comprising polylactic acid and having excellent heat stability, especially moist heat stability, and a molded article thereof.

The composition comprises 100 parts by weight of a resin component (component A) which is composed of 5 to 100 wt% of polylactic acid (component A-$\alpha$) and 95 to 0 wt% of a thermoplastic resin (component A-$\beta$), 0.001 to 5 parts by weight of a phosphono-fatty acid ester (component B), 0.01 to 5 parts by weight of a phosphate metal salt (component C), 0.001 to 2 parts by weight of at least one antioxidant (component D) selected from the group consisting of a phosphite-based compound, a phosphonite-based compound, a hindered phenol-based compound and a thioether-based compound, and 0.001 to 10 parts by weight of an end-sealing agent (component E).

EP 2 351 792 A1

## Description

### TECHNICAL FIELD

The present invention relates to a composition comprising polylactic acid. More specifically, it relates to a composition which comprises polylactic acid and has excellent heat stability, especially moist heat stability, and to a molded article thereof.

### BACKGROUND ART

Biodegradable polymers which are decomposed in the natural environment are attracting attention and being studied worldwide for the purpose of global environmental protection. As the biodegradable polymers, there are known aliphatic polyesters such as polylactic acid, polyhydroxybutyrate and polycaprolactone. Since polylactic acid is produced from lactic acid which is obtained from a raw material derived from a living body or a derivative thereof, it is a polymer material which has high biological safety and is eco-friendly. Therefore, the use of polylactic acid as a general-purpose polymer is now under study, as exemplified by the use of the material as a stretched film, fiber or injection molded article. To expand its use, studies on polymer alloys thereof have been widely conducted.

However, as polylactic acid has a low crystal melting temperature of about 155˚C, there are limitations to its heat resistance. Also it has a defect such as poor heat stability, especially moist heat stability that it is easily decomposed by moisture.

Meanwhile, it is known that stereocomplex polylactic acid is formed by mixing together poly-L-lactic acid (PLLA) and poly-D-lactic acid (PDLA) in a solution or molten state (refer to Patent Document 1 and Non-patent Document 1). It is also known that this stereocomplex polylactic acid has a crystal melting temperature of 200 to 230˚C which is higher than the melting points of PLLA and PDLA and high crystallinity.

However, it is not easy to form the stereocomplex polylactic acid. Especially when the weight average molecular weights of PLLA and PDLA are higher than 150,000, the difficulty of forming the stereocomplex polylactic acid becomes marked (refer to Patent Document 1). That is, the stereocomplex polylactic acid generally does not show a single phase and becomes a mixed-phase composition which has both PLLA and PDLA phases (homo phases) and a polylactic acid stereocomplex phase (complex phase). When the ratio of the complex phase is low in this mixed-phase composition, it is difficult to exhibit the heat resistance of the stereocomplex polylactic acid. The stereocomplex polylactic acid has susceptibility to hydrolysis by moisture which is the characteristic of an aliphatic polyester like a polylactic acid homopolymer.

To overcome this situation, various studies have been made on the improvement of the heat stability of polylactic acid. For instance, Patent Document 2 proposes that a phosphate-based compound or a phosphite-based compound should be added as a catalytic deactivator to polylactic acid when the molecular weight becomes 50,000 or more. Patent Documents 3 and 4 propose that an acidic phosphate or a chelating agent should be added as a catalytic deactivator to improve the heat stability of polylactic acid.

However, the addition of the catalytic deactivator to polylactic acid having a low molecular weight as in Patent Document 2 means that a subsequent polymerization reaction is inhibited, thereby making it impossible to obtain a high-molecular weight material. Meanwhile, the acidic phosphate disclosed by Patent Documents 3 and 4 causes the corrosion of production equipment or the deterioration of the moist heat stability of the resin due to its acidity. The chelating agents enumerated in these documents generally have low heat resistance and scorch before they capture a metal catalyst, thereby causing serious coloring or a bad smell.

Patent Document 5 proposes that a phosphono-fatty acid ester should be contained in polylactic acid to deactivate the residual catalyst contained in the polylactic acid effectively, thereby improving the heat stability of the polylactic acid. However, moist heat stability is not taken into consideration and enough measures against the characteristic feature of the aliphatic polyester that it is readily hydrolyzed by moisture are not taken.

| | |
|---|---|
| (Patent Document 1) | JP-A 63-241024 |
| (Patent Document 2) | JP No. 2862071 |
| (Patent Document 3) | JP No. 3487388 |
| (Patent Document 4) | JP-A 10-36651 |
| (Patent Document 5) | WO2007/114459 |
| (Non-patent Document 1) | Macromolecules, 24,5651 (1991) |

### DISCLOSURE OF THE INVENTION

It is an object of the present invention to provide a composition which comprises polylactic acid and has excellent

heat stability, especially moist heat stability, and a molded article thereof. It is another object of the present invention to provide a method of producing a composition which comprises polylactic acid and has excellent heat stability, especially moist heat stability.

The inventors of the present invention have conducted intensive studies on the improvement of heat stability, especially moist heat stability, of polylactic acid. As a result, they have found that, when a phosphono-fatty acid ester (component B) is used as a deactivator for the residual catalyst which is considered to reduce the heat stability of polylactic acid, a phosphate metal salt (component C) is used as a crystal nucleating agent, and a specific antioxidant (component D) is used, the deactivating effect of the phosphono-fatty acid ester (component B) is enhanced synergistically, thereby making it possible to obtain a polylactic acid composition having excellent heat stability, especially moist heat stability. They have further found that a bad smell derived from an end-sealing agent which causes the deterioration of work environment or use environment and the contamination of a mold which seems to be derived from a bad smell causative substance can be suppressed. More surprisingly, they have found that the amount of an end-sealing agent (component E) required to attain a certain level of moist heat stability can be reduced.

They have also found that when the phosphono-fatty acid ester (component B) is added to the polylactic acid at the end of the polymerization of the polylactic acid, a highly efficient deactivating effect is obtained and a polylactic acid composition having a higher level of moist heat stability is obtained.

The present invention includes the following inventions.

1. A composition comprising

   100 parts by weight of a resin component (component A) which is composed of 5 to 100 wt% of polylactic acid (component A-$\alpha$) and 95 to 0 wt% of a thermoplastic resin (component A-$\beta$),
   0.001 to 5 parts by weight of a phosphono-fatty acid ester (component B),
   0.01 to 5 parts by weight of a phosphate metal salt (component C),
   0.001 to 2 parts by weight of at least one antioxidant (component D) selected from the group consisting of a phosphite-based compound, a phosphonite-based compound, a hindered phenol-based compound and a thioether-based compound, and
   0.001 to 10 parts by weight of an end-sealing agent (component E).

2. The composition in the above paragraph 1 which further comprises 0.01 to 0.3 part by weight of a hydrotalcite (component F) based on 100 parts by weight of the resin component (component A).
3. The composition in the above paragraph 1 or 2 which further comprises 2 to 100 parts by weight of an impact modifier (component G) based on 100 parts by weight of the resin component (component A).
4. The composition in any one of the above paragraphs 1 to 3 which further comprises at least one flame retardant (component H) selected from the group consisting of a phosphorus-based flame retardant (component H-1), a nitrogen-based flame retardant (component H-2) and a metal hydroxide compound-based flame retardant (component H-3) based on 100 parts by weight of the resin component (component A).
5. The composition in any one of the above paragraphs 1 to 4 which further comprises 0.05 to 100 parts by weight of an inorganic filler (component I) based on 100 parts by weight of the resin component (component A).
6. The composition in any one of the above paragraphs 1 to 5, wherein the polylactic acid (component A-$\alpha$) comprises poly-L-lactic acid (component A-$\alpha$-1) essentially composed of an L-lactic acid unit and poly-D-lactic acid (component A-$\alpha$-2) essentially composed of a D-lactic acid unit, and the weight ratio of the component A-$\alpha$-1 to the component A-$\alpha$-2 is 10:90 to 90:10.
7. The composition in the above paragraph 6, wherein the poly-L-lactic acid (component A-$\alpha$-1) contains not less than 90 mol% of the L-lactic acid unit and the poly-D-lactic acid (component A-$\alpha$-2) contains not less than 90 mol% of the D-lactic acid unit.
8. The composition in any one of the above paragraphs 1 to 7, wherein the polylactic acid (component A-$\alpha$) has a ratio of melting peaks at 195 ˚C or higher to all the melting peaks in the temperature elevation step of differential scanning calorimeter (DSC) measurement of not less than 80 %.
9. The composition in any one of the above paragraphs 1 to 8, wherein the phosphono-fatty acid ester (component B) is represented by the following formula (1).

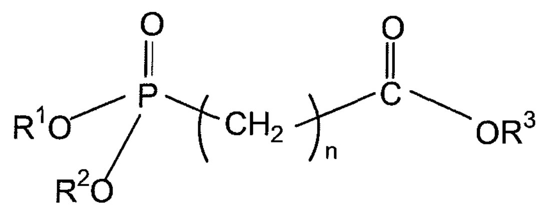

(1)

(in the above formula, $R^1$ to $R^3$ are each independently an alkyl group having 1 to 20 carbon atoms or aryl group having 6 to 12 carbon atoms, and n is an integer of 1 to 3.)

10. The composition in any one of the above paragraphs 1 to 9, wherein the phosphate metal salt (component C) is represented by the following formula (2) or (3).

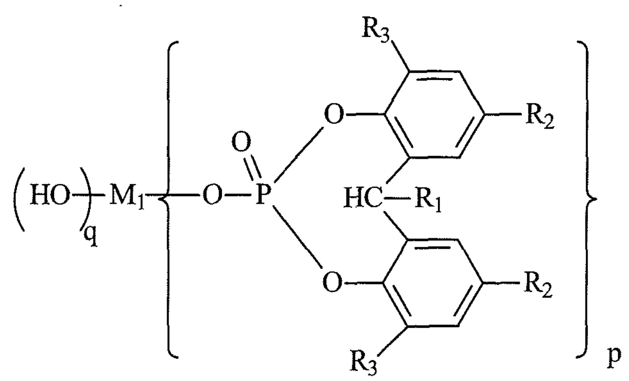

(2)

(in the above formula, $R_1$ is a hydrogen atom or alkyl group having 1 to 4 carbon atoms, $R_2$ and $R_3$ are each independently a hydrogen atom or alkyl group having 1 to 12 carbon atoms, $M_1$ is an alkali metal atom, alkali earth metal atom, zinc atom or aluminum atom, p is 1 or 2, and q is 0 when $M_1$ is an alkali metal atom, alkali earth metal atom or zinc atom and 1 or 2 when $M_1$ is an aluminum atom.)

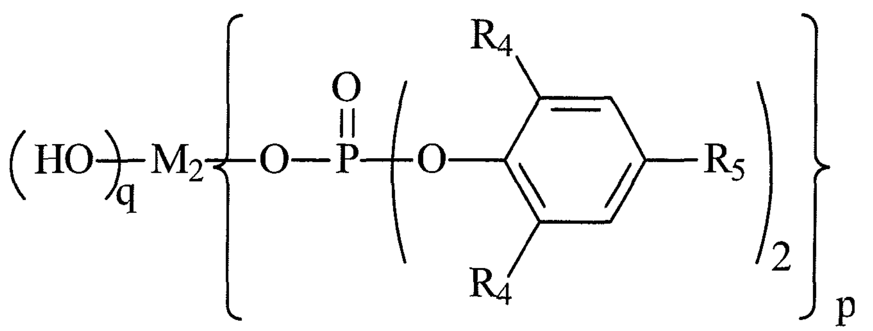

(3)

(in the above formula, $R_4$ and $R_5$ are each independently a hydrogen atom or alkyl group having 1 to 12 carbon atoms, $M_2$ is an alkali metal atom, alkali earth metal atom, zinc atom or aluminum atom, p is 1 to 2, and q is 0 when $M_2$ is an alkali metal atom, alkali earth metal atom or zinc atom and 1 or 2 when $M_2$ is an aluminum atom.)

11. The composition in any one of the above paragraphs 1 to 10, wherein the antioxidant (component D) is a combination of a phosphite-based compound and a hindered phenol-based compound.

12. The composition in any one of the above paragraphs 1 to 11, wherein the end-sealing agent (component E) is at least one member selected from the group consisting of a carbodiimide compound, an epoxy compound, an

oxazoline compound and an oxazine compound.

13. The composition in any one of the above paragraphs 1 to 12, wherein the thermoplastic resin (component A-β) is at least one resin selected from the group consisting of an aromatic polyester resin (A-β-1), a polyolefin resin (component A-β-2), a methacrylic resin (component A-β-3), an aromatic polycarbonate resin (component A-β-4) and a polyacetal resin (component A-β-5).

14. A method of producing the composition of the above paragraph 1, comprising the steps of:

(i) melt kneading together composition-1 which comprises 100 parts by weight of poly-L-lactic acid (component A-α-1) and 0.001 to 3 parts by weight of a phosphono-fatty acid ester (component B) and composition-2 which comprises 100 parts by weight of poly-D-lactic acid (component A-α-2) and 0.001 to 3 parts by weight of a phosphono-fatty acid ester (component B) in the presence of 0.01 to 5 parts by weight of a phosphate metal salt (component C) based on 100 parts by weight of the total of the composition-1 and the composition-2 to prepare stereocomplex polylactic acid; and

(ii) melt kneading together 100 parts by weight of a resin component (component A) which is composed of 5 to 100 wt% of the obtained stereocomplex polylactic acid (component A-α) and 95 to 0 wt% of a thermoplastic resin (component A-β), 0.001 to 2 parts by weight of at least one antioxidant (component D) selected from the group consisting of a phosphite-based compound, a phosphonite-based compound, a hindered phenol-based compound and a thioether-based compound and 0.001 to 10 parts by weight of an end-sealing agent (component E).

15. A molded article of the composition of any one of the above paragraphs 1 to 13.

BEST MODE FOR CARRYING OUT THE INVENTION

<polylactic acid: component A-α>

The polylactic acid (component A-α) is poly-L-lactic acid (component A-α-1) essentially composed of an L-lactic acid unit, poly-D-lactic acid (component A-α-2) essentially composed of a D-lactic acid unit, or a mixture thereof.

The poly-L-lactic acid (component A-α-1) is essentially composed of an L-lactic acid unit represented by the following formula (4). The component A-α-1 preferably comprises 90 to 100 mol% of the L-lactic acid unit and 0 to 10 mol% of a comonomer unit other than L-lactic acid.

The poly-D-lactic acid (component A-α-2) is essentially composed of a D-lactic acid unit represented by the following formula (4). The component A-α-2 preferably comprises 90 to 100 mol% of the D-lactic acid unit and 0 to 10 mol% of a comonomer unit other than D-lactic acid.

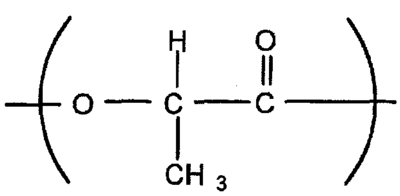

(4)

The poly-L-lactic acid (component A-α-1) or the poly-D-lactic acid (component A-α-2) preferably has an optical purity of 90 to 100 mol%. When the optical purity falls below this range, the crystallinity and melting point of the polylactic acid lower, thereby making it difficult to obtain high heat resistance. Therefore, the melting point of the poly-L-lactic acid (component A-α-1) or the poly-D-lactic acid (component A-α-2) is preferably 160˚C or higher, more preferably 170 ˚C or higher, much more preferably 175˚C or higher.

From this point of view, the optical purity of lactic acid or lactide which is the raw material of the polymer is preferably 96 to 100 mol%, more preferably 97.5 to 100 mol%, much more preferably 98.5 to 100 mol%, particularly preferably 99 to 100 mol%.

The comonomer unit is a D-lactic acid unit in the case of the poly-L-lactic acid (component A-α-1), an L-lactic acid unit in the case of the poly-D-lactic acid (component A-α-2), or a unit other than lactic acid.

The amount of the comonomer unit other than the lactic acid unit is 0 to 10 mol%, preferably 0 to 5 mol%, much more preferably 0 to 2 mol%, particularly preferably 0 to 1 ml%.

Examples of the comonomer unit include units derived from dicarboxylic acids, polyhydric alcohols, hydroxycarboxylic acids and lactones, all having a functional group capable of forming at least two ester bonds, and units derived from polyesters, polyethers and polycarbonates comprising these as constituent components.

The dicarboxylic acids include succinic acid, adipic acid, azelaic acid, sebacic acid, terephthalic acid and isophthalic acid. The polyhydric alcohols include aliphatic polyhydric alcohols such as ethylene glycol, propylene glycol, butanediol, pentanediol, hexanediol, octanediol, glycerin, sorbitan, neopentyl glycol, diethylene glycol, triethylene glycol, polyethylene glycol and polypropylene glycol, and aromatic polyhydric alcohols such as an adduct of bisphenol with ethylene oxide. The hydroxycarboxylic acids include glycolic acid and hydroxybutyric acid. The lactones include glycolide, s-caprolactone, β-propiolactone, δ-butyrolactone, β- or γ-butyrolactone, pivalolactone and 8-valerolactone.

The weight average molecular weights of the poly-L-lactic acid (component A-α-1) and the poly-D-lactic acid (component A-α-2) are preferably 80,000 to 300,000, more preferably 100,000 to 250,000, much more preferably 120,000 to 230, 000 in order to obtain both the mechanical properties and moldability of the composition of the present invention.

The weight average molecular weight and number average molecular weight of the polylactic acid are values in terms of standard polystyrene measured by gel permeation chromatography (GPC).

The poly-L-lactic acid (component A-α-1) and the poly-D-lactic acid (component A-α-2) can be produced by a conventionally known method. Examples of the method include the melt ring-opening polymerization of L- or D-lactide, the solid-phase polymerization of polylactic acid having a low molecular weight and direct polymerization for dehydrating and condensing lactic acid.

The polymerization reaction can be carried out in a conventionally known reactor. For example, vertical reactors or horizontal reactors having high-viscosity agitating elements such as helical ribbon elements can be used alone or in combination. Alternatively, batch, continuous and semi-batch processes may be used alone or in combination.

In the solid-phase polymerization, it is preferred from the viewpoint of preventing the fusion of a pellet and production efficiency that a prepolymer should be crystallized in advance, and polymerization is carried out at a fixed temperature within a temperature range from the glass transition temperature to lower than the melting point of the prepolymer or by elevating the temperature gradually along with the proceeding of polymerization in a fixed vertical or horizontal reactor or a reactor (rotary kiln, etc.) whose vessel turns, such as a tumbler or kiln. It is also preferred that the inside pressure of the reactor should be reduced or a heated inert gas stream should be circulated to remove generated water efficiently

The composition of the present invention comprises a metal catalyst which is used to produce the polylactic acid. The metal catalyst is a compound which contains at least one metal element selected from the group consisting of alkali earth metals, rare earth metals, fourth-period transition metals, aluminum, germanium, tin and antimony. The alkali earth metals include magnesium, calcium and strontium. The rare earth elements include scandium, yttrium, lanthanum and cerium. The fourth-period transition metals include iron, cobalt, nickel and zinc. The metal catalyst is added to the composition as a carboxylate, alkoxide, aryloxide or enolate of β-diketone of at least one of these metals. When polymerization activity and color are taken into consideration, tin octylate, titanium tetraisopropoxide and aluminum triisopropoxide are particularly preferred.

The content of the metal catalyst is preferably 0.001 to 1 part by weight, more preferably 0.005 to 0.1 part by weight based on 100 parts by weight of the polylactic acid. When the content of the metal catalyst is too low, the polymerization speed greatly drops. When the content is too high, the coloring of the polylactic acid by reaction heat or ring-opening polymerization and transesterification reaction are accelerated, whereby the color and heat stability of the obtained composition deteriorate.

An alcohol may be used as a polymerization initiator. The alcohol preferably does not impede the polymerization of the polylactic acid and is nonvolatile, and preferred examples thereof include decanol, dodecanol, tetradecanol, hexadecanol and octadecanol.

(stereocomplex polylactic acid)

The polylactic acid preferably contains a stereocomplex crystal. This polylactic acid containing a stereocomplex crystal is called "stereocomplex polylactic acid". The stereocomplex crystal is formed by mixing together the poly-L-lactic acid (component A-α-1) and the poly-D-lactic acid (component A-α-2). In this case, the weight ratio of the poly-L-lactic acid (component A-α-1) to the poly-D-lactic acid (component A-α-2) is preferably 90:10 to 10:90, more preferably 75:25 to 25:75, much more preferably 60:40 to 40:60.

The stereocomplex polylactic acid (component A-α) contains the poly-L-lactic acid (component A-α-1) essentially composed of an L-lactic acid unit and the poly-D-lactic acid (component A-α-2) essentially composed of a D-lactic acid unit, and the weight ratio of the component A-α-1 to the component A-α-2 is preferably in the range of 10:90 to 90:10. In this case, it is preferred that the poly-L-lactic acid (component A-α-1) should contain not less than 90 mol% of the L-lactic acid unit and the poly-D-lactic acid (component A-α-2) should contain not less than 90 mol% of the D-lactic acid unit.

The stereocomplex polylactic acid which has been made highly stereocomplex has a ratio of the total area

consolidated melting peaks detected at the temperature zone of higher than 195˚C to the total area of all the peaks detected during DSC measurement, to be not less than 80%.

The melting peak of the stereocomplex polylactic acid is at preferably 200˚C or higher, more preferably 205˚C or higher, much more preferably 210˚C or higher. When the melting peak of the stereocomplex polylactic acid is at a temperature lower than 195˚C, its heat resistance becomes unsatisfactory due to its low cystallinity and melting point.

The ratio of the total area consolidated melting peaks detected at the temperature zone of higher than 195 ˚C to the total area of all the peaks of the stereocomplex polylactic acid is preferably not less than 80%, more preferably not less than 90%, most preferably 100 %. When the ratio of melting peaks at 195˚C or higher is lower than 80 %, the characteristic properties of a homo-crystal derived from the poly-L-lactic acid or the poly-D-lactic acid appear and accordingly, heat resistance becomes unsatisfactory. When the poly-L-lactic acid (component A-α-1) and the poly-D-lactic acid (component A-α-2) are existent in the above stereocomplex polylactic acid which has been made highly stereocomplex in the above weight ratio, the enantiomer average chain length obtained by $^{13}$C-NMR can be advantageously set to a range of 10 to 40, the crystal melting peak of the homo-phase polylactic acid is not existent, and only the crystal melting peak of the stereocomplex-phase polylactic acid is observed.

The enantiomer average chain length (Li) obtained by $^{13}$C-NMR is a value defined by the following equation (IV) from the area ratios (Iiiii, Iisi, Isii, Iiis, Isis, Issi, Iiss and Iss) of the peaks of the tetrad structure of the CH carbon of the polylactic acid which are attributed in accordance with Makromol. Chem., 191, 2287 (1990). "i" represents isotactic sequences (LL, DD) and "s" represents syndiotactic sequences (LD, DL).

$$Li = (3Iiii + 2Iisi + 2Isii + 2Iiis + Isis + Issi + Iiss)/(Iisi + Iiis + Isii + 2Isis + 2Issi + 2Iiss + 3Isss) + 1 \quad (IV)$$

In the present invention, the enantiomer average chain length (Li) is preferably in the range of 10 to 40 and when this condition is satisfied, the composition can achieve heat resistance and particularly preferred releasability.

When the enantiomer average chain length is smaller than 10, even if the stereocomplex-phase polylactic acid is highly formed in DSC measurement, the heat resistance of the composition may deteriorate. When the enantiomer average chain length is larger than 40, the formability of the stereocomplex polylactic acid deteriorates and further the heat resistance may degrade. From the viewpoints of this and the releasability of the composition, the enantiomer average chain length is suitably selected from a range of preferably 15 to 40, more preferably 18 to 39.

<thermoplastic resin: component A-β>

The thermoplastic resin (component A-β) is preferably at least one resin selected from the group consisting of an aromatic polyester resin (component A-β-1), a polyolefin resin (component A-β-2), a methacrylic resin (component A-β-3), an aromatic polycarbonate resin (component A-β-4) and a polyacetal resin (component A-β-5).

In the present invention, the content of the polylactic acid (component A-α) in the resin component (component A) is 5 to 100 wt%, preferably 50 to 100 wt%, more preferably 60 to 100 wt%. The content of the thermoplastic resin (component A-β) in the resin component (component A) is 95 to 0 wt%, preferably 50 to 0 wt%, more preferably 40 to 0 wit%.

The present invention includes an aspect in which all of the resin component (component A) is the polylactic acid (component A-α).

According to another aspect of the present invention, a predetermined amount of the thermoplastic resin (component A-β) is contained. In this case, the content of the polylactic acid (component A-α) in the resin component (component A) is 5 to 95 wt%, preferably 50 to 90 wt%, more preferably 60 to 85 wt%. The content of the thermoplastic resin (component A-β) in the resin component (component A) is 95 to 5 wt%, preferably 50 to 10 wt%, more preferably 40 to 15 wt%.

(aromatic polyester resin: component A-β-1)

The aromatic polyester resin (component A-β-1) is a polymer or copolymer which comprises an aromatic dicarboxylic acid or a reactive derivative thereof and a diol or an ester derivative thereof as main components and is obtained by a condensation reaction.

Examples of the aromatic dicarboxylic acid include aromatic dicarboxylic acids such as terephthalic acid, isophthalic acid, orthophthalic acid, 1,5-naphthalenedicarboxylic acid, 2,6-naphthalenedicarboxylic acid, 4,4'-biphenyldicarboxylic acid, 4,4'-biphenylether dicarboxylic acid, 4,4'-biphenylmethane dicarboxylic acid, 4,4'-biphenylsulfone dicarboxylic acid, 4,4'-biphenylisopropylidene dicarboxylic acid, 1,2-bis(phenoxy)ethane-4,4'-dicarboxylic acid, 2,5-anthracenedicarboxylic acid, 2,6-anthracenedicarboxylic acid, 4,4'-p-terphenylene dicarboxylic acid and 2,5-pyridine dicarboxylic acid. Out of these, terephthalic acid and 2,6-naphthalenedicarboxylic acid are particularly preferably used.

The aromatic dicarboxylic acids may be used in combination of two or more. At least one selected from an aliphatic dicarboxylic acid such as adipic acid, azelaic acid, sebacic acid or dodecanedioic acid and an alicyclic dicarboxylic acid such as cyclohexane dicarboxylic acid may be mixed with the above dicarboxylic acid if its amount is small.

Examples of the diol as a component of the aromatic polyester resin (component A-β-1) include aliphatic diols such as ethylene glycol, propylene glycol, butylene glycol, hexylene glycol, neopentyl glycol, pentamethylene glycol, hexamethylene glycol, decamethylene glycol, 2-methyl-1,3-propanediol, diethylene glycol and triethylene glycol, alicyclic diols such as 1,4-cyclohexane dimethanol, diols containing an aromatic ring such as 2,2-bis(β-hydroxyethoxyphenyl) propane, and mixtures thereof. At least one long-chain diol having a molecular weight of 400 to 6,000, that is, polyethylene glycol, poly-1,3-propylene glycol or polytetramethylene glycol may be copolymerized.

The aromatic polyester resin (component A-β-1) can be branched by introducing a small amount of a branching agent. The branching agent is not limited to a particular kind, and examples thereof include trimesic acid, trimellitic acid, trimethylolethane, trimethylolpropane and pentaerythritol.

Examples of the aromatic polyester resin (component A-β-1) include polyethylene terephthalate (PET), polypropylene terephthalate, polybutylene terephthalate (PBT), polyhexylene terephthalate, polyethylene naphthalate (PEN), polybutylene naphthalate (PBN) and polyethylene-1,2-bis(phenoxy)ethane-4,4'-dicarboxylate. Copolyesters such as polyethylene isophthalate/terephthalate and polybutylene terephthalate/isophthalate are also included. Out of these, polyethylene terephthalate, polybutylene terephthalate, polyethylene naphthalate, polybutylene naphthalate and mixtures thereof having good balance among mechanical properties may be preferably used. The aromatic polyester (component A-β-1) is preferably polybutylene terephthalate or polyethylene terephthalate.

The terminal group structure of the aromatic polyester is not particularly limited, and the amounts of the hydroxyl group and the carboxyl group which are both terminal groups may be almost the same, or one of them may be larger than the other. The terminal groups may be sealed by reacting a compound having reactivity to the terminal groups.

The aromatic polyester can be produced by polymerizing a dicarboxylic acid component and a diol component under heating in the presence of a polycondensation catalyst containing titanium, germanium or antimony and discharging the by-produced water or lower alcohol to the outside of the system in accordance with a commonly used method. For example, germanium oxides, hydroxides, halides, alcoholates and phenolates may be used as the germanium-based polymerization catalyst, and specific examples thereof include germanium oxide, germanium hydroxide, germanium tetrachloride and tetramethoxy germanium.

In the present invention, a compound such as manganese, zinc, calcium or magnesium compound which is used in a transesterification reaction prior to conventionally known polycondensation may be used in combination, and polycondensation can be carried out by deactivating the catalyst with a compound such as phosphoric acid or phosphorous acid after the end of the transesterification reaction.

Although the molecular weight of the aromatic polyester resin (component A-β-1) is not particularly limited, the intrinsic viscosity measured at 25°C in o-chlorophenol as a solvent of the aromatic polyester resin is preferably 0.4 to 1.2, more preferably 0.65 to 1.15.

The content of the aromatic polyester resin (component A-β-1) in the resin component (component A) is preferably 5 to 95 wit%, more preferably 10 to 50 wt%, much more preferably 15 to 40 wt%, particularly preferably 20 to 40 wt%.

The content of the polylactic acid (component A-α) in the resin component (component A) is preferably 95 to 5 wt%, more preferably 90 to 50 wt%, much more preferably 85 to 60 wt%, particularly preferably 80 to 60 wt%.

When the weight ratio of the aromatic polyester (component A-β-1) to the polylactic acid (component A-α) is lower than 5/95, high releasability obtained by blending the aromatic polyester cannot be provided and when the weight ratio is higher than 95/5, it is not preferred from the viewpoint of global environmental protection. A composition containing the aromatic polyester (component A-β-1) as the resin component is excellent in moist heat stability and releasability.

(polyolefin resin: component A-β-2)

The polyolefin resin (component A-β-2) is a homopolymer or copolymer of an olefin such as ethylene, propylene or butane, or a copolymer of one of these olefins and a copolymerizable monomer component. The polyolefin resin is at least one member selected from the group consisting of polyethylene and polypropylene. Polypropylene is preferred from the viewpoint of the crystallinity of the composition.

Polypropylene means a polyolefin containing at least 1 mol% of a propylene unit as a constituent unit. The above polypropylene contains at least 1 mol%, preferably at least 10 mol%, particularly preferably at least 75 mol% of the propylene unit as a constituent unit. Other constituent components are ethylene and an α-olefin having 4 to 20 carbon atoms. Examples of the α-olefin include 1-butene, 1-pentene, 1-hexene, 1-octene, 1-decene, 1-dodecene, 1-tetradecene, 1-hexadecene, 1-octadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene and 3-ethyl-1-hexene. They may be used alone or in combination of two or more.

In the present invention, the polyolefin resin (component A-β-2) preferably has a melt volume flow rate (MVR, ISO1133, 240˚C, 2.16 kg) of 1 to 80 $cm^3$/10 min. When a polyolefin resin having a melt volume flow rate of 2 to 70 $cm^3$/10 min is used, a composition which is excellent in the appearance of a molded article is obtained, and a polyolefin resin having a melt volume flow rate of 3 to 60 $cm^3$/10 min is particularly preferred.

The content of the polyolefin resin (component A-β-2) in the resin component (component A) is preferably 5 to 95 wt%, more preferably 10 to 50 wt%, much more preferably 15 to 40 wt%, particularly preferably 20 to 40 wt%.

The content of the polylactic acid (component A-α) in the resin component (component A) is preferably 95 to 5 wt%, more preferably 90 to 50 wt%, much more preferably 85 to 60 wt%, particularly preferably 80 to 60 wt%.

When the weight ratio of the polyolefin resin (component A-β-2) to the polylactic acid (component A-α) is lower than 5/95, good surface properties without a sink mark obtained by blending the polyolefin resin cannot be provided and when the weight ratio is higher than 95/5, it is not preferred from the viewpoint of global environmental protection.

A composition comprising the polyolefin resin (component A-β-2) as the resin component (component A) has excellent moist heat stability, and a molded article having good surface properties without a sink mark is obtained.

(methacrylic resin: component A-β-3)

The methacrylic resin (component A-β-3) in the present invention contains methyl methacrylate as the main component in an amount of preferably at least 70 %. It may be a copolymer which contains another vinyl-based monomer component in an amount of preferably not more than 30 %, more preferably not more than 20 %. Examples of another vinyl-based monomer include aromatic vinyl-based monomers such as α-methylstyrene, o-methylstyrene, p-methylstyrene, o-ethylstyrene, p-ethylstyrene and p-t-butylstyrene. Vinyl cyanide-based monomers such as acrylonitrile, methacrylonitrile and ethacrylonitrile; glycidyl itaconate, allyl glycidyl ether, styrene-p-glycidyl ether, p-glycidylstyrene, maleic anhydride, monoethyl maleate, itaconic acid, itaconic anhydride and glutaric anhydride; N-substituted maleimides such as N-methylmaleimide, N-ethylmaleimide, N-cyclohexylmaleimide and N-phenylmaleimide; acrylamide, methacrylamide, N-methylacrylamide, butoxymethyl acrylamide and N-propyl methacrylamide; acrylic acid, methyl acrylate, ethyl acrylate, butyl acrylate, cyclohexyl acrylate, aminoethyl acrylate, propylaminoethyl acrylate, 2-hydroxyethyl acrylate, 2-hydroxypropyl acrylate, glycidyl acrylate, dicyclopentenyloxyethyl acrylate, dicyclopentanyl acrylate, butanediol diacrylate, nonanediol diacrylate, polyethylene glycol diacrylate, methyl 2-(hydroxymethyl)acrylate and ethyl 2-(hydroxymethyl)acrylate; methacrylic acid, ethyl methacrylate, butyl methacrylate, cyclohexyl methacrylate, dimethylaminoethyl methacrylate, ethylaminopropyl methacrylate, phenylaminoethyl methacrylate, cyclohexylaminoethyl methacrylate, 2-hydroxyethyl methacrylate, 2-hydroxypropyl methacrylate, glycidyl methacrylate, dicyclopentenyloxyethyl methacrylate, dicyclopentanyl methacrylate, pentamethylpiperidyl methacrylate, tetramethylpiperidyl methacrylate and benzyl methacrylate; ethylene glycol dimethacrylate, propylene glycol dimethacrylate and polyethylene glycol dimethacrylate; N-vinyl diethylamine, N-acetylvinylamine, allyl amine, methallyl amine and N-methylallyl amine; and p-aminostyrene, 2-isopropenyl-oxazoline, 2-vinyl-oxazoline, 2-acryloyl-oxazoline and 2-styryl-oxazoline are also included. These vinyl-based monomers may be used alone or in combination of two or more. Copolymers containing a cyclic structural unit such as a lactone ring, maleic anhydride or glutaric anhydride in the main chain are preferred from the viewpoints of heat resistance, low hygroscopicity and surface hardness. Further, when a copolymer containing a cyclic structure in the main chain is used, it is more preferred to use a methacrylic resin having no cyclic structure in combination.

At least one methacrylic resin having a weight average molecular weight of 50, 000 to 450, 000 and a glass transition temperature of 100˚C or higher is used as the methacrylic resin (component A-β-3) used in the present invention. By using this methacrylic resin satisfying these conditions, interaction between the molecules of the methacrylic resin and the polylactic acid grows and affinity for the polylactic acid improves, thereby making it possible to obtain a resin composition having excellent size retention after a moist heat treatment.

As the methacrylic resin (component A-β-3) used in the present invention, at least one methacrylic resin has a weight average molecular weight of preferably 70,000 to 200,000, more preferably 90,000 to 150,000 from the viewpoints of heat resistance and flowability. The weight average molecular weight is a value in terms of standard polystyrene measured by GPC using hexafluoroisopropanol as a solvent.

As the methacrylic resin (component A-β-3), at least one methacrylic resin has a glass transition temperature of preferably 80 ˚C or higher, more preferably 90 ˚C or higher, much more preferably 100˚C or higher from the viewpoint of heat resistance. Although the upper limit is not particularly limited, it is preferably 150˚C or lower from the viewpoint of flowability. The glass transition temperature is a value measured in accordance with JIS K7121 and an intermediate point glass transition temperature when the temperature is elevated at a rate of 20˚C/min in DSC measurement. In the present invention, at least one methacrylic resin having a glass transition temperature of 100˚C or higher is preferably contained as the methacrylic resin (component A-β-3).

The method of controlling the glass transition temperature of the methacrylic resin is not particularly limited but a method of controlling the steric structure of the methacrylic resin is employed. As an example thereof, a methacrylic

resin having a syndiotacticity of not less than 45 % and a methacrylic resin having a heterotacticity of not less than 45 % are generally used from the viewpoint of heat resistance in terms of glass transition temperature. The terms "syndiotacticity", "heterotacticity" and "isotacticity" are the percentages of the integral intensities of respective peaks based on 100 % of the total of the integral intensities of peaks of linear and branched methyl groups at 0.9 ppm, 1.0 ppm and 1.2 ppm in $^1$H-NMR measurement using deuterated chloroform as a solvent.

The methacrylic resin (component A-β-3) preferably has a melt volume flow rate (MVR, ISO1133, 240˚C, 2.16 kg) of 0.5 to 80 $cm^3$/10 min from the viewpoint of flowability. When a methacrylic resin having a melt volume flow rate of 1 to 70 $cm^3$/10 min is used, a resin composition which is excellent in the appearance of a molded article is obtained, and a methacrylic resin having a melt volume flow rate of 2 to 60 $cm^3$/10 min is particularly preferred.

The content of the methacrylic resin (component A-β-3) in the resin component (component A) is preferably 5 to 95 wt%, more preferably 10 to 50 wt%, much more preferably 15 to 40 wt%, particularly preferably 20 to 40 wt%.

The content of the polylactic acid (component A-α) in the resin component (component A) is preferably 95 to 5 wt%, more preferably 90 to 50 wit%, much more preferably 85 to 60 wt%, particularly preferably 80 to 60 wt%.

When the weight ratio of the methacrylic resin (component A-β-3) to the polylactic acid (component A-α) is lower than 5/95, high dimensional stability after a moist heat treatment obtained by blending the methacrylic resin cannot be provided and when the weight ratio is higher than 95/5, it is not preferred from the viewpoint of global environmental protection.

A composition comprising the methacrylic resin (component A-β-3) as the resin component has excellent moist heat stability, and a molded article having excellent dimensional stability after a moist heat treatment is obtained.

(aromatic polycarbonate resin: component A-β-4)

The aromatic polycarbonate resin (component A-β-4) is obtained by reacting a dihydric phenol with a carbonate precursor. Examples of the reaction include interfacial polycondensation, melt transesterification, the solid-phase transesterification of a carbonate prepolymer and the ring-opening polymerization of a cyclic carbonate compound.

Typical examples of the dihydric phenol used herein include hydroquinone, resorcinol, 4,4'-biphenol, 1,1-bis (4-hydroxyphenyl)ethane, 2,2-bis(4-hydroxyphenyl)propane (commonly known as "bisphenol A"), 2,2-bis(4-hydroxy-3-methylphenyl)propane, 2,2-bis(4-hydroxyphenyl)butane, 1,1-bis(4-hydroxyphenyl)-1-phenylethane, 1,1-bis(4-hydroxyphenyl) cyclohexane, 1,1-bis(4-hydroxyphenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl)ketone, bis (4-hydroxyphenyl) ester, bis(4-hydroxy-3-methylphenyl)sulfide, 9,9-bis (4-hydroxyphenyl) fluorene and 9,9-bis(4-hydroxy-3-methylphenyl)fluorene. Out of these, bis (4-hydroxyphenyl) alkanes are preferred, and bisphenol A (may be abbreviated as "BPA" hereinafter) is particularly preferred from the viewpoint of toughness and generally used.

The carbonate precursor is a carbonyl halide, diester carbonate or haloformate, as exemplified by phosgene, diphenyl carbonate and dihaloformates of a dihydric phenol.

For the manufacture of the aromatic polycarbonate resin from a dihydric phenol and a carbonate precursor by interfacial polymerization, a catalyst, an end-sealing agent and an antioxidant for preventing the oxidation of the dihydric phenol may be optionally used. The polycarbonate resin includes a branched polycarbonate resin obtained by copolymerizing a polyfunctional aromatic compound having 3 or more functional groups, a polyester carbonate resin obtained by copolymerizing an aromatic or aliphatic (including alicyclic) bifunctional carboxylic acid, a copolycarbonate resin obtained by copolymerizing a bifunctional alcohol (including an alicyclic bifunctional alcohol), and a polyester carbonate resin obtained by copolymerizing the bifunctional carboxylic acid and the bifunctional alcohol. It may also be a mixture of two or more of the obtained aromatic polycarbonates.

The branched polycarbonate increases the melt tension of the composition of the present invention so that its moldability by extrusion molding, foam molding or blow molding can be improved based on this characteristic property. As a result, a molded article having excellent dimensional accuracy is obtained by these molding methods.

Preferred examples of the polyfunctional aromatic compound having 3 or more functional groups used in the branched polycarbonate resin include trisphenols such as 4,6-dimethyl-2,4,6-tris(4-hydroxydiphenyl) heptene-2, 2,4,6-trimethyl-2,4,6-tris(4-hydroxyphenyl) heptane-2, 1,3,5-tris(4-hydroxyphenyl) benzene, 1,1,1-tris(4-hydroxyphenyl) ethane, 1,1,1-tris(3,5-dimethyl-4-hydroxyphenyl) ethane, 2,6-bis(2-hydroxy-5-methylbenzyl)-4-methylphenol and 4-{4-[1,1-bis(4-hydroxyphenyl)ethyl]benzene}-α,α-dimethylbenzylphenol. Other polyfunctional aromatic compounds include phloroglucin, phloroglucide, tetra(4-hydroxyphenyl)methane, bis(2,4-dihydroxyphenyl)ketone, 1,4-bis(4,4-dihydroxytriphenylmethyl)benzene, trimellitic acid, pyromellitic acid, benzophenone tetracarboxylic acid and acid chlorides thereof. Out of these, 1,1,1-tris(4-hydroxyphenyl)ethane and 1,1,1-tris(3,5-dimethyl-4-hydroxyphenyl)ethane are preferred, and 1,1,1-tris(4-hydroxyphenyl)ethane is particularly preferred.

The amount of the constituent unit derived from the polyfunctional aromatic compound in the branched polycarbonate is 0.03 to 1 part by mole, preferably 0.07 to 0.7 part by mole, particularly preferably 0.1 to 0.4 part by mole based on 100 parts by mole of the total of the constituent unit derived from the dihydric phenol and the constituent unit derived from the polyfunctional aromatic compound.

The branched structural unit is derived from the polyfunctional aromatic compound and also may be derived without using the polyfunctional aromatic compound like a side reaction at the time of the melt transesterification reaction. The amount of the branched structure can be calculated by $^1$H-NMR measurement.

The aliphatic bifunctional carboxylic acid is preferably α,ω-dicarboxylic acid. Preferred examples of the aliphatic bifunctional carboxylic acid include linear saturated aliphatic dicarboxylic acids such as sebacic acid (decanedioic acid), dodecanedioic acid, tetradecanedioic acid, octadecanedioic acid and icosanedioic acid, and alicyclic dicarboxylic acids such as cyclohexanedicarboxylic acid. The bifunctional alcohol is preferably an alicyclic diol such as cyclohexanedimethanol, cyclohexanediol or tricyclodecanedimethanol. Further, a polycarbonate-polyorganosiloxane copolymer obtained by copolymerizing a polyorganosiloxane unit may also be used.

The component A-β-4 may be a mixture of two or more polycarbonates obtained from different dihydric phenol components, polycarbonates containing a branched component, polyester carbonates or polycarbonate-polyorganosiloxane copolymers. Further, a mixture of two or more polycarbonates produced by different methods or polycarbonates containing different end-sealing agents may also be used. Reactions such as interfacial polymerization, melt transesterification, the solid-phase transesterification of a carbonate prepolymer and the ring-opening polymerization of a cyclic carbonate compound which are aromatic polycarbonate production methods are well known by various documents and patent publications.

As the aromatic polycarbonate resin (component A-β-4) may be used not only a virgin raw material but also an aromatic polycarbonate recycled from a used product, i.e., so-called "material recycled aromatic polycarbonate". Preferred examples of the used product include glazing materials typified by sound barriers, glass windows, light transmitting roof materials and car sun roofs, transparent members such as windshields and car head lamp lenses, containers such as water bottles, and optical recording media. They do not contain large amounts of additives and other resins, and target quality is easily obtained from these stably. Car head lamp lenses and optical recording media are particularly preferred because they satisfy the above more preferred condition of viscosity average molecular weight. The above virgin raw material is a raw material which is not used in the market yet after it is produced.

The viscosity average molecular weight of the aromatic polycarbonate resin (component A-β-4) is preferably $1 \times 10^4$ to $5 \times 10^4$, more preferably $1.4 \times 10^4$ to $3 \times 10^4$, much more preferably $1.8 \times 10^4$ to $2.5 \times 10^4$. Within the range of $1.8 \times 10^4$ to $2.5 \times 10^4$, both impact resistance and flowability are excellent. The most preferred viscosity average molecular weight is $1.9 \times 10^4$ to $2.4 \times 10^4$. This viscosity average molecular weight may be achieved with the whole component A or with a mixture of two or more components which differ in molecular weight.

The term "viscosity average molecular weight" (M) as used herein is obtained as follows. The specific viscosity of a solution containing 0.7 g of an aromatic polycarbonate dissolved in 100 ml of methylene chloride at 20˚C is first obtained from the following equation by using an Ostwald's viscometer, and the viscosity average molecular weight (M) is obtained by inserting the obtained specific viscosity into the following equation.

$$\text{Specific viscosity } (\eta_{sp}) = (t - t_0)/t_0$$

[to is the number of seconds during which methylene chloride drops and t is the number of seconds during which the sample solution drops]

$\eta_{sp}/c = [\eta] + 0.45 \times [\eta]^2 c$ ([η] is an intrinsic viscosity) $[\eta] = 1.23 \times 10^{-4} M^{0.83}$

c = 0.7

The content of the aromatic polycarbonate resin (component A-β-4) in the resin component (component A) is preferably 5 to 95 wt%, more preferably 10 to 50 wt%, much more preferably 15 to 40 wt%, particularly preferably 20 to 40 wt%.

The content of the polylactic acid (component A-α) in the resin component (component A) is preferably 95 to 5 wt%, more preferably 90 to 50 wt%, much more preferably 85 to 60 wt%, particularly preferably 80 to 60 wt%.

When the weight ratio of the aromatic polycarbonate resin (component A-β-4) to the polylactic acid (component A-α) is lower than 5/95, high dimensional stability obtained by blending the aromatic polycarbonate resin cannot be provided and when the weight ratio is higher than 95/5, it is not preferred from the viewpoint of global environmental protection.

A molded article having excellent moist heat stability and dimensional stability is obtained from a composition comprising the aromatic polycarbonate resin (component A-β-4) as the resin component (component A).

(polyacetal resin: component A-β-5)

The polyacetal resin (component A-β-5) used in the present invention is a polymer which contains an oxymethylene unit as the main recurring unit. It may be a so-called "polyacetal homopolymer" which is obtained by the polymerization reaction of formaldehyde or trioxan as the main raw material. It may also be a so-called "polyacetal copolymer" which contains a polyoxymethylene unit as the main ingredient and not more than 15 wt% of an oxyalkylene unit having 2 to 8 adjacent carbon atoms in the main chain. It may also be a copolymer containing another constituent unit, that is, a block copolymer, terpolymer or crosslinked polymer. They may be used alone or in combination of two or more but a polyacetal copolymer is preferred from the viewpoint of heat stability. When the amount of the comonomer is smaller than 0.3 mol%, heat stability tends to become unsatisfactory and when the amount is larger than 10 mol%, mechanical strength tends to lower disadvantageously. The amount of the comonomer is particularly preferably 1.0 to 3.0 mol%.

The method of producing the polyacetal resin (component A-β-5) is not particularly limited, and known methods may be used. As a typical example of the production method of the polyacetal homopolymer, high-purity formaldehyde is introduced into an organic solvent containing a basic polymerization catalyst such as an organic amine, organic or inorganic tin compound or metal hydroxide to be polymerized, and the obtained polymer is separated by filtration and heated in the presence of sodium acetate in acetic anhydride to acetylate the terminal of the polymer.

As a typical example of the production method of the polyacetal copolymer, high-purity trioxan and a comonomer component such as ethylene oxide or 1,3-dioxolan are introduced into an organic solvent such as cyclohexane and cation polymerized by using a Lewis acid catalyst such as a boron trifluoride diethyl ether complex, the catalyst is deactivated, and the terminal group is stabilized. Alternatively, trioxan, a copolymer component and a catalyst are introduced into a self-cleaning type stirrer without using a solvent at all to carry out bulk polymerization, and an unstable terminal is decomposed and removed.

The viscosities of these polymers are not particularly limited as long as they can be used as molding materials. However, a polymer having a melt volume flow rate (MVR, ISO1133, 240˚C, 2.16 kg) of 1 to 80 $cm^3$/10 min may be used. When a polymer having a melt volume flow rate of 2 to 70 $cm^3$/10 min is used, a resin composition which is excellent in the appearance of a molded article is obtained, and a polymer having a melt volume flow rate of 3 to 60 $cm^3$/10 min is particularly preferred.

A polyacetal resin containing a heat stabilizer and a generated gas capture agent is preferably used as the polyacetal resin (component A-β-5).

Although it is most desirable not to blend formaldehyde as it is fairly possible that it exerts a strong influence upon characteristic properties, for example, it promotes the decomposition of the polyacetal to impair the durability of the composition, it is preferred that the amount of formaldehyde including formaldehyde generated by the decomposition of the polyacetal should be less than 250 ppm, specifically less than 500 ppm at best.

The content of the polyacetal resin (component A-β-5) in the resin component (component A) is preferably 5 to 95 wt%, more preferably 10 to 50 wt%, much more preferably 15 to 40 wt%, particularly preferably 20 to 40 wt%.

The content of the polylactic acid (component A-α) in the resin component (component A) is preferably 95 to 5 wt%, more preferably 90 to 50 wt%, much more preferably 85 to 60 wt%, particularly preferably 80 to 60 wt%.

When the weight ratio of the polyacetal resin (component A-β-5) to the polylactic acid (component A-α) is lower than 5/95, the burr suppressing property obtained by blending the polyacetal cannot be provided and when the weight ratio is higher than 95/5, it is not preferred from the viewpoint of global environmental protection.

A composition containing the polyacetal resin (component A-β-5) as the resin component (component A) has excellent moist heat stability and rarely produces burrs at the time of molding.

(phosphono-fatty acid ester: component B)

The composition of the present invention comprises a phosphono-fatty acid ester (component B) as a deactivator for the metal catalyst of the polylactic acid (component A-α). The phosphono-fatty acid ester (component B) is a compound in which a diester phosphonate moiety and a carboxylate moiety are bonded together by an aliphatic hydrocarbon group and which is achromatic and transparent and has excellent heat resistance. Therefore, the color of the obtained composition is good. A phosphono-fatty acid ester represented by the following formula (1) is particularly preferred.

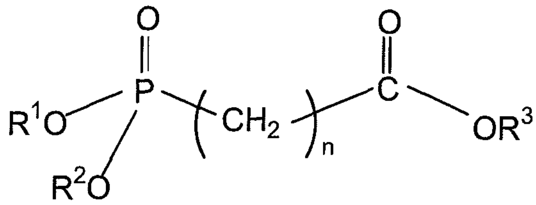

(1)

In the above formula, $R^1$ to $R^3$ are each independently an alkyl group having 1 to 20 carbon atoms or aryl group having 6 to 12 carbon atoms. Examples of the alkyl group having 1 to 20 carbon atoms include ethyl group, propyl group, butyl group, pentyl group and hexyl group. Examples of the aryl group having 6 to 12 carbon atoms include phenyl group and naphthalen-yl group. $R^1$ to $R^3$ may be the same or different. "n" is an integer of 1 to 3.

Examples of the compound represented by the formula (1) include ethyl diethylphosphonoacetate, ethyl di-n-propylphosphonoacetate, ethyl di-n-butylphosphonoacetate, ethyl di-n-hexylphosphonoacetate, ethyl di-n-octylphosphonoacetate, ethyl di-n-decylphosphonoacetate, ethyl di-n-dodecylphosphonoacetate, ethyl di-n-octadecylphosphonoacetate, ethyl diphenylphosphonoacetate, decyl diethylphosphonoacetate, dodecyl diethylphosphonoacetate, octadecyl diethylphosphonoacetate, ethyl diethylphosphonopropionate, ethyl di-n-propylphosphonopropionate, ethyl di-n-butylphosphonopropionate, ethyl di-n-hexylphosphonopropionate, ethyl di-n-octylphosphonopropionate, ethyl di-n-decylphosphonopropionate, ethyl di-n-dodecylphosphonopropionate, ethyl di-n-octadecylphosphonopropionate, ethyl diphenylphosphonopropionate, decyl diethylphosphonopropionate, dodecyl diethylphosphonopropionate, octadecyl diethylphosphonopropionate, ethyl diethylphosphonobutyrate, ethyl di-n-propylphosphonobutyrate, ethyl di-n-butylphosphonobutyrate, ethyl di-n-hexylphosphonobutyrate, ethyl di-n-octylphosphonobutyrate, ethyl di-n-decylphosphonobutyrate, ethyl di-n-dodecylphosphonobutyrate, ethyl di-n-octadecylphosphonobutyrate, ethyl di-n-octadecylphosphonobutyrate, ethyl diphenylphosphonobutyrate, decyl diethylphosphonobutyrate, dodecyl diethylphosphonobutyrate and octadecyl diethylphosphonobutyrate. When efficacy and handling ease are taken into consideration, ethyl diethylphosphonoacetate, ethyl di-n-propylphosphonoacetate, ethyl di-n-butylphosphonoacetate, ethyl di-n-hexylphosphonoacetate, decyl diethylphosphonoacetate and octadecyl diethylphosphonoacetate are preferred.

When the number of carbon atoms of $R^1$ to $R^3$ are 20 or less in the formula (1), the melting point of the compound becomes lower than the production temperature of the polylactic acid or the composition, thereby making it possible to melt mix it fully and capture the metal catalyst efficiently. The phosphono-fatty acid ester (component B) has an aliphatic hydrocarbon group between the diester phosphonate moiety and the carboxylate moiety. To capture the metal catalyst contained in the polylactic acid efficiently, "n" in the formula (1) is preferably an integer of 1 to 3.

The content of the phosphono-fatty acid ester (component B) is 0.001 to 5 parts by weight, preferably 0.005 to 2 parts by weight based on 100 parts by weight of the resin component (component A). When the content of the phosphono-fatty acid ester is too low, the deactivation efficiency of the residual metal catalyst becomes very low and a satisfactory effect is not obtained. When the content is too high, the contamination of a mold used for molding becomes marked.

The phosphono-fatty acid ester (component B) is generally added at the end of polymerization. Since the component B has a deactivating function for the phosphate metal salt (component C) as well, when the deterioration of heat stability of the component C by the component B is marked, it is more preferred that the component B should be divided into two so that a part of the component B is added at the end of polymerization and the other part is added when it is kneaded with other components in the extrusion or molding process than that a predetermined amount of the component B is wholly added at the end of polymerization.

The amount of the phosphono-fatty acid ester (component B) in the extrusion or molding process is 0.001 to 2 parts by weight, preferably 0.005 to 1 part by weight based on 100 parts by weight of the poly-L-lactic acid (component A-$\alpha$-1) or the poly-D-lactic acid (component A-$\alpha$-2). When the amount of the component B added is too small, the effect of deactivating the metal catalyst is not obtained. When the amount is too large, the contamination of ta mold by the component B becomes marked.

<phosphate metal salt: component C>

The composition of the present invention comprises a phosphate metal salt (component C). The phosphate metal salt (component C) is a compound represented by the following formula (2) or (3).

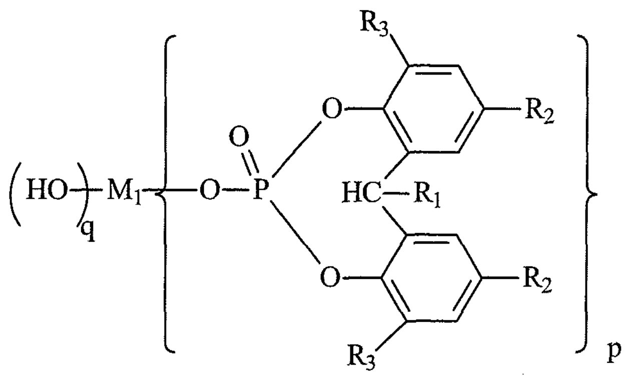

(2)

In the above formula, $R_1$ is a hydrogen atom or alkyl group having 1 to 4 carbon atoms. Examples of the alkyl group having 1 to 4 carbon atoms include methyl group, propyl group and butyl group. $R_2$ and $R_3$ are each independently a hydrogen atom or alkyl group having 1 to 12 carbon atoms. Examples of the alkyl group having 1 to 12 carbon atoms include methyl group, propyl group, butyl group, hexyl group and decyl group. $M_1$ is an alkali metal atom, alkali earth metal atom, zinc atom or aluminum atom. Examples of the alkali metal atom include sodium and potassium. Examples of the alkali earth metal atom include magnesium, calcium and lithium. "p" is 1 or 2. "q" is 0 when $M_1$ is an alkali metal atom, alkali earth metal atom or zinc atom and 1 or 2 when $M_1$ is an aluminum atom.

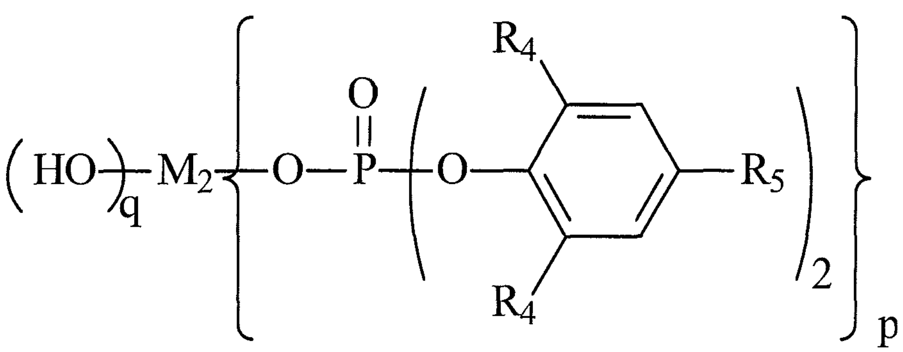

(3)

In the above formula, $R_4$ and $R_5$ are each independently a hydrogen atom or alkyl group having 1 to 12 carbon atoms. Examples of the alkyl group having 1 to 12 carbon atoms include methyl group, propyl group, butyl group, hexyl group and decyl group. $M_2$ is an alkali metal atom, alkali earth metal atom, zinc atom or aluminum atom. Examples of the alkali metal atom include sodium and potassium. Examples of the alkali earth metal atom include magnesium, calcium and lithium. "p" is 1 or 2. "q" is 0 when $M_2$ is an alkali metal atom, alkali earth metal atom or zinc atom and 1 or 2 when $M_2$ is an aluminum atom.

Examples of the phosphate metal salt (component C) include sodium-2,2'-methylenebis(4,6-di-tert-butylphenyl) phosphate and aluminum bis(2,2'-methylenebis-4,6-di-tert-butylphenyl phosphate).

$M_1$ and $M_2$ of the phosphate metal salt represented by the formula (2) or (3) are preferably Na, K, Al, Mg, Ca or Li, particularly preferably K, Na, Al or Li, most preferably Li or Al. Preferred examples of the phosphate metal salt include AdecastabNA-10, NA-11, NA-21, NA-30, NA-35 andNA-71 of ADEKA Corporation.

The content of the phosphate metal salt (component C) is 0.01 to 5 parts by weight, preferably 0.01 to 1 part by weight, more preferably 0.01 to 0.5 part by weight, much more preferably 0.02 to 0.3 part by weight based on 100

parts by weight of the resin component (component A). When the content of the phosphate metal salt is too low, the effect of improving the stereo crystal rate becomes small and when the content is too high, the melting point of the complex-phase crystal is lowered disadvantageously.

<antioxidant: component D>

The composition of the present invention comprises an antioxidant (component D). The antioxidant (component D) is at least one member selected from the group consisting of a phosphite-based compound, a phosphonite-based compound, a hindered phenol-based compound and a thioether-based compound. The antioxidant (component D) is particularly preferably composed of a phosphite-based compound and a hindered phenol-based compound from the viewpoint of suppressing a bad smell derived from an end-sealing agent and the contamination of a mold which seems to be derived from a bad smell causative substance.

(phosphite-based compound)

Examples of the phosphite-based compound include triphenyl phosphite, tris(nonylphenyl)phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, tris(diethylphenyl)phosphite, tris(di-iso-propylphenyl)phosphite, tris(di-n-butylphenyl)phosphite, tris(2,4-di-tert-butylphenyl)phosphite, tris(2,6-di-tert-butylphenyl)phosphite, distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, bis{2,4-bis(1-methyl-1-phenylethyl)phenyl} pentaerythritol diphosphite, phenyl bisphenol A pentaerythritol diphosphite, bis(nonylphenyl)pentaerythritol diphosphite and dicyclohexyl pentaerythritol diphosphite.

Other phosphite-based compounds which react with a dihydric phenol and have a cyclic structure may also be used.

Examples of the compounds include 2,2'-methylenebis(4,6-di-tert-butylphenyl)(2,4-di-tert-butylphenyl)phosphite, 2,2'-methylenebis(4,6-di-tert-butylphenyl)(2-tert-butyl-4-methylphenyl)phosphite and 2,2-methylenebis(4,6-di-tert-butylphenyl)octyl phosphite.

Preferred phosphite-based compounds are distearyl pentaerythritol diphosphite, bis(2,4-di-tert-butylphenyl) pentaerythritol diphosphite, bis(2,6-di-tert-butyl-4-methylphenyl)pentaerythritol diphosphite and bis{2,4-bis(1-methyl-1-phenylethyl)phenyl} pentaerythritol disphosphite.

(phosphonite-based compound)

Examples of the phosphonite compound include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite and bis(2,6-di-tert-butylphenyl)-3-phenyl-phenyl phosphonite. Out of these, tetrakis(di-tert-butylphenyl)-biphenylene diphosphonites and bis(di-tert-butylphenyl)-phenyl-phenyl phosphonites are preferred, and tetrakis(2,4-di-tert-butylphenyl)-biphenylene diphosphonites and bis(2,4-di-tert-butylphenyl)-phenyl-phenyl phosphonites are more preferred. The phosphonite compound may be and is preferably used in combination with a phosphite compound having an aryl group substituted for two or more of the above alkyl groups.

Tetrakis(2,4-di-tert-butylphenyl)-biphenylene diphosphonites are preferred as the phosphonite-based compound, and stabilizers comprising the phosphonite as the main component are marketed under the trade names of Sandostab P-EPQ ((trademark) of Clariant Co., Ltd.) and Irgafos P-EPQ ((trademark) of CIBA SPECIALTY CHEMICALS Co., Ltd.) and may be used.

(hindered phenol-based compound)

Various compounds which are generally mixed with a resin may be used as the hindered phenol-based compound. Examples of the hindered phenol-based compound include $\alpha$-tocopherol, butylhydroxytoluene, cinnapyl alcohol, vitamin E, octadecyl-3-(3,5-di-tert-butyl-4-hydroxyphenyl) propionate, 2-tert-butyl-6-(3'-tert-butyl-5'-methyl-2'-hydroxybenzyl)-4-methylphenyl acrylate, 2,6-di-tert-butyl-4-(N,N-dimethylaminomethyl)phenol, 3,5-di-tert-butyl-4-hydroxybenzylphosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-a-methyl-benzyl-p-cresol), 2,2'-ethylidene-bis(4,6-di-tert-butylphenol), 2,2'-butylidene-bis(4-methyl-6-tert-butylphenol), 4,4'-butylidene-bis(3-methyl-6-tert-butylphenol), triethylene glycol-N-bis-3-(3-tert-butyl-4-hydroxy-5-methylphenyl) propionate, 1,6-hexanediol-bis[3-(3,5-di-tert-butyl-4-hydroxyphenyl) propionate], bis[2-tert-butyl-4-methyl-6-(3-tert-butyl-5-methyl-2-hydroxybenzyl)phenyl]terephthalate, 3,9-bis{2-[3-(3-tert-butyl-4-hydroxy-5-methylphenyl) propionyloxy]-1,1-dimethylethyl}-2,4,8,10-tetraoxaspiro [5,5] undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,2-thiodiethylenebis-[3-(3,5-di-tert-butyl-4-hydroxyphenyl)propionate], 2,4-bis(n-octylthio)-6-(4-hydroxy-3,5-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl] hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl) benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl) isocyanurate, 1,3,5-tris-2[3(3,5-di-tert-butyl-4-hydroxyphenyl) propionyloxy]ethyl isocyanurate, tetrakis[methylene-3-(3',5'-di-tert-butyl-4-hydroxyphenyl)propionate]methane, triethylene glycol-N-bis-3-(3-tert-butyl-4-hydroxy-5-methylphenyl) propionate, triethylene glycol-N-bis-3-(3-tert-butyl-4-hydroxy-5-methylphenyl) acetate, 3,9-bis[2-{3-(3-tert-butyl-4-hydroxy-5-methylphenyl) acetyloxy}-1,1-dimethylethyl]-2,4,8,10-tetraoxaspiro [5,5] undecane, tetrakis[methylene-3-(3-tert-butyl-4-hydroxy-5-methylphenyl)propionate]methane, 1,3,5-trimethyl-2,4,6-tris(3-tert-butyl-4-hydroxy-5-methylbenzyl)benzene and tris(3-tert-butyl-4-hydroxy-5-methylbenzyl)isocyanurate. Out of these compounds, tetrakis[methylene-3-(3-tert-butyl-4-hydroxy-5-methylphenyl)propionate]methane, octadecyl-3-(3,5-di-tert-butyl-4-hydroxyphenyl) propionate and 3,9-bis[2-{3-(3-tert-butyl-4-hydroxy-5-methylphenyl) propionyloxy}-1,1-dimethylethyl]-2,4,8,10-tetraoxaspiro [5,5]undecane are preferably used in the present inovention. 3,9-bis[2-{3-(3-tert-butyl-4-hydroxy-5-methylphenyl) propionyloxyl-1,1-dimethylethyll-2,4,8,10-tetraoxaspiro [5,5]undecane is particularly preferred. The above hindered phenol-based compounds may be used alone or in combination of two or more.

(thioether-based compound)

Examples of the thioether-based compound include dilauryl thiodipropionate, ditridecyl thiodipropionate, dimyristyl thiodipropionate, distearyl thiodipropionate, pentaerythritol-tetrakis (3-laurylthiopropionate), pentaerythritol-tetrakis (3-dodecylthiopropionate), pentaerythritol-tetrakis (3-octadecylthiopropionate), pentaerythritol-tetrakis(3-myristylthiopropionate) and pentaerythritol-tetrakis(3-stearylthiopropionate).

The content of the antioxidant (component D) is 0.001 to 2 parts by weight, preferably 0.005 to 1 part by weight, more preferably 0.01 to 0.5 part by weight based on 100 parts by weight of the resin component (component A). When the content is lower than 0.001 part by weight, the antioxidant effect becomes unsatisfactory with the result that residence heat stability degrades and when the content is higher than 2 parts by weight, the antioxidant effect lowers and also the contamination of a mold by volatile matter derived from the antioxidant becomes marked disadvantageously.

It is preferred that the above phosphorus-based stabilizer and the above hindered phenol-based stabilizer should be used in combination. By using a combination of the phosphorus-based stabilizer and the hindered phenol-based stabilizer, the synergetic effect of the stabilizers can be obtained and the deterioration of color at the time of molding can be suppressed.

<end-sealing agent: component E>

The composition of the present invention comprises an end-sealing agent (component E). The end-sealing agent (component E) is preferably at least one member selected from the group consisting of a carbodiimide compound, an epoxy compound, an oxazoline compound and an oxazine compound.

(carbodiimide compound)

Examples of the carbodiimide compound are given below: mono- and poly-carbodiimide compounds such as dicyclohexyl carbodiimide, diisopropyl carbodiimide, diisobutyl carbodiimide, dioctyl carbodiimide, octyldecyl carbodiimide, di-tert-butyl carbodiimide, dibenzyl carbodiimide, diphenyl carbodiimide, N-octadecyl-N'-phenylcarbodiimide, N-benzyl-N'-phenylcarbodiimide, N-benzyl-N'-tolylcarbodiimide, di-o-toluylcarbodiimide, di-p-toluylcarbodiimide, bis(p-aminophenyl)carbodiimide, bis(p-chlorophenyl)carbodiimide, bis(o-chlorophenyl)carbodiimide, bis(o-ethylphenyl)carbodiimide, bis(p-ethylphenyl)carbodiimide, bis(o-isopropylphenyl)carbodiimide, bis(p-isopropylphenyl)carbodiimide, bis (o-isobutylphenyl)carbodiimide, bis(p-isobutylphenyl)carbodiimide, bis(2,5-dichlorophenyl)carbodiimide, bis(2,6-dimethylphenyl)carbodiimide, bis(2,6-diethylphenyl)carbodiimide, bis(2-ethyl-6-isopropylphenyl)carbodiimide, bis(2-butyl-6-isopropylphenyl)carbodiimide, bis(2,6-diisopropylphenyl)carbodiimide, bis(2,6-di-tert-butylphenyl)carbodiimide,

bis(2,4,6-trimethylphenyl)carbodiimide, bis(2,4,6-triisopropylphenyl)carbodiimide, bis(2,4,6-tributylphenyl)carbodiimide, di-β-naphthylcarbodiimide, N-tolyl-N'-cyclohexylcarbodiimide, N-tolyl-N'-phenylcarbodiimide, p-phenylenebis(o-toluylcarbodiimide), p-phenylenebis(cyclohexylcarbodiimide), p-phenylenebis(p-chlorophenylcarbodiimide), 2,6,2',6'-tetraisopropyldiphenyl carbodiimide, hexamethylenebis(cyclohexylcarbodiimide), ethylenebis(phenylcarbodiimide) and ethylenebis(cyclohexylcarbodiimide).

Out of these, bis(2,6-diisopropylphenyl)carbodiimide and 2,6,2',6'-tetraisopropyldiphenyl carbodiimide are preferred from the viewpoints of reactivity and stability.

Dicyclohexyl carbodiimide and bis(2,6-diisopropylphenyl)carbodiimide which can be industrially acquired out of these can be preferably used. Further, commercially available polycarbodiimide compounds may be advantageously used as the above polycarbodiimide compound because they do not need to be synthesized. Examples of the commercially available polycarbodiimide compounds include Carbodilite LA-1 and HMV-8CA which are marketed by Nisshinbo Industries, Inc. The carbodiimide compound is preferred from the viewpoint of its influence upon the color, thermal decomposition and hydrolysis resistance of the composition of the present invention.

(epoxy compound)

Glycidyl ether compounds, glycidyl ester compounds, glycidyl amine compounds, glycidyl imide compounds, glycidyl amide compounds and alicyclic epoxy compounds may be preferably used as the epoxy compound. A composition and a molded article having excellent mechanical properties, moldability, heat resistance and durability can be obtained by blending the compound.

The above glycidyl ether compounds include stearyl glcyidyl ether, pheny glycidyl ether, ethylene oxide lauryl alcohol glycidyl ether, ethylene glycol diglycidyl ether, polyethylene glycol diglycidyl ether, polypropylene glycol diglycidyl ether, neopentylene glycol diglycidyl ether, polytetramethylene glycol diglycidyl ether, glycerol triglycidyl ether, trimethylolpropane triglycidyl ether, pentaerythritol tetraglycidyl ether and bisphenol A diglycidyl ether type epoxy resins obtained through a condensation reaction between a bisphenol such as bis(4-hydroxyphenyl)methane and epichlorohydrin. Out of these, bisphenol A diglycidyl ether type epoxy resins are particularly preferred.

The above glycidyl ester compounds include glycidyl benzoate, glycidyl stearate, glycidyl versatate, diglycidyl terephthalate, diglycidyl phthalate, diglycidyl cyclohexanedicarboxylate, diglycidyl adipate, diglycidyl succinate, diglycidyl dodecadionate and tetraglycidyl pyromellitate. Out of these, glycidyl benzoate and glycidyl versatate are preferred.

The above glycidyl amine compounds include tetraglycidylamine diphenylmethane, triglycidyl-p-aminophenol, diglycidyl aniline, diglycidyl toluidine, tetraglycidyl metaxylenediamine and triglycidyl isocyanurate.

The above glycidyl imide and glycidyl amide compounds include N-glycidylphthalimide, N-glycidyl-4,5-dimethylphthalimide, N-glycidyl-3,6-dimethylphthalimide, N-glycidylsuccinimide, N-glycidyl-1,2,3,4-tetrahydrophthalimide, N-glycidylmaleinimide, N-glycidylbenzamide and N-glycidylstearylamide. Out of these, N-glycidylphthalimide is preferred.

The above alicyclic epoxy compounds include 3,4-epoxycyclohexyl-3,4-cyclohexylcarboxylate, bis(3,4-epoxycyclohexylmethyl)adipate, vinylcyclohexenediepoxide, N-methyl-4,5-epoxycyclohexane-1,2-dicarboxylic acid imide and N-phenyl-4,5-epoxycylohexane-1,2-dicarboxylic acid imide.

Other epoxy compounds include epoxy modified fatty acid glycerides such as epoxylated soybean oil, epoxylated linseed oil and epoxylated whale oil, phenol novolak type epoxy resin and cresol novolak type epoxy resin.

(oxazoline compound)

Examples of the oxazoline compound include 2-methoxy-2-oxazoline, 2-butoxy-2-oxazoline, 2-stearyloxy-2-oxazoline, 2-cyclohexyloxy-2-oxazoline 2-allyloxy-2-oxazoline, 2-benzyloxy-2-oxazoline, 2-p-phenylphenoxy-2-oxazoline, 2-methyl,-2-oxazoline, 2-cyclohexyl-2-oxazoline, 2-methallyl-2-oxazoline, 2-crotyl-2-oxazoline, 2-phenyl-2-oxazoline, 2-o-ethylphenyl-2-oxazoline, 2-o-propylphenyl-2-oxazoline, 2-p-phenylphenyl-2-oxazoline, 2,2'-bis(2-oxazoline), 2,2'-bis(4-methyl-2-oxazoline), 2,2'-bis(4-butyl-2-oxazoline), 2,2'-m-phenylenebis(2-oxazoline), 2,2'-p-phenylenebis(4-methyl-2-oxazoline), 2,2'-p-phenylenebis(4,4'-methyl-2-oxazoline), 2,2'-ethylenebis(2-oxazoline), 2,2'-tetramethylenebis(2-oxazoline), 2,2'-hexamethylenebis(2-oxazoline), 2,2'-ethylenebis(4-methyl-2-oxazoline), 2,2'-tetramethylenebis (4,4'-dimethyl-2-oxazoline), 2,2'-cyclohexylenebis(2-oxazoline) and 2,2'-diphenylenebis(4-methyl-2-oxazoline). Polyoxazoline compounds comprising any one of the above compounds as a monomer unit are also included.

(oxazine compound)

Examples of the oxazine compound include 2-methoxy-5,6-dihydro-4H-1,3-oxazine, 2-hexyloxy-5,6-dihydro-4H-1,3-oxazine, 2-decyloxy-5,6-dihydro-4H-1,3-oxazine, 2-cyclohexyloxy-5,6-dihydro-4H-1,3-oxazine, 2-allyloxy-5,6-dihydro-4H-1,3-oxazine and 2-crotyloxy-5,6-dihydro-4H-1,3-oxazine.

Further, 2,2'-bis(5,6-dihydro-4H-1,3-oxazine), 2,2'-methylenebis(5,6-dihydro-4H-1,3-oxazine), 2,2'-ethylenebis(5,6-dihydro-4H-1,3-oxazine), 2,2'-hexamethylenebis(5,6-dihydro-4H-1,3-oxazine), 2,2'-p-phenylenebis(5,6-dihydro-4H-1,3-oxazine) and 2,2'-P,P'-diphenylenebis(5,6-dihydro-4H-1,3-oxazine) are also included. Further, polyoxazine compounds comprising any one of the above compounds as a monomer unit may also be used.

Out of the above oxazoline compounds and oxazine compounds, 2,2'-m-phenylenebis(2-oxazoline) and 2,2'-p-phenylenebis(2-oxazoline) are preferred.

The content of the end-sealing agent (component E) is preferably 0.001 to 10 parts by weight, more preferably 0.05 to 5 parts by weight, much more preferably 0.1 to 3 parts by weight based on 100 parts by weight of the resin component (component A). When the content is lower than 0.001 part by weight, the amount of the end-sealing agent for the carboxyl terminal is too small and satisfactory hydrolysis resistance is not obtained, and when the content is higher than 10 parts by weight, gelling occurs, flowability greatly degrades, and a bad smell derived from the end-sealing agent and the contamination of a mold which seems to be derived from a bad smell causative substance become marked disadvantageously.

<hydrotalcite: component F>

The composition of the present invention may comprise a hydrotalcite (component F). The hydrotalcite (component F) used in the present invention is preferably a synthetic hydrotalcite represented by the following formula (V).

$$[M^{2+}{}_{1-x}N^{3+}{}_{x}(OH)_2]\ [A^{n-}{}_{x/n}\cdot mH_2O] \qquad (V)$$

In the above formula, $M^{2+}$ is a divalent metal ion such as magnesium ion or zinc ion, $N^{3+}$ is a trivalent metal ion such as aluminum ion or chromium ion, $A^{n-}$ is a n-valent interlayer anion, "x" satisfies $0 \leqq x < 0.33$, "m" satisfies $0 \leqq m \leqq 2$, and "n" is an integer which satisfies $1 \leqq n \leqq 5$.

$[M^{2+}{}_{1-x}N^{3+}{}_{x}(OH)_2]$ in the above formula (V) is a hydroxide sheet which is formed by the sharing of a hilly portion by octahedrons formed by surrounding the metal ion with 6 OH's. The hydroxide sheets are placed one upon another to form a layer structure. $[A^{n-}{}_{x/n}\cdot mH_2O]$ in the above formula (V) represents an n-valent anion and crystal water between the hydroxide sheets.

$M^{2+}$ is not particularly limited if it is a divalent metal ion but preferably a magnesium ion. $N^{3+}$ is not particularly limited if it is a trivalent metal ion but preferably an aluminum ion. $A^{n-}$ is preferably a carbonate ion.

Although the mechanism that the hydrotalcite (component F) improves the hydrolysis resistance of the polylactic acid is unknown, it is considered that the hydrotalcite adsorbs an acid which becomes a catalyst for the hydrolytic reaction of the polylactic acid such as lactic acid generated by thermal decomposition and hydrolysis.

The hydrotalcite (component F) used in the present invention is preferably dehydrated by baking. The baking temperature may be selected according to the chemical structure of the hydrotalcite. For example, when $M^{2+}$ is a magnesium ion, $N^{3+}$ is an aluminum ion, $A^{n-}$ is a carbonate ion and the weight ratio of the magnesium ion to the aluminum ion is 2:1 (x = 0.33), as the dehydration temperature of crystal water is 210°C, the hydrotalcite can be hydrated by baking at a temperature higher than this temperature. As x becomes smaller than 0.33, the dehydration temperature of crystal water becomes lower. Since the decomposition of the resin in the extrusion or molding step can be prevented by using the hydrated hydrotalcite, a resin composition having higher hydrolysis resistance can be obtained. Therefore, in the formula (V), "m" satisfies preferably $0 \leqq m < 0.5$, most preferably $0 \leqq m < 0.1$.

The hydrotalcite (component F) used in the present invention is preferably surface treated. Examples of the surface treating agent include silane coupling agents, titanate coupling agents, silicone compounds, fatty acids, fatty acid salts and synthetic resins. Fatty acids and fatty acid salts having affinity for polylactic acid are preferably used. By surface treating the hydrotalcite, the decomposition of the polylactic acid in the extrusion or molding step can be prevented and the dispersion of the hydrotalcite into the polylactic acid is enhanced, whereby the adsorption of an acid is carried out effectively, thereby making it possible to obtain a composition having higher hydrolysis resistance.

Although the fatty acids used for surface treatment are not particularly limited as long as they are fatty acids, higher fatty acids having a relatively higher boiling point and 12 or more carbon atoms are preferred. The higher fatty acids include lauric acid, myristic acid, palmitic acid, stearic acid, oleic acid, linoleic acid and linolenic acid. Although the fatty acid salts used for surface treatment are not particularly limited as long as they are fatty acid salts, higher fatty acid salts having a relatively high boiling point and 12 or more carbon atoms are preferred. The higher fatty acid salts include lauric acid salts, myristic acid salts, palmitic acid salts, stearic acid salts, oleic acid salts, linoleic acid salts and linolenic acid salts. The salt used in the higher fatty acid salts is preferably an inorganic compound such as sodium, potassium or zinc compound.

In the present invention, a hydrotalcite which is neither dehydrated nor surface treated, a hydrotalcite which is either dehydrated or surface treated, and a hydrotalcite which is both dehydrated and surface treated may be used. A hydrotalcite which is either dehydrated or surface treated is preferred, and a hydrotalcite which is both dehydrated and surface treated is more preferred.

Commercially available products of the hydrotalcite which is neither dehydrated nor surface treated include DHT-6 (of Kyowa Chemical Industry Co., Ltd.), commercially available products of the hydrotalcite which is only dehydrated include DHT-4C (of Kyowa Chemical Industry Co., Ltd.), commercially available products of the hydrotalcite which is only surface treated include DHT-4A (of Kyowa Chemical Industry Co., Ltd.) and commercially available products of the hydrotalcite which is both dehydrated and surface treated include DHT-4A-2 (of Kyowa Chemical Industry Co., Ltd.).

The content of the hydrotalcite (component F) is preferably 0.01 to 0.3 part by weight, more preferably 0.03 to 0.2 part by weight, much more preferably 0.05 to 0.2 part by weight based on 100 parts by weight of the resin component (component A). When the content of the hydrotalcite falls within the above range, hydrolysis resistance is improved. When the content of the hydrotalcite is not less than 0.3 part by weight, the thermal decomposition of the polylactic acid occurs, thereby deteriorating hydrolysis resistance.

<impact modifier: component G>

The composition of the present invention may comprise an impact modifier (component G). An example of the impact modifier (component G) is (i) an impact modifier (component G-α) having at least one rubber layer therein which is made of at least one component selected from the group consisting of an acrylic component, a silicon-based component, a styrene-based component, a nitrile-based component, a conjugated diene-based component, an urethane-based component and an ethylene propylene-based component and containing a vinyl monomer as a component other than the rubber layer. Another example is (ii) an impact modifier (component G-β) containing substantially no rubber component. These components may be used alone or in combination. It is needless to say that one or more of the compounds of each of the above types may be used. The compounds are preferably selected according to purpose.

(component G-α)

The impact modifier (component G-α) is preferably at least one resin selected from the group consisting of a styrene unit-containing resin having a rubber component content of less than 40 wt% (component G-α-1) and a styrene unit-containing resin having a rubber component content of not less than 40 wt%(component G-α-2)

(component G-α-1)

The styrene unit-containing resin having a rubber component content of less than 40 wt% (component G-α-1) is a resin obtained by polymerizing a styrene-based monomer and optionally at least one member selected from the group consisting of another vinyl monomer and a rubber component copolymerizable with the styrene-based monomer.

Examples of the styrene-based monomer include styrene and styrene derivatives such as α-methylstyrene, o-methylstyrene, p-methylstyrene, vinyl xylene, ethyl styrene, dimethyl styrene, p-tert-butylstyrene, vinyl naphthalene, methoxy styrene, monobromostyrene, dibromostyrene, fluorostyrene and tribromostyrene. Styrene is particularly preferred. They may be used alone or in combination of two or more.

Examples of the vinyl monomer copolymerizable with the above styrene-based monomer include vinyl cyanide compounds such as acrylonitrile and methacrylonitrile, aryl acrylates such as phenyl acrylate and benzyl acrylate, and alkyl acrylates such as methyl acrylate, ethyl acrylate, propyl acrylate, butyl acrylate, amyl acrylate, hexyl acrylate, 2-ethylhexyl acrylate, octyl acrylate, cyclohexyl acrylate and dodecyl acrylate. Aryl methacrylates such as phenyl methacrylate and benzyl methacrylate; alkyl methacrylates such as methyl methacrylate, ethyl methacrylate, propyl methacrylate, butyl methacrylate, amyl methacrylate, hexyl methacrylate, 2-ethylhexyl methacrylate, octyl methacrylate, cyclohexyl methacrylate and dodecyl methacrylate; epoxy group-containing methacrylates such as glycidyl methacrylate; maleimide-based monomers such as maleimide, N-methylmaleimide and N-phenylmaleimide; and α,β-unsaturated carboxylic acids and anhydrides thereof such as acrylic acid, methacrylic acid, maleic acid, maleic anhydride, phthalic acid and itaconic acid are also included.

Examples of the rubber component copolymerizable with the above styrene-based monomer include diene-based copolymers such as polybutadiene, polyisoprene, styrene·butadiene random copolymer and block copolymer, acrylonitrile·butadiene copolymer, copolymers of an alkyl acrylate and/or an alkyl methacrylate and butadiene copolymers, and butadiene-isoprene copolymer. Copolymers of ethylene and an α-olefin such as ethylene·propylene random copolymer and block copolymer, ethylene·butene random copolymer and block copolymer; copolymers of ethylene and an unsaturated carboxylate such as ethylene·methacrylate copolymer and ethylene·butyl acrylate copolymer; copolymers of ethylene and an aliphatic vinyl such as ethylene·vinyl acetate copolymer; non-conjugated diene terpolymers of ethylene and propylene such as ethylene·propylene·hexadiene copolymer; acrylic rubbers such as butyl polyacrylate; and composite rubbers (to be referred to as "IPN type rubbers" hereinafter) having a structure that a polyorganosiloxane rubber component and a polyalkyl (meth)acrylate rubber component are intertwined with each other so that they cannot be separated from each other are also included.

Examples of the styrene unit component-containing resin (component G-α-1) include polystyrene, styrene·butadiene·styrene copolymer (SBS resin), hydrogenated styrene·butadiene·styrene copolymer (hydrogenated SBS resin), hydrogenated styrene·isoprene·styrene copolymer (hydrogenated SIS resin), high-impact polystyrene (HIPS resin), acrylonitrile·styrene copolymer (AS resin), acrylonitrile· butadiene·styrene copolymer (ABS resin), methyl methacrylate·butadiene·styrene copolymer (MBS resin), methyl methacrylate·acrylonitrile·butadiene·styrene copolymer (MABS resin), acrylonitrile·styrene.acrylic rubber copolymer (ASA resin), acrylonitrile·ethylene propylene-based rubber.styrene copolymer (AES resin), styrene.methyl methacrylate copolymer (MS resin), methyl methacrylate·acrylonitrile·styrene copolymer (MAS resin), styrene·maleic anhydride copolymer (SMA resin) , styrene·IPN type rubber copolymer and mixtures thereof.

The styrene-based thermoplastic resin may have high stereoregularity like syndiotactic polystyrene due to the use of a catalyst such as a metallocene catalyst at the time of production. Further, according to the circumstances, a polymer and a copolymer having a narrow molecular weight distribution, a block copolymer, or a polymer or copolymer having high stereoregularity, all of which are obtained by anion living polymerization or radical living polymerization, may also be used. They may be used alone or in combination of two or more.

At least one or a mixture of two or more selected from the group consisting of polystyrene (PS resin), high-impact polystyrene (HIPS resin), acrylonitrile·styrene copolymer (AS resin), acrylonitrile·butadiene.styrene copolymer (ABS resin), acrylonitrile·styrene·acrylic rubber copolymer (ASA resin), acrylonitrile·ethylene propylene-based rubber·styrene copolymer (AES resin) and methyl methacrylate. butadiene·styrene copolymer (MBS resin) out of these is preferably used, and ABS resin, ASA resin and AES resin are most preferred.

ABS resin used in the present invention is a mixture of a thermoplastic graft copolymer (ABS copolymer) obtained by graft polymerizing a vinyl cyanide compound and an aromatic vinyl compound with a diene-based rubber component and a copolymer (AS copolymer) of a vinyl cyanide compound and an aromatic vinyl compound. The copolymer of a vinyl cyanide compound and an aromatic vinyl compound may be a copolymer by-produced during the production of a resin composed of a thermoplastic graft copolymer obtained by graft copolymerizing a vinyl cyanide compound and an aromatic vinyl compound with a diene-based rubber component, or a copolymer obtained by copolymerizing an aromatic vinyl compound and a vinyl cyanide compound independently.

As for the molecular weight of the copolymer of a vinyl cyanide compound and an aromatic vinyl compound, the reduced viscosity is preferably 0.2 to 1.0, more preferably 0.25 to 0.5. The proportion of the AS copolymer can be obtained by dissolving ABS resin in a good solvent for the AS copolymer such as acetone and centrifuging soluble matter. Insoluble matter (gel) is the net ABS copolymer.

The weight ratio (graft ratio) of the grafted vinyl cyanide compound and aromatic vinyl compound to the diene-based rubber component is preferably 20 to 200 wt%, more preferably 20 to 70 wt%.

As the diene-based rubber component forming the ABS resin is used a rubber having a glass transition point of 10°C or lower such as polybutadiene, polyisoprene or styrene-butadiene copolymer. The content of the diene-based rubber component is preferably 5 to 39.9 wt%, more preferably 10 to 35 wit% much more preferably 10 to 25 wt% based on 100 wt% of the ABS resin component.

Examples of the vinyl cyanide compound to be grafted to the diene-based rubber component are those enumerated above, out of which acrylonitrile is preferred. Examples of the aromatic vinyl compound to be grafted to the diene-based rubber component are also those enumerated above, out of which styrene and α-methylstyrene are preferred. The amount of the component to be grafted to the diene-based rubber component is preferably 60.1 to 95 wt%, more preferably 65 to 90 wt%, much more preferably 75 to 90 wt% based on 100 wt% of the ABS resin component. The amount of the vinyl cyanide compound is preferably 5 to 50 wt%, more preferably 10 to 30 wt% and the amount of the aromatic vinyl compound is preferably 95 to 50 wt%, more preferably 90 to 70 wt% based on 100 wt% of the total of the vinyl cyanide compound and the aromatic vinyl compound. Further, part of the component to be grafted to the diene-based rubber component may be mixed with methyl (meth)acrylate, ethyl acrylate, maleic anhydride or N-substituted maleimide, and the content thereof is preferably not more than 15 wt% of the ABS resin component. Further, a conventionally known initiator, chain transfer agent and emulsifier which are used in a reaction may be used as required.

In the ABS resin, the diameter of rubber particles is preferably 0.1 to 5.0 μm, more preferably 0.3 to 3.0 μm, much more preferably 0.4 to 1.5 μm, particularly preferably 0.4 to 0.9 μm. Rubber particles having a particle size distribution with one mountain or two or more mountains may be used. The rubber particles may have a single phase in morphology or a salami structure that an occlusion phase is existent around rubber particles.

The ABS resin may be produced by bulk polymerization, suspension polymerization or emulsion polymerization and copolymerized in a single stage or multiple stages. Examples of polymerization include general emulsion polymerization, soap-free polymerizing using an initiator such as potassium persulfate, seed polymerization and two-stage swelling polymerization. In the suspension polymerization method, a water phase and a monomer phase are separately kept and supplied into a continuous disperser accurately, and the particle size is controlled by the revolution of the disperser. In the continuous production method, the particle size is controlled by supplying a monomer phase into an aqueous liquid having dispersion ability through a fine orifice or porous filter having an opening size of several to several

tens of μm.

The ASA resin used in the present invention is a thermoplastic graft copolymer obtained by graft polymerizing a vinyl cyanide compound and an aromatic vinyl compound with an acrylic rubber component, or a mixture of the thermoplastic graft copolymer and a copolymer of a vinyl cyanide compound and an aromatic vinyl compound. The acrylic rubber used herein is an acrylic rubber which contains an alkyl acrylate unit having 2 to 10 carbon atoms and optionally another copolymerizable component such as styrene, methyl methacrylate or butadiene. Preferably, the alkyl acrylate having 2 to 10 carbon atoms is 2-ethylhexyl acrylate or n-butyl acrylate and contained in an amount of not less than 50 wt% based on 100 wt% of the acrylate rubber. The acrylate rubber is at least partially crosslinked, and examples of the crosslinking agent include ethylene glycol diacrylate, butylene glycol diacrylate, ethylene glycol dimethacrylate, allyl methacrylate and polypropylene glycol diacrylate. The crosslinking agent is preferably used in an amount of 0.01 to 3 wt% based on the acrylate rubber. The amount of the acrylic rubber component is preferably 5 to 39.9 wt%, more preferably 10 to 35 wt%, much more preferably 10 to 25 wt% based on 100 wt% of the ASA resin.

As for the ratio of the vinyl cyanide compound and the aromatic vinyl compound, preferably, the amount of the vinyl cyanide compound is 5 to 50 wt% and the amount of the aromatic vinyl compound is 95 to 50 wt% based on 100 wt% of the total of these. Particularly preferably, the amount of the vinyl cyanide compound is 15 to 35 wt% and the amount of the aromatic vinyl compound is 85 to 65 wt%. The production method of the ASA resin may be the same as that of the above ABS resin.

The AES resin used in the present invention is a thermoplastic graft copolymer obtained by graft polymerizing a vinyl cyanide compound and an aromatic vinyl compound with an ethylene-propylene rubber component or an ethylene-propylene-diene rubber component, or a mixture of the thermoplastic graft copolymer and a copolymer of a vinyl cyanide compound and an aromatic vinyl compound. The production method of the AES resin may be the same as that of the above ABS resin.

(component G-α-2)

The styrene unit-containing resin having a rubber component content of not less than 40 wt% is a graft copolymer obtained by graft polymerizing an aromatic vinyl, vinyl cyanide, acrylic ester or methacrylic ester with a rubber component having a glass transition temperature of 10˚C or lower. The aromatic vinyl, vinyl cyanide, acrylic ester or methacrylic ester may contain at least one vinyl monomer copolymerizable with these.

A block copolymer of the rubber component and the above monomer may also be used. Examples of the block copolymer include thermoplastic elastomers such as styrene·ethylene propylene·styrene elastomer (hydrogenated styrene·isoprene·styrene elastomer) and hydrogenated styrene·butadiene·styrene elastomer.

Elastic polymers known as other thermoplastic elastomers such as polyurethane elastomers, polyester elastomers and polyether amide elastomers may also be used.

The styrene unit component-containing resin having a rubber component content of not less than 40 wt% contains not less than 40 % of a rubber component and is clearly distinguished from the styrene unit component-containing resin having a rubber component content of less than 40 wt% of the present invention.

Examples of the rubber component having a glass transition temperature of 10˚C or lower include butadiene rubber, butadiene-acrylic composite rubber, acrylic rubber, acrylic-silicon composite rubber, isobutylene-silicon composite rubber, isoprene rubber, styrene-butadiene rubber, chloroprene rubber, ethylene-propylene rubber, nitrile rubber, ethylene-acrylic rubber, silicon rubber, epichlorohydrin rubber, fluorine rubber and rubbers obtained by adding hydrogen to the unsaturated bonds of these.

Impact modifiers containing a rubber component having a glass transition temperature of preferably -10˚C or lower, more preferably -30˚C or lower are preferred, and impact modifiers comprising butadiene rubber, butadiene-acrylic composite rubber, acrylic rubber or acrylic-silicon composite rubber are particularly preferred. The composite rubber is a rubber obtained by copolymerizing two different rubber components or a polymerized rubber having an IPN structure that two different rubber components are intertwined with each other so that they cannot be separated from each other.

Examples of the aromatic vinyl include styrene, α-methylstyrene, p-methylstyrene, alkoxystyrene and halogenated styrene, out of which styrene is particularly preferred. Examples of the acrylic ester include methyl acrylate, ethyl acrylate, butyl acrylate, cyclohexyl acrylate and octyl acrylate. Examples of the methacrylic ester include methyl methacrylate, ethyl methacrylate, butyl methacrylate, cyclohexyl methacrylate and octyl methacrylate. Out of these, methyl methacrylate is particularly preferred.

The impact modifier containing a rubber component having a glass transition temperature of 10˚C or lower may be produced by bulk polymerization, solution polymerization, suspension polymerization or emulsion polymerization, and copolymerization may be single-stage graft copolymerization or multi-stage graft copolymerization. The impact modifier may be a mixture of copolymers each composed of a graft component by-produced during production. Examples of polymerization include general emulsion polymerization, soap-free polymerizing using an initiator such as potassium

persulfate, seed polymerization and two-stage swelling polymerization. In the suspension polymerization method, a water phase and a monomer phase are separately kept and supplied into a continuous disperser accurately, and the particle size is controlled by the revolution of the disperser. In the continuous production method, the particle size is controlled by supplying a monomer phase into an aqueous liquid having dispersion ability through a fine orifice or porous filter having an opening size of several to several tens of μm.

These impact modifiers are commercially available and can be easily acquired. Examples of impact modifiers comprising butadiene rubber, acrylic rubber or butadiene-acrylic composite rubber as the main rubber component having a glass transiting temperature of 10˚C or lower include the Kaneace B series of Kaneka Corporation, the Metabrene C series of Mitsubishi Rayon Co., Ltd., the EXL series, HIA series, BTA series and KCA series of Kureha Chemical Industry Co., Ltd. and the UCL Modifier Resin Series of Ube Cycon Co., Ltd., and examples of impact modifiers comprising an acrylic-silicon composite rubber as the main rubber component having a glass transition temperature of 10˚C or lower include the Metabrene S-2001 and SRK-200 of Mitsubishi Rayon Co., Ltd.

Use of the styrene unit component-containing resin having a rubber component content of less than 40 wt% and the styrene unit component-containing resin having a rubber component content of not less than 40 wt% further enhances impact resistance. As a preferred example thereof, the styrene unit component-containing resin having a rubber component content of not less than 40 wt% is contained in an amount of 0.5 to 50 parts by weight based on 100 parts by weight of the styrene unit component-containing resin having a rubber component content of less than 40 wt%.

(component G-ß)

At least one resin selected from the group consisting of a copolyester and a copolyethylene is preferred as the impact modifier (component G-ß) containing substantially no rubber component.

Examples of the copolyester include a copolyester containing a polylactic acid component and a copolyester having a star-like structure containing a polybutylene adipate terephthalate component. Specific examples of the copolyester include the Plamate PD-150 and PD-350 which are on the market under the tradename of Plamate from Dainippon Ink and Chemicals, Ltd. and the Ecoflex SBX7025 of BASF Japan Co., Ltd.

Examples of the copolyethylene include Bond Fast E comprising ethylene and glycidyl methacrylate and Bond Fast 7M comprising a methyl acrylate unit marketed by Sumitomo Chemical Co., Ltd. and Biomax Strong 100 marketed by DuPont Co., Ltd.

The polyester elastomer is an elastomer which has a polybutylene terephthalate skeleton as the main skeleton and contains a polyalkylene glycol, as exemplified by TR-EL-1 of Teijin Limited.

The polyamide elastomer is an elastomer which comprises a hard segment composed of a polyamide oligomer and a soft segment composed of a polyester or polyether ester, as exemplified by the TPAE31, TPAE32 and TPAE38 of Fuji Kasei Kogyo Co., Ltd.

The content of the impact modifier (component G) is preferably 2 to 100 parts by weight, more preferably 3 to 90 parts by weight, much more preferably 5 to 80 parts by weight based on 100 parts by weight of the resin component (component A). Within the above range, not only impact resistance but also high hydrolysis resistance are obtained. Above 100 parts by weight, heat resistance deteriorates and releasability degrades disadvantageously.

<flame retardant: component H>

The composition of the present invention may comprise a flame retardant (component H). The flame retardant (component H) is at least one member selected from the group consisting of a phosphorus-based flame retardant (component H-1), a nitrogen-based flame retardant (component H-2) and a metal hydroxide compound-based flame retardant (component H-3). These three different types of flame retardants may be used alone or in combination of two or more, and a plurality of compounds of the same type may be used in combination. It is preferred that they should be used according to purpose.

(phosphorus-based flame retardant: component H-1)

Examples of the phosphorus-based flame retardant (component H-1) include (i) a phosphate-based flame retardant (ii) aphosphonitrile-based flame retardant, (iii) a phosphonate-based flame retardant, (iv) a polyphosphate-based flame retardant and (v) a phosphinate-based flame retardant.

(i) Phosphate-based flame retardant

The phosphate-based flame retardant is at least one phosphate compound represented by the following formula (5).

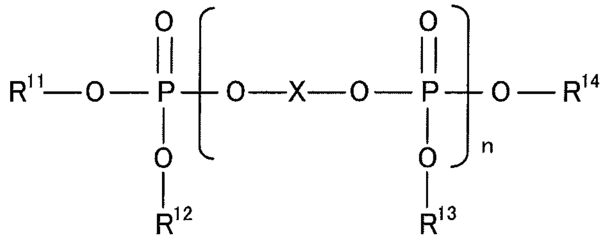

(5)

In the above formula, X is a group derived from hydroquinone, resorcinol, bis(4-hydroxydiphenyl)methane, bisphenol A, dihydroxydiphenyl, dihydroxynaphthalene, bis(4-hydroxyphenyl)sulfone, bis(4-hydroxyphenyl)ketone or bis(4-hydroxyphenyl)sulfide. "n" is an integer of 0 to 5 or an average value of 0 to 5 in the case of a mixture of phosphates which differ in "n". $R^{11}$, $R^{12}$, $R^{13}$ and $R^{14}$ are each independently a group derived from phenol, cresol, xylenol, isopropylphenol, butylphenol or p-cumylphenyl at least one halogen atom of which is substituted or not substituted.

More preferably, X in the formula is a group derived from hydroquinone, resorcinol, bisphenol A or dihydroxydiphenyl, "n" is an integer of 1 to 3 or an average value of 1 to 3 in the case of a blend of phosphates which differ in "n". R", $R^{12}$, $R^{13}$ and $R^{14}$ are each independently a group derived from phenol, cresol or xylenol at least one halogen atom of which is substituted or preferably not substituted.

Out of these organic phosphate-based flame retardants, triphenyl phosphate as a phosphate compound and resorcinol bis(dixylenylphosphate) and bisphenol A bis(diphenylphosphate) as phosphase oligomers are preferably used as they are excellent in hydrolysis resistance. Resorcinol bis(dixylenylphosphate) and bisphenol A bis(diphenylphosphate) are more preferred from the viewpoint of heat resistance. Since they have high heat resistance, they do not thermally deteriorate or volatilize.

(ii) Phosphonitrile-based flame retardant

The phosphonitrile-based flame retardant used in the present invention is a phosphonitrile linear polymer and/or cyclic polymer, or an oligomer or polymer having a recurring unit represented by the following formula (6) and a number average degree of polymerization of 3 or more. It may be linear or cyclic, particularly preferably a cyclic trimer. It may be a mixture of a linear product and a cyclic product in an arbitrary ratio.

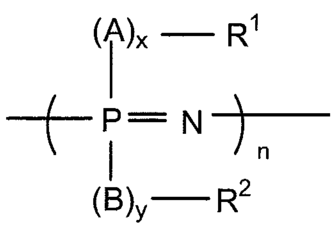

(6)

In the above formula, A and B are each independently an O, N or S atom. $R^1$ and $R^2$ are each independently an aryl group having 6 to 15 carbon atoms, alkyl group having 6 to 15 carbon atoms, aralkyl group having 6 to 15 carbon atoms or cycloalkyl group having 6 to 15 carbon atoms. $R^1$ and $R^2$ may be bonded together to form a cyclic structure. "x" and "y" are each 0 or 1. "n" which means the number average degree of polymerization is 3 or more.

The phosphonitrile linear polymer and/or cyclic polymer can be synthesized by reacting hexachlorocyclotriphosphagen, octachlorocyclotetraphosphagen or poly(dichlorophosphagen) obtained by ring-opening polymerizing any one of these cyclic oligomers with a nucleophilic reagent such as an alcohol, phenol, amine, thiol or Grignard reagent in accordance with a known method.

(iii) Phosphonate-based flame retardant

The phosphonate-based flame retardant is preferably represented by the following general formula (7).

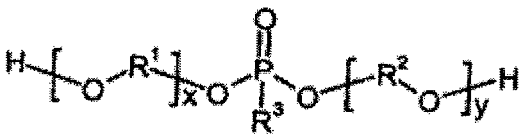

(7)

In the above formula, $R^1$ and $R^2$ are each independently a branched or unbranched alkylene group having 1 to 24 carbon atoms, substituted or unsubstituted arylene group having 6 to 20 carbon atoms, substituted or unsubstituted aralkylene group having 6 to 30 carbon atoms, or substituted or unsubstituted alkarylene group having 6 to 30 carbon atoms.

$R^3$ is a hydrogen atom, branched or unbranched alkyl group having 1 to 24 carbon atoms, substituted or unsubstituted aryl group having 6 to 20 carbon atoms, substituted or unsubstituted aralkyl group having 6 to 30 carbon atoms, or substituted or unsubstituted alkaryl group having 6 to 30 carbon atoms. "x" and "y" are each independently a numeral of 1 to 50.

(iv) Polyphosphate-based flame retardant

Examples of the polyphosphate-based flame retardant used in the present invention include ammonium polyphosphate and melamine polyphosphate.

(v) Phosphinate-based flame retardant

The phosphinate-based flame retardant used in the present invention is a salt represented by the following formula (8) or (9).

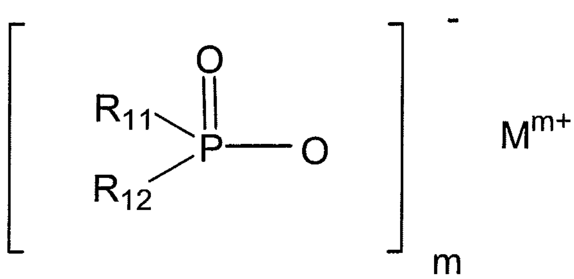

(8)

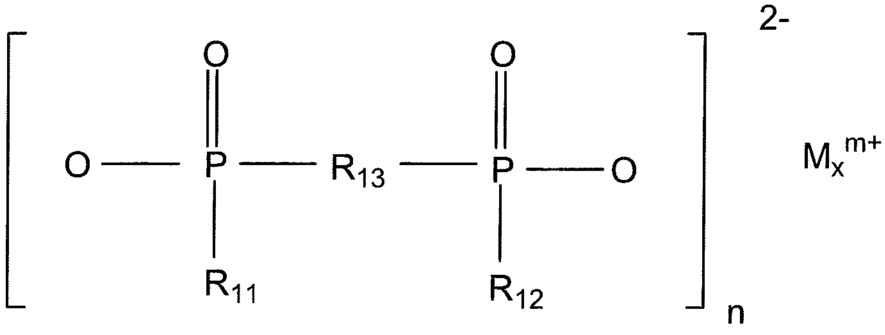

(9)

In the above formulas, $R_{11}$ and $R_{12}$ are each independently a linear or branched alkyl group having 1 to 20 carbon atoms, cycloalkyl group having 6 to 20 carbon atoms, aryl group having 6 to 20 carbon atoms or aralkyl group having 7 to 20 carbon atoms. $R_{13}$ is a linear or branched alkylene group having 1 to 20 carbon atoms, cycloalkylene group having 6 to 2 carbon atoms, arylene group having 6 to 2 carbon atoms, or alkylene arylene group or cycloalkylene arylene group having 7 to 20 carbon atoms. M is Mg, Ca, Al, Sb, Sn, Ge, Ti, Zn, Fe, Zr, Ce, Bi, Sr, Mn, Li, Na, Korprotonatednitrogen base. "x" is 1 or 2. "m" is 2 or 3, and "n" is 1 or 3.

$R_{12}$ and $R_{13}$ are each preferably selected from a linear or branched alkyl group, cycloalkyl group, aryl group and aralkyl group having an average number of carbon atoms of 1 to 10 so as to keep a suitable content of phosphorus in the component B and develop flame retardancy and the crystallinity of the composition advantageously. Out of these, alkyl group and aryl group are preferably selected. Preferred examples of the alkyl group and the aryl group include methyl group, ethyl group, n-propyl group, isopropyl group, n-butyl group, tert-butyl group, n-pentyl group and phenyl group.

$R_{13}$ is preferably selected from a linear or branched alkylene group, cycloalkylene group, arylene group, alkylene arylene group and cycloalkylene arylene group having 1 to 10 carbon atoms so as to keep a suitable content of phosphorus in the component B and develop flame retardancy and the crystallinity of the composition advantageously.

Specific examples of these groups include methylene group, ethylene group, methylethane-1,3-diyl group, propane-1,3-diyl group, 2,2-dimethylpropane-1,3-diyl group, butane-1,4-diyl group, octane-1,8-diyl group, phenylene group, naphthylene group, ethylphenylene group, tert-butylphenylene group, methylnaphthylene group, ethylnaphthylene group, phenylene methylene group, phenylene ethylene group, phenylene propylene group and phenylene butylene group.

M is Mg, Ca, Al, Zn, Fe, Zr, Ce, Bi, Sr, Mn, Li, Na, K or protonated nitrogen base. When there are a plurality of M's, they are each independently selected from these. Examples of the protonated nitrogen base include amido group, ammonium group, alkylammonium group and melamine-derived group. To improve the flame retardancy, crystallinity and moldability of the composition of the present invention, M is selected from the group consisting of Mg, Ca, Al, Zn, amido group, ammonium group, alkylammonium group and melamine-derived group. Out of these, Al is most preferred.

When the phosphinates represented by the above formulas (8) and (9) are used in combination, the weight ratio of the phosphinate of the formula (8) to the phosphinate of the formula (9) is preferably selected from a range of 10/90 to 30/70.

(nitrogen-based flame retardant: component H-2)

The nitrogen-based flame retardant (component H-2) used in the present invention is a nitrogen-based flame retardant containing a triazine skeleton, which increases the flame retardancy of the phosphorus-based flame retardant synergistically and is at least one member selected from the group consisting of compounds represented by the following formulas (10) and (11).

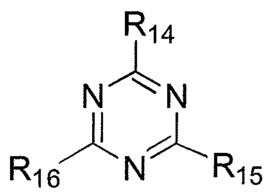

(10)

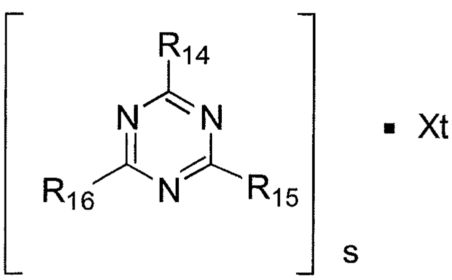

(11)

In the above formulas, $R_{14}$ to $R_{16}$ are each independently a hydrogen atom, alkyl group having 1 to 8 carbon atoms, cycloalkyl group having 5 to 16 carbon atoms (they are not substituted or substituted by a hydroxyl group or hydroxyalkyl group having 1 to 4 carbon atoms) , alkenyl group having 2 to 8 carbon atoms, alkoxy group, acyl group or acyloxy group having 1 to 8 carbon atoms, aryl group having 6 to 12 carbon atoms, -O-RA, -N (RA) (RB) or N-alicyclic or N-aromatic N(RA)RB. RA and RB are each a hydrogen atom, alkyl group having 1 to 8 carbon atoms, cycloalkyl group having 5 to 16 carbon atoms (they are not substituted or substituted by a hydroxyl group or hydroxyalkyl functional

group having 1 to 4 carbon atoms), alkenyl group having 2 to 8 carbon atoms, alkoxy group, acyl group or acyloxy group having 1 to 8 carbon atoms or aryl group having 6 to 12 carbon atoms. All of $R_{14}$ to $R_{16}$ cannot be hydrogen atoms at the same time and all of $R_{14}$ to $R_{16}$ in the formula (10) cannot be $-NH_2$ at the same time.

"X" is melamine or an acid capable of forming an adduct with a triazine compound (10), and "s" and "t" are each independently 1 or 2.

In the formula (10), when at least one of $R_{14}$ to $R_{16}$ is an aryl group having 6 to 12 carbon atoms and the nitrogen-based flame retardant is used in combination with a phosphinate out of the phosphorus-based flame retardants, flame retardancy can be enhanced more effectively and the flame retardancy, crystallinity and moldability of the composition of the present invention can be improved more advantageously.

When all of $R_{14}$ to $R_{16}$ in the formula (11) are -N (RA) (RB) , flame retardancy can be enhanced more effectively and the flame retardancy, crystallinity and moldability of the composition of the present invention can be improved more advantageously.

Preferred examples of the compounds represented by the formulas (10) and (11) include dimelamine pyrophosphate, melamine polyphosphate, melem polyphosphate, melam polyphosphate and mellon polyphosphate.

In the present invention, the flame retardancy of the composition of the present invention can be improved by using at least one of compounds represented by the following formulas (12) to (15) in addition to the nitrogen-based flame retardant having a triazine skeleton.

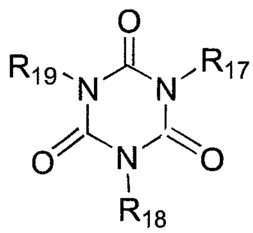

(12)

(13)

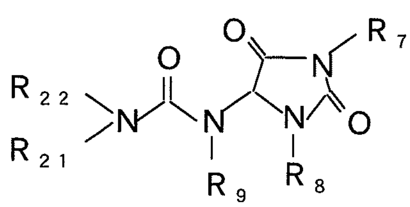

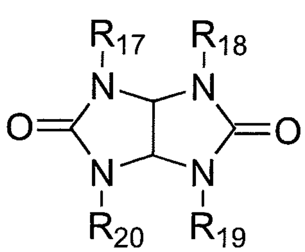

(14)

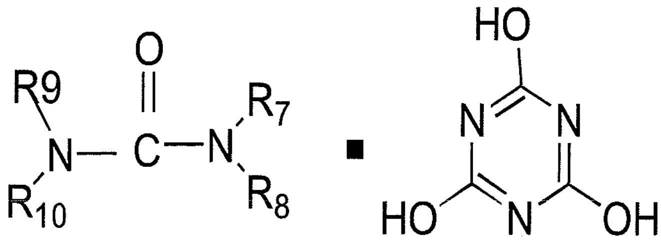

(15)

In the above formulas, $R_7$ to $R_{10}$ and $R_{17}$ to $R_{20}$ are preferably each independently functional groups enumerated for $R_{14}$ to $R_{16}$. Specific preferred examples of these groups include tris(hydroxyethyl)isocyanurate, alanine, glycoluril, urea and cyanurate. The compound is used in an amount of 10 to 50 wt% based on the nitrogen-based flame retardant containing a triazine skeleton.

(metal hydroxide compound-based flame retardant: component H-3)

The metal hydroxide compound-based flame retardant of the present invention (component H-3) is selected from aluminum hydroxide, magnesium hydroxide and calcium hydroxide. To improve the heat stability of the composition, a metal hydroxide compound-based flame retardant having higher purity, especially 99.5 % or more, is preferred. The purity of the metal hydroxide compound-based flame retardant (component H-3) can be measured by a known method. For example, the purity of the metal hydroxide compound-based flame retardant (component H-3) can be obtained by measuring the total content of impurities in the metal hydroxide compound-based flame retardant (component H-3) by a known method and subtracting the above total content of impurities from the whole amount. Stated more specifically, for example, in the case of aluminum hydroxide, examples of the impurities include $Fe_2O_3$, $SiO_2$, T-$Na_2O$ and S-$Na_2O$. The content of $Fe_2O_3$ is obtained by O-phenanthroline absorptiometry (JIS H1901) after it is dissolved in a sodium carbonate-boric acid solution. The content of $SiO_2$ is obtained by molybdenum blue absorptiometry (JIS H1901) after it is dissolved in a sodium carbonate-boric acid solution. The content of T-$Na_2O$ is obtained by flame photometry after it is dissolved in sulfuric acid and the content of S-$Na_2O$ is obtained by flame photometry after it is extracted with hot water. The purity of the hydroxide can be obtained by subtracting the above obtained contents from the weight of aluminum hydroxide. As a matter of course, it is needless to say that different types of metal hydroxide compound-based flame retardants (component H-3) can be used in combination.

The shape of the metal hydroxide compound-based flame retardant (component H-3) is not particularly limited but preferably particulate. The average particle diameter obtained by a laser diffraction method of the flame retardant is preferably about not more than 100 μm. In this case, the particle size distribution is not called in question. From the viewpoint of injection moldability in the molding process and dispersibility at the time of kneading, the average particle diameter is preferably within the above range and a smaller average particle diameter out of the above range is more preferred. To enhance the filling rate into the composition, a plurality of metal hydroxide compound-based flame retardants which differ in average particle diameter may be used in combination.

Further, particles having a BET specific surface area obtained by a nitrogen gas adsorption method of about not more than 5.0 $m^2/g$ are preferably used. As a matter of course, to enhance the filling rate into the composition, a plurality of metal hydroxide compound-based flame retardants (component H-3) which differ in BET specific surface area may be used in combination. From the viewpoint of moldability, the BET specific surface area is preferably within the above range, and a smaller BET specific surface area out of the above range is more preferred.

The content of at least one flame retardant (component H) selected from the phosphorus-based flame retardant (component H-1), the nitrogen-based flame retardant (component H-2) and the metal hydroxide compound-based flame retardant (component H-3) is preferably 1 to 100 parts by weight, more preferably 3 to 90 parts by weight, much more preferably 5 to 80 parts by weight based on 100 parts by weight of the resin component (component A). When the content of the flame retardant (component H) falls within the above range, a composition which is excellent in flame retardancy as well as heat resistance and releasability is obtained. When the content is lower than 1 part by weight, the amount of the flame retardant is too small, thereby making it impossible to obtain flame retardancy and when the content is higher than 100 parts by weight, heat resistance deteriorates and releasability degrades disadvantageously.

<inorganic filler: component I>

The composition of the present invention may comprise an inorganic filler (component I). A composition having excellent mechanical properties, heat resistance and moldability can be obtained by the inorganic filler (component I).

The inorganic filler used in the present invention is a fibrous, lamellar or powdery filler which is generally used to reinforce an ordinary thermoplastic resin.

Examples of the inorganic filler include fibrous inorganic fillers such as carbon nanotubes, glass fibers, asbestos fibers, carbon fibers, graphite fibers, metal fibers, potassium titanate whiskers, aluminum borate whiskers, magnesium-based whiskers, silicon-based whiskers, wollastonite, imogolite, sepiolite, asbestos, slug fibers, zonolite, gypsum fibers, silica fibers, silica-alumina fibers, zirconia fibers, boron nitride fibers, silicon nitride fibers and boron fibers. Lamellar and particulate inorganic fillers such as lamellar silicates, lamellar silicates exchanged with an organic onium ion, glass flakes, non-swelling mica, graphite, metal foils, ceramic beads, talc, clay, mica, cericite, zeolite, bentonite, dolomite, kaolin, powdery silicic acid, feldspar powder, potassium titanate, sillas balloon, calcium carbonate, magnesium carbonate, barium sulfate, calcium oxide, aluminum oxide, titanium oxide, aluminum silicate, silicon oxide, gypsum, novaculite, dosonite and carbon nanoparticles including white clay fullerene are also included.

The lamellar silicates include smectite-based clay minerals such as montmorillonite, beidellite, nontronite, saponite, hectorite and sauconite, clay minerals such as vermiculite, halocite, kanemite and kenyaite, and swelling micas such as Li type fluorine teniorite, Na type fluorine teniorite, Li type tetrasilicon fluorine mica and Na type tetrasilicon fluorine mica. They may be natural or synthetic. Out of these, smectite-based clay minerals such as montmorillonite and hectorite and swelling synthetic micas such as Li type fluorine teniorite and Na type tetrasilicon fluorine mica are preferred.

Out of these inorganic fillers, fibrous or lamellar inorganic fillers are preferred, and glass fibers, wollastonite, aluminum borate whiskers, potassium titanate whiskers, mica, kaolin and cation-exchanged lamellar silicates are particularly preferred. The aspect ratio of the fibrous filler is preferably 5 or more, more preferably 10 or more, much more preferably 20 or more.

The filler may be covered or converged with a thermoplastic resin such as an ethylene-vinyl acetate copolymer or a thermosetting resin such as epoxy resin, or treated with a coupling agent such as aminosilane or epoxysilane.

The content of the inorganic filler is preferably 0.05 to 100 parts by weight, more preferably 0.5 to 100 parts by weight, much more preferably 1 to 50 parts by weight, particularly preferably 1 to 30 parts by weight, most preferably 1 to 20 parts by weight based on 100 parts by weight of the resin component (component A). When the content of the inorganic filler (component I) falls within the above range, a molded article having excellent mechanical strength as well as an excellent appearance and extrusion property is obtained. When the content is lower than 0.05 part by weight, the reinforcing effect becomes unsatisfactory and when the content is higher than 100 parts by weigh, the appearance of the molded article may become worse and a strand may be broken at the time of extrusion.

<optical stabilizer>

The composition of the present invention may comprise an optical stabilizer. The optical stabilizer is selected from a benzophenone-based compound, a benzotriazole-based compound, an aromatic benzoate-based compound, an anilide oxalate-based compound, a cyanoacrylate-based compound and a hindered amine-based compound.

Examples of the benzophenone-based compound include benzophenone, 2,4-dihydroxybenzophenone, 2,2'-dihydroxybenzophenone, 2,2',4,4'-tetrahydroxybenzophenone, 2-hydroxy-4-methoxybenzophenone, 2,2'-dihydroxy-4,4'-dimethoxybenzophenone, 2,2'-dihydroxy-4,4'-dimethoxy-5-sulfobenzophenone, 2-hydroxy-4-octoxybenzophenone, 2-hydroxy-4-dodecyloxybenzophenone, 2-hydroxy-4-octoxybenzophenone, 2-hydroxy-4-methoxy-5-sulfobenzophenone, 5-chloro-2-hydroxybenzophenone, 2-hydroxy-4-octoxybenzophenone, 2-hydroxy-4-methoxy-2'-carboxybenzophenone and 2-hydroxy-4-(2-hydroxy-3-methyl-acryloxyisopropoxy)benzo phenone.

Examples of the benzotriazole-based compound include 2-(5-methyl-2-hydroxyphenyl)benzotriazole, 2-(3,5-di-tert-butyl-2-hydroxyphenyl)benzotriazole, 2-(3,5-di-tert-amyl-2-hydroxyphenyl)benzotriazole, 2-(3',5'-di-tert-butyl-4'-methyl-2'-hydroxyphenyl) benzotriazole, 2-(3,5-di-tert-amyl-2-hydroxyphenyl)-5-chlorobenzo triazole, 2-(5-tert-butyl-2-hydroxyphenyl)benzotriazole, 2-[2'-hydroxy-3',5'-bis($\alpha$,$\alpha$-dimethylbenzyl)phenyl] benzotriazole, 2-[2'-hydroxy-3',5'-bis ($\alpha$,$\alpha$-dimethylbenzyl)phenyl]-2H-benzotriazole and 2-(4'-octoxy-2'-hydroxyphenyl)benzotriazole.

Examples of the aromatic benzoate-based compound include alkylphenyl salicylates such as p-tert-butylphenyl salicylate and p-octylphenyl salicylate.

Examples of the anilide oxalate-based compound include 2-ethoxy-2'-ethyloxalic acid bisanilide, 2-ethoxy-5-tert-butyl-2'-ethyloxalic acid bisanilide and 2-ethoxy-3'-dodecyloxalic acid bisanilide.

Examples of the cyanoacrylate-based compound include ethyl-2-cyano-3,3'-diphenyl acrylate and 2-ethylhexyl-cyano-3,3'-diphenyl acrylate.

Examples of the hindered amine-based compound include 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine, 4-benzoyloxy-2,2,6,6-tetramethylpiperidine, 4-methoxy-2,2,6,6-tetramethylpiperidine, 4-octadecyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl)carbonate, bis(2,2,6,6-tetramethyl-4-piperidyl)oxalate, bis(2,2,6,6-tetramethyl-4-piperidyl)malonate, bis (2,2,6,6-tetramethyl-4-piperidyl)sebacate, bis(2,2,6,6-tetramethyl-4-piperidyl)adipate, bis(2,2,6,6-tetramethyl-4-piperidyl)terephthalate, 1,2-bis(2,2,6,6-tetramethyl-4-piperidyloxy)-ethane, α,α'-bis(2,2,6,6-tetramethyl-4-piperidyloxy)-p-xylene, bis(2,2,6,6-tetramethyl-4-piperidyl)-tolylene-2,4-dicarbamate, bis(2,2,6,6-tetramethyl-4-piperidyl)-hexamethylene-1,6-dicarbamate, tris (2,2,6,6-tetramethyl-4-piperidyl)-benzene-1,3,5-tricarboxylate, tris (2,2,6,6-tetramethyl-4-piperidyl)-benzene-1,3,4-tricarboxylate, 1-2-(3-(3,5-di-tert-butyl-4-hydroxyphenyl)propionyloxy)-2,2,6,6-tetramethylpiperidine, and condensate of 1,2,3,4-butanetetracarboxylic acid, 1,2,2,6,6-pentamethyl-4-piperidinol and β,β,β',β'-tetramethyl-3,9-[2,4,8,10-tetraoxaspiro(5,5) undecane]dimethanol.

The content of the stabilizer is preferably 0.01 to 3 parts by weight, more preferably 0.03 to 2 parts by weight based on 100 parts by weight of the resin component (component A).

<crystallization accelerator>

The composition of the present invention may comprise a crystallization accelerator. When the composition comprises the crystallization accelerator, the function of the phosphate metal salt (component C) can be further enhanced, and a molded article having excellent mechanical properties, heat resistance and moldability can be obtained.

That is, by using the crystallization accelerator, the moldability and crystallinity of the resin component (component A) are improved, and a molded article which is fully crystallized even by ordinary injection molding and has excellent heat resistance and moist heat stability can be obtained. In addition, the time required for the manufacture of a molded article can be drastically shortened and its economical effect is large.

Both an inorganic crystallization nucleating agent and an organic crystallization nucleating agent may be used as the crystallization accelerator. Examples of the inorganic crystallization nucleating agent include talc, kaolin, silica, synthetic mica, clay, zeolite, graphite, carbon black, zinc oxide, magnesium oxide, titanium oxide, calcium carbonate, calcium sulfate, barium sulfate, calcium sulfide, boron nitride, montmorillonite, neodymium oxide, aluminum oxide and phenylphosphonate metal salts. These inorganic crystallization nucleating agents are preferably treated with a dispersion aid so that they are well dispersed to such an extent that their primary particle diameters become about 0.01 to 0.5 μm so as to improve their dispersibility in the composition and their effect.

Examples of the organic crystallization nucleating agent include organic carboxylic acid metal salts such as calcium benzoate, sodium benzoate, lithium benzoate, potassium benzoate, magnesium benzoate, barium benzoate, calcium oxalate, disodium terephthalate, dilithium terephthalate, dipotassium terephthalate, sodium laurate, potassium laurate, sodium myristate, potassium myristate, calcium myristate, barium myristate, sodium octanoate, calcium octanoate, sodium stearate, potassium stearate, lithium stearate, calcium stearate, magnesium stearate, barium stearate, sodium montanate, calcium montanate, sodium toluylate, sodium salicylate, potassium salicylate, zinc salicylate, aluminum dibenzoate, sodium β-naphthoate, potassium β-naphthoate and sodium cyclohexanecarboxylate, and organic sulfonic acid metal salts such as sodium p-toluenesulfonate and sodium sulfoisophthalate.

Organic carboxylic acid amides such as stearic acid amide, ethylenebis lauric acid amide, palmitic acid amide, hydroxystearic acid amide, erucic acid amide and tris(tert-butylamide)trimesate, low-density polyethylene, high-density polyethylene, polyisopropylene, polybutene, poly-4-methylpentene, poly-3-methylbutene-1, polyvinyl cycloalkane, polyvinyl trialkylsilane, high-melting point polylactic acid, sodium salt of an ethylene-acrylate copolymer, sodium salt of a styrene-maleic anhydride copolymer (so-called "ionomer"), benzylidene sorbitol and derivative thereof such as dibenzylidene sorbitol are also included.

Out of these, talc and at least one selected from organic carboxylic acid metal salts are preferably used. These crystallization nucleating agents may be used alone or in combination of two or more in the present invention.

The content of the crystallization accelerator is preferably 0.01 to 30 parts by weight, more preferably 0. 05 to 20 parts by weight based on 100 parts by weight of the resin component (component A).

<organic filler>

The composition of the present invention may comprise an organic filler. By using the organic filler, a composition having excellent mechanical properties, heat resistance and moldability can be obtained.

Examples of the organic filler include chip fillers such as rice husk chips, wooden chips, bean curd refuse, old paper crushed chips and apparel crushed chips, fibrous fillers such as plant fibers including cotton fibers, hemp fibers, bamboo fibers, wooden fibers, kenaf fibers, jute fibers, banana fibers and coconut fibers, pulp and cellulose fibers obtained from these plant fibers, animal fibers including silk, wool, Angora, cashmere and camel fibers, and synthetic fibers including polyester fibers, nylon fibers and acrylic fibers, and powdery fillers such as paper powders, wooden powders, cellulose powders, rice husk powders, fruit shell powders, chitin powders, chitosan powders, protein powders and starch powders. From the viewpoint of moldability, paper powders, wooden powders, bamboo powders, cellulose powders, kenaf powders, rice husk powders, fruit shell powders, chitin powders, chitosan powders, protein powders

and starch powders are preferred, and paper powders, wooden powders, bamboo powders, cellulose powders and kenaf powders are more preferred. Paper powders and wooden powders are much more preferred. Paper powders are particularly preferred.

Organic fillers obtained from natural products may be used, and organic fillers recycled from waste materials such as used paper, waste timber and used clothing may also be used. Conifers such as yellow pine, cedar, cypress and fir, and broadleaf trees such as beech, chinquapin and eucalyptus are preferred as timber.

Paper powders preferably contain an adhesive, especially an emulsion-based adhesive such as vinyl acetate resin-based emulsion or acrylic resin-based emulsion which is generally used to process paper, or a hot melt adhesive such as polyvinyl alcohol-based adhesive or polyamide-based adhesive from the viewpoint of moldability.

In the present invention, the content of the organic filler is preferably 1 to 300 parts by weight, more preferably 5 to 200 parts by weight, much more preferably 10 to 150 parts by weight, particularly preferably 15 to 100 parts by weight based on 100 parts by weight of the resin component (component A) from the viewpoints of moldability and heat resistance.

<release agent>

The resin composition of the present invention may comprise a release agent. The release agent is selected from fatty acid, fatty acid metal salt, oxyfatty acid, paraffin, low-molecular weight polyolefin, fatty acid amide, alkylenebis fatty acid amide, aliphatic ketone, fatty acid partially saponified ester, fatty acid lower alcohol ester, fatty acid polyhydric alcohol ester, fatty acid polyglycol ester and modified silicone. When the composition comprises a release agent, a polylactic acid molded article having excellent mechanical properties, moldability and heat resistance can be obtained.

The fatty acid is preferably a fatty acid having 6 to 40 carbon atoms, as exemplified by oleic acid, stearic acid, lauric acid, hydroxystearic acid, behenic acid, arachidonic acid, linoleic acid, linolenic acid, ricinoleic acid, palmitic acid, montanic acid and mixtures thereof. The fatty acid metal salt is preferably an alkali (earth) metal salt of a fatty acid having 6 to 40 carbon atoms, as exemplified by calcium stearate, sodium montanate and calcium montanate.

Examples of the oxyfatty acid include 1,2-oxystearic acid. The paraffin is preferably a paraffin having 18 or more carbon atoms, as exemplified by liquid paraffin, natural paraffin, microcrystalline wax and petrolactam.

The low-molecular weight polyolefin is preferably a polyolefin having a molecular weight of not more than 5, 000, as exemplified by polyethylene wax, maleic acid modified polyethylene wax, oxide type polyethylene wax, chlorinated polyethylene wax and polypropylene wax. The fatty acid amide is preferably a fatty acid amide having 6 or more carbon atoms, as exemplified by oleic acid amide, erucic acid amide and behenic acid amide.

The alkylenebis fatty acid amide is preferably an alkylenebis fatty acid amide having 6 or more carbon atoms, as exemplified by methylenebis stearic acid amide, ethylenebis stearic acid amide and N,N-bis(2-hydroxyethyl)stearic acid amide. The aliphatic ketone is preferably an aliphatic ketone having 6 or more carbon atoms, as exemplified by higher aliphatic ketones.

Examples of the fatty acid partially saponified ester include montanic acid partially saponified esters. Examples of the fatty acid lower alcohol ester include stearic acid esters, oleic acid esters, linoleic acid esters, linolenic acid esters, adipic acid esters, behenic acid esters, arachidonic acid esters, montanic acid esters and isostearic acid esters.

Examples of the fatty acid polyhydric alcohol ester include glycerol tristearate, glycerol distearate, glycerol monostearate, pentaerythritol tetrastearate, pentaerythritol tristearate, pentaerythritol dimyristate, pentaerythritol monostearate, pentaerythritol adipate stearate and sorbitan monobehenate. Examples of the fatty acid polyglycol ester include polyethylene glycol fatty acid esters and polypropylene glycol fatty acid esters.

Examples of the modified silicone include polyether modified silicone, higher fatty acid alkoxy modified silicone, higher fatty acid-containing silicone, higher fatty acid ester modified silicone, methacryl modified silicone and fluorine modified silicone.

Out of these, fatty acids, fatty acid metal salts, oxyfatty acids, fatty acid esters, fatty acid partially saponified esters, paraffins, low-molecular weight polyolefins, fatty acid amides and alkylenebis fatty acid amides are preferred, and fatty acid partially saponified esters and alkylenebis fatty acid amides are more preferred. Montanic acid esters, montanic acid partially saponified esters, polyethylene wax, oxidized polyethylene wax, sorbitan fatty acid esters, erucic acid amide and ethylenebis stearic acid amide are much more preferred, and montanic acid partially saponified esters and ethylenebis stearic acid amide are particularly preferred.

These release agents may be used alone or in combination of two or more. The content of the release agent is preferably 0.01 to 3 parts by weight, more preferably 0.03 to 2 parts by weight based on 100 parts by weight of the resin component (component A).

<antistatic agent>

The composition of the present invention may comprise an antistatic agent. Examples of the antistatic agent

include quaternary ammonium salt-based and sulfonate-based compounds such as (β-lauramidepropionyl)trimethylammonium sulfate and sodium dodecylbenzenesulfonate, and alkyl phosphate-based compounds.

These antistatic agents may be used alone or in combination of two or more. The content of the antistatic agent is preferably 0.05 to 5 parts by weight, more preferably 0.1 to 5 parts by weight based on 100 parts by weight of the resin component (component A).

<plasticizer>

The composition of the present invention may comprise a plasticizer. The plasticizer is selected from a polyester-based plasticizer, glycerin-based plasticizer, polycarboxylate-based plasticizer, phosphate-based plasticizer, polyalkylene glycol-based plasticizer and epoxy-based plasticizer.

Examples of the polyester-based plasticizer include polyesters comprising an acid component such as adipic acid, sebacic acid, terephthalic acid, isophthalic acid, naphthalenedicarboxylic acid or diphenyldicarboxylic acid and a diol component such as ethylene glycol, propylene glycol, 1,3-propanediol, 1,3-butanediol, 1,4-butanediol, 1,6-hexanediol or diethylene glycol, and polyesters comprising a hydroxycarboxylic acid such as polycaprolactone. The terminals of these polyesters may be sealed with a monofunctional carboxylic acid or a monofunctional alcohol.

Examples of the glycerin-based plasticizer include glycerin monostearate, glycerin distearate, glycerin monoacetomonolaurate, glycerin monoacetomonostearate, glycerin diacetomonooleate and glycerin monoacetomonomontanate.

Examples of the polycarboxylate-based plasticizer include phthalates such as dimethyl phthalate, diethyl phthalate, dibutyl phthalate, diheptyl phthalate, dibenzyl phthalate and butylbenzyl phthalate, trimellitates such as tributyl trimellitate, trioctyl trimellitate and trihexyl trimellitate, adipates such as isodecyl adipate and n-decyl-n-octyl adipate, citrates such as tributyl acetylcitrate, azelates such as bis(2-ethylhexyl)azelate, and sebacates such as dibutyl sebacate and bis (2-ethylhexyl) sebacate.

Examples of the phosphate-based plasticizer include tributyl phosphate, tris(2-ethylhexyl)phosphate, trioctyl phosphate, triphenyl phosphate, tricresyl phosphate and diphenyl-2-ethylhexyl phosphate.

Examples of the polyalkylene glycol-based plasticizer include polyalkylene glycols such as polyethylene glycol, polypropylene glycol, polytetramethylene glycol, poly(ethylene oxide-propylene oxide) block or random copolymer, ethylene oxide addition polymer of a bisphenol and tetrahydrofuran addition polymer of a bisphenol, and terminal sealing compounds such as terminal epoxy modified compounds, terminal ester modified compounds and terminal ether modified compounds of these polyalkylene glycols.

Examples of the epoxy-based plasticizer include epoxy triglyceride comprising alkyl epoxystearate and soybean oil, and epoxy resin obtained from bisphenol A and epichlorohydrin.

Other examples of the plasticizer include benzoates of an aliphatic polyol such as neopentyl glycol dibenzoate, diethylene glycol dibenzoate and triethylene glycol-bis(2-ethylbutyrate), fatty acid amides such as stearic acid amide, fatty acid esters such as butyl oleate, oxyacid esters such as methyl acetyl ricinoleate and butyl acetyl ricinoleate, pentaerythritol, sorbitols, polyacrylates, silicone oil and paraffins.

The plasticizer is preferably at least one selected from polyester-based plasticizers and polyalkylene-based plasticizers. They may be used alone or in combination of two or more.

The content of the platicizer is preferably 0.01 to 30 parts by weight, more preferably 0.05 to 20 parts by weight, much more preferably 0.1 to 10 parts by weight based on 100 parts by weight of the resin component (component A). In the present invention, a crystallization nucleating agent and a plasticizer may be used independently but preferably in combination.

<others>

In the present invention, the composition of the present invention may comprise a thermosetting resin such as phenol resin, melamine resin, thermocurable polyester resin, silicone resin or epoxy resin as long as it does not go against the object of the present invention. The composition may further comprise a colorant including an organic or inorganic dye or pigment, for example, an oxide such as titanium dioxide, a hydroxide such as alumina white, a sulfide such as zinc sulfide, a ferrocyanide compound such as iron blue, a chromate such as zinc chromate, a sulfate such as barium sulfate, a carbonate such as calcium carbonate, a silicate such as ultramarine blue, a phosphate such as manganese violet, carbon such as carbon black, and a metal colorant such as bronze powder or aluminum powder. The composition may still further comprise a nitroso-based condensation polycyclic colorant such as Naphthol Green B, a nitro-based condensation polycyclic colorant such as Naphthol Yellow S, an azo-based condensation polycyclic colorant such as Naphthol Red or Chromophthal Yellow, a phthalocyanine-based condensation polycyclic colorant such as Phthalocyanine Blue or Fast Sky Blue, or Indanthrene Blue, and a slidability accelerator such as graphite or fluororesin. These additives may be used alone or in combination of two or more.

<production of composition>

The composition of the present invention can be produced through the steps of:

(i) melt kneading together composition-1 which comprises 100 parts by weight of poly-L-lactic acid (component A-α-1) and 0.001 to 3 parts by weight of a phosphono-fatty acid ester (component B) and composition-2 which comprises 100 parts by weight of poly-D-lactic acid (component A-α-2) and 0.001 to 3 parts by weight of a phosphono-fatty acid ester (component B) in the presence of 0.01 to 5 parts by weight of a phosphate metal salt (component C) based on 100 parts by weight of the total of the composition-1 and the composition-2 to prepare stereocomplex polylactic acid; and
(ii) melt kneading together 100 parts by weight of a resin component (component A) which is composed of 5 to 100 wt% of the obtained stereocomplex polylactic acid (component A-α) and 95 to 0 wt% of a thermoplastic resin (component A-β), 0.001 to 2 parts by weight of at least one antioxidant (component D) selected from the group consisting of a phosphite-based compound, a phosphonite-based compound, a hindered phenol-based compound and a thioether-based compound and 0.001 to 10 parts by weight of an end-sealing agent (component E).

The feature of the production method of the present invention is that the phosphono-fatty acid ester (component B) is added as a deactivating agent for the metal polymerization catalyst of polylactic acid to the poly-L-lactic acid (component A-α-1) and the poly-D-lactic acid (component A-α-2). After the metal polymerization catalyst is deactivated by adding the phosphono-fatty acid ester (component B), the stereocomplex polylactic acid is prepared by melt kneading, thereby making it possible to enhance the stereo crystal rate. As a result, a composition having excellent heat stability can be obtained.

In the step (i), the composition-1 comprises preferably 0.005 to 2 parts by weight, more preferably 0.01 to 1 part by weight of the phosphono-fatty acid ester (component B) based on 100 parts by weight of the poly-L-lactic acid (component A-α-1). The composition-2 comprises preferably 0.05 to 2 parts by weight, more preferably 0.01 to 1 part by weight of the phosphono-fatty acid ester (component B) based on 100 parts by weight of the poly-L-lactic acid (component A-α-1).

Even in the step (ii), the phosphono-fatty acid ester (component B) may be added. The amount of the phosphono-fatty acid ester (component B) added in the step (ii) is preferably 0.005 to 2 parts by weight, more preferably 0.01 to 1 part by weight based on 100 parts by weight of the resin component which is composed of 5 to 95 wt% of the stereocomplex polylactic acid and 95 to 5 wt% of the thermoplastic resin (component A-β).

The amount of the antioxidant (component D) is preferably 0.005 to 1.5 parts by weight, more preferably 0.01 to 1 part by weight based on 100 parts by weight of the stereocomplex polylactic acid.

The melt kneading temperature in the step of producing the stereocomplex polylactic acid is preferably 250 to 300˚C, more preferably 250 to 290˚C. When the melt kneading temperature is higher than 300˚C, it is difficult to suppress a decomposition reaction and when the temperature is lower than 240˚C, uniform mixing by a heat treatment does not proceed and it is difficult to produce the stereocomplex efficiently disadvantageously. The melting time which is not particularly limited is 0.2 to 60 minutes, preferably 1 to 20 minutes. The atmosphere at the time of melting is an inert atmosphere under normal pressure or reduced pressure.

A tumbler, twin-cylinder mixer, super mixer, Nauter mixer, Banbury mixer, kneading roll or single-screw or double-screw extruder may be used for melt kneading. The obtained composition can be molded directly or after it is pelletized by a melt extruder.

The composition of the present invention is preferably in a pellet form. The pellet can be produced by conventionally known methods in which the composition extruded into a strand or plate-like form is cut in air or water after the resin is completely solidified or while it is still molten without being completely solidified. Any one of the conventionally known methods can be advantageously used in the present invention.

The shape of the pellet is, for example, spherical, dice-like, linear or curved, and the shape of its cross-section may be round, oval, flat, triangular, polygonal with 4 or more angles or star-like. The pellet preferably has a suitable shape so as to be formed by various molding methods. Specifically, the pellet preferably has a length of 1 to 7 mm, a long diameter of 3 to 5 mm and a short diameter of 1 to 4 mm. It is preferred that the pellet should have no variations in shape.

<physical properties of composition>

The tensile strength retention (T) of the composition of the present invention is not less than 60 %, preferably not less than 70 %, more preferably not less than 80 %, much more preferably not less than 90 to 100 %. The tensile strength retention (T) is represented by the following equation.

$$T\ (\%) = t^1/t^0 \times 100\ (\%)$$

$t^0$ is initial tensile strength and $t^1$ is tensile strength after the composition is kept at 80˚C and 95 %RH for 100 hours. Although the tensile strength measurement test piece is not particularly limited, a test piece having a length of 150 mm, a width of 20 mm and a thickness of 4 mm in conformity to ISO527 is preferred. Although tensile strength test conditions are not particularly limited, a test speed of 5 mm/min is preferred. The tensile strength is divided into yield strength and breaking strength. The tensile strength of the present invention shows higher strength out of them and so-called "maximum tensile strength" measured during a tensile test.

The enantiomer average chain length obtained by $^{13}C$-NMR of the composition of the present invention is preferably 10 to 40, more preferably 15 to 40, much more preferably 18 to 39.

<molded article>

The molded article of the composition of the present invention is preferably formed by injection molding, extrusion molding, thermo-molding, blow molding or foam molding.

For injection molded articles, conventionally known molding methods can be employed without restrictions. However, the mold temperature is preferably 30˚C or higher, more preferably 60˚C or higher, much more preferably 70˚C or higher in order to promote the crystallization and increase the molding cycle of a molded article at the time of injection molding. In order to prevent the deformation of a molded article, the mold temperature is preferably 140˚C or lower, more preferably 120˚C or lower, much more preferably 110˚C or lower. These molded articles include auto parts, electric and electronic parts, electric equipment exterior parts and OA exterior parts.

Examples

The following examples are provided for the purpose of further illustrating the present invention but are in no way to be taken as limiting.

1. Production of polylactic acid

Polylactic acid was produced by the method shown in the following Production Examples. Values in the Production Examples were obtained by the following methods.

(1) weight average molecular weight (Mw) and number average molecular weight (Mn)

They were measured by gel permeation chromatography (GPC) and calculated in terms of standard polystyrene. GPC measurement equipment include the RID-6A differential refractometer of Shimadzu Corporation as a detector and the TSKgelG3000HXL of Tosoh Corporation as a column. Measurement was carried out by using chloroform as an eluant and injecting 10 μl of a sample having a concentration of 1 mg/ml (chloroform containing 1 % of hexafluoroisopropanol) at a temperature of 40˚C and a flow rate of 1.0 ml/min.

(2) carboxyl group concentration

The sample was dissolved in purified o-cresol in a nitrogen gas stream and titrated with an ethanol solution of 0.05 N potassium hydroxide using Bromocresol Blue as an indicator.

(3) Measurement with a differential scanning calorimeter (DSC)

DSC (TA-2920 of TA Instrument Co., Ltd.) was used, and in the first temperature elevation step of the sample, a melting peak at 190˚C or higher was derived from a stereo-crystal, its melting temperature was represented by Tms, and its melting enthalpy was represented by Hms. A melting peak at 190 ˚C or lower was derived from a homo-crystal, its melting temperature was represented by Tmh, and its melting enthalpy was represented by Hmh. The parameter indicating the degree of forming the stereocomplex was evaluated from the following equation.

$$\text{Stereo crystal rate} = \Delta Hms/(\Delta Hms + \Delta Hmh) \times 100$$

(4) Enantiomer average chain length

The sample was dissolved in a mixed solvent of HFIP and chloroform in a weight ratio of 1/1 and re-precipitated with methanol. This re-precipitated polymer component was ultrasonically cleaned with methanol and centrifuged 10 times to remove impurities and the solvent component, the residue was dried in a vacuum drier for one day, and a polylactic acid component which could be a measurement sample was extracted.
The sample extracted as described above was used to measure its enantiomer average chain length as follows.
$^{13}C$-NMR equipment: BURKER ARX-500 of Nippon Burker Co., Ltd.
Sample: 50 mg/0.7 ml
Measurement solvent: 10 % HFIP-containing deuterated chloroform
Inside standard: 1 % of tetramethyl silane (TMS) (v/v)
Measurement temperature: 27°C (300 K)
Measurement frequency: 125 MHz
According to $^{13}C$-NMR measurement, out of carbon peaks attributed to carbonyl carbon (C=O), peaks (a) (around 170.1-170.3 MHz) were attributed to homo-sequence (LLLLLL or DDDDDD), peaks (b) (around 170.0-169.8 MHz) were attributed to a racemic chain (LLLDDD...), and the average chain length was calculated from the integral value of these peaks based on the following equation.

$$v = \text{integral value of peaks (a)} / \text{integral value of peaks (b)}$$

The materials used in Examples 1 to 44 and Comparative Examples 1 to 17 are as follows.

Reference Example: component B, ethyl di-n-hexylphosphonoacetate (DHPA)

100 parts by weight of trihexyl phosphite and 100 parts by weight of ethyl bromoacetate were injected into a reactor, and the inside of the reactor was substituted by nitrogen. Then, the reactor was heated up to 170°C to carry out a reaction for 3 hours under reflux. After excess ethyl bromoacetate was distilled off from the reaction mixture under reduced pressure at 80°C, distillation was carried out under reduced pressure at 190°C to obtain an achromatic transparent liquid (yield of 84 %, boiling point of 146 °C/0. 5 mmHg).

Production Example 1: component A-α-1, poly-L-lactic acid (PLLA)

100 parts by weight of L-lactide (manufactured by Musashino Kagaku Kenkyusho Co., Ltd., optical purity of 100 %) and 0.15 part by weight of stearyl alcohol were fed to a polymerization reactor having a cooling distillation tube from a raw material feed port in a nitrogen gas stream. Subsequently, the inside of the reactor was substituted by nitrogen 5 times, and L-lactide was molten at 190°C. When L-lactide was molten completely, 500 μL of a toluene solution containing 0.005 part by weight of tin octylate was added so as to carry out polymerization at 190°C for 1 hour. After the end of polymerization, 0.082 part by weight of ethyl di-n-hexylphosphonoacetate (DHPA) was added from the raw material feed port and kneaded for 15 minutes. Finally, excess L-lactide was volatilized, and the polymer was discharged from the reactor and cut into a chip to obtain poly-L-lactic acid (PLLA).
The obtained poly-L-lactic acid had a weight average molecular weight of 151,000, a glass transition point (Tg) of 55°C, a melting peak temperature (Tmh) of 177°C and a carboxyl group content of 15 eq/ton. The enantiomer average chain length could not be calculated because no syndiotactic sequences could be measured.

Production Example 2: component A-α-2, poly-D-lactic acid (PDLA)

The operation of Production Example 1 was repeated except that D-lactide (manufactured by Musashino Kagaku Kenkyusho Co., Ltd., optical purity of 100 %) was used in place of L-lactide of Production Example 1 to obtain poly-D-lactic acid (PDLA). The obtained poly-D-lactic acid had a weight average molecular weight of 152,000, a glass transition point (Tg) of 55°C, a melting peak temperature (Tmh) of 177°C and a carboxyl group content of 14 eq/ton. The enantiomer average chain length could not be calculated as no syndiotactic sequences could be measured.

Production Example 3-1: component A-α-3-1, stereocomplex polylactic acid-1 (scPLA-1)

100 parts by weight of polylactic acid consisting of 50 parts by weight of PLLA and 50 parts by weight of PDLA

obtained in Production Examples 1 and 2 and 0.1 part by weight of sodium 2,2'-methylenebis(4,6-di-tert-butylphenyl) phosphate (Adecastab NA-11: ADEKA Corporation) were mixed together by means of a blender, and the resulting mixture was dried at 110˚C for 5 hours and supplied into the TEX3 0XSST 30 mmΦ vented double-screw extruder of The Japan Steel Works, Ltd. to be melt extruded into a pellet at a cylinder temperature of 250 ˚C, a screw revolution of 250 rpm, a discharge rate of 9 kg/h and a vent vacuum degree of 3 kPA so as to obtain stereocomplex polylactic acid-1. The obtained stereocomplex polylactic acid-1 had a weight average molecular weight of 131,000, a glass transition point (Tg) of 58˚C, a complex-phase polylactic acid crystal melting peak temperature (Tms) of 221˚C, a carboxyl group content of 16 eq/ton, an enantiomer average chain length of 28 and a ratio of melting peaks at 195˚C or higher to all the melting peaks in the temperature elevation step of differential scanning calorimeter (DSC) measurement of 100 %. The amount of NA-11 was based on 100 parts by weight of the total of PLLA1 and PDLA1.

Production Example 3-2: component A-α-3-2, stereocomplex polylactic acid-2 (scPLA-2)

Stereocomplex polylactic acid-2 was produced in the same manner as in Production Example 3-1 by using PLLA and PDLA obtained in the same manner as in Production Examples 1 and 2 except that the amount of ethyl di-n-hexylphosphonoacetate used in Production Examples 1 and 2 was changed from 0.082 part by weight to 1 part by weight. The obtained stereocomplex polylactic acid-2 had a weight average molecular weight of 125, 000, a glass transition point (Tg) of 58 ˚C, a complex-phase polylactic acid crystal melting peak temperature (Tms) of 222˚C, a carboxyl group content of 45 eq/ton, an enantiomer average chain length of 27 and a ratio of melting peaks at 195˚C or higher to all the melting peaks in the temperature elevation step of differential scanning calorimeter (DSC) measurement of 100 %. The amount of NA-11 was based on 100 parts by weight of the total of PLLA1 and PDLA1.

Production Example 3-3: component A-α-3-3, stereocomplex polylactic acid-3 (scPLA-3)

Stereocomplex polylactic acid-3 was produced in the same manner as in production Example 3-1 by using PLLA and PDLA obtained in the same manner as in Production Examples 1 and 2 except that 0.082 part by weight of ethyl di-n-hexylphosphonoacetate used in Production Examples 1 and 2 was not used at all. The obtained stereocomplex polylactic acid-3 had a weight average molecular weight of 127,000, a glass transition point (Tg) of 58˚C, a complex-phase polylactic acid crystal melting peak temperature (Tms) of 221˚C, a carboxyl group content of 28 eq/ton, an enantiomer average chain length of 28 and a ratio of melting peaks at 195˚C or higher to all the melting peaks in the temperature elevation step of differential scanning calorimeter (DSC) measurement of 100 %. The amount of NA-11 was based on 100 parts by weight of the total of PLLA1 and PDLA1. The results are shown in Table 1.

Table 1

| Components | | A-α-1 | A-α-2 | A-α-3-1 | A-α-3-2 | A-α-3-3 |
|---|---|---|---|---|---|---|
| Production Example | | Production Example 1 | Production Example 2 | Production Example 3-1 | Production Example 3-2 | Production Example 3-3 |
| | | PLLA | PDLA | scPLA-1 | scPLA-2 | scPLA-3 |
| DHPA | Parts by weight | 0.082 | 0.082 | 0.082 | 1 | None |
| NA-11 | Parts by weight | None | None | 0.1 | 0.1 | 0.1 |
| Tms | ˚C | Not detected | detected | 221 | 222 | 221 |
| Tmh | ˚C | 177 | 177 | Not detected | Not detected | Not detected |
| Tg | ˚C | 55 | 55 | 58 | 58 | 58 |
| Stereo crystal rate | % | 0 | 0 | 100 | 100 | 100 |
| Mw | X10000 | 15.1 | 15.2 | 13.1 | 12.5 | 12.7 |
| Carboxyl group concentration | eq/ton | 15 | 14 | 16 | 45 | 28 |

(continued)

| Components | | A-α-1 | A-α-2 | A-α-3-1 | A-α-3-2 | A-α-3-3 |
|---|---|---|---|---|---|---|
| Production Example | | Production Example 1 | Production Example 2 | Production Example 3-1 | Production Example 3-2 | Production Example 3-3 |
| | | PLLA | PDLA | scPLA-1 | scPLA-2 | scPLA-3 |
| Enantiomer average chain length | - | could not be calculated | could not be calculated | 28 | 27 | 28 |

2. Production and evaluation of composition pellet

Composition pellets were produced by the method shown in the following Examples and Comparative Examples. Values in the examples were obtained by the following methods.

(1) Enantiomer average chain length

The composition was molded into a piece having a length of 130 mm, a width of 13 mm and a thickness of l. 5 mm. Molding was carried out by using an injection molding machine (IS-150EN of Toshiba Machine Co., Ltd.) at a cylinder temperature of 230˚C and a mold temperature of 100˚C. The enantiomer average chain length of the obtained molded piece was calculated by the above-described method.

(2) Releasability

The composition was molded into a piece having a length of 130 mm, a width of 13 mm and a thickness of 1. 5 mm. Molding was carried out by using an injection molding machine (IS-150EN of Toshiba Machine Co., Ltd.) at a cylinder temperature of 230˚C, a mold temperature of 100˚C and a molding cycle of 100 sec. The molding cycle as used herein is the total of an injection time, a pressure keeping time and a cooling time. The releasability of the molded piece was judged based on the following criteria.

○: piece is not deformed at all and has no problem with releasability
Δ : piece is slightly deformed but released.
×: piece is deformed and not released.

(3) Tensile strength retention after moist heat treatment (ΔTY ratio-1)

The composition was molded into a 4 mm-thick ISO-standard test piece. Molding was carried out by using an injection molding machine (IS-150EN of Toshiba Machine Co., Ltd.) at a cylinder temperature of 230˚C, a mold temperature of 100˚C and a molding cycle of 100 sec.

($TY^a$: tensile strength of test piece after moist heat treatment)

The test piece which was left in a thermo-hygrostat tester having a temperature of 80˚C and a relative humidity of 95 % for 100 hours and then left in an environment having a temperature of 23˚C and a relative humidity of 50 % for 24 hours (test piece after moist heat treatment) was used to measure its tensile strength.

($TY^b$: tensile strength of test piece before moist heat treatment)

The test piece which was left in an environment having a temperature of 23˚C and a relative humidity of 50 % for 24 hours (test piece before moist heat treatment) was used to measure its tensile strength.
The tensile strength retention (ΔTY ratio-1) after moist heat treatment was calculated based on the following equation.

$$\Delta TY\ ratio\text{-}1 = 100 \times TY^a/TY^b$$

The term "tensile strength" as used herein means higher strength out of tensile breaking strength and tensile yield strength.

(4) Tensile strength retention after residence molding (ΔTY ratio-2)

($TY^0$: tensile strength of test piece obtained by ordinary molding)

The composition was molded by using an injection molding machine (IS-150EN of Toshiba Machine Co., Ltd.) at a cylinder temperature of 230˚C, a mold temperature of 100˚C and a molding cycle of 100 sec. to obtain a 4 mm-thick ISO-standard test piece (test piece obtained by ordinary molding) so as to measure its tensile strength.

($TY^1$: tensile strength of test piece obtained by residence molding)

After molding at a molding cycle of 100 seconds, the molding machine was stopped for 10 minutes while the temperature was kept, and a 4 mm-thick ISO-standard test piece (test piece obtained by residence molding) which was molded at a molding cycle of 100 seconds again was left in an environment having a temperature of 23˚C and a relative humidity of 50 % for 24 hours and used to measure its tensile strength.

The tensile strength retention (ΔTY ratio-2) after residence molding was calculated based on the following equation.

$$\Delta TY\ ratio\text{-}2 = 100 \times TY^1/TY^0$$

The term "tensile strength" as used herein means higher strength out of tensile breaking strength and tensile yield strength.

(5) Mold contamination

The composition was molded into a piece having a length of 130 mm, a width of 13 mm and a thickness of 1.5 mm. 500 shots were molded by using an injection molding machine (IS-150EN of Toshiba Machine Co., Ltd.) at a cylinder temperature of 230˚C, a mold temperature of 100˚C or 120˚C and a molding cycle of 100 sec. The state of the surface of the mold was visually checked before and after this and evaluated as follows.

○: there is no change before and after continuous molding test
Δ : there is a large amount of a deposit after continuous molding test
× : there is a huge amount of a deposit after continuous molding test

(6) Notched impact value

The composition was molded into a 4 mm-thick ISO-standard test piece. Molding was carried out by using an injection molding machine (IS-150EN of Toshiba Machine Co., Ltd.) at a cylinder temperature of 230˚C, a mold temperature of 120˚C and a molding cycle of 100 sec. The notched impact value of the test piece was measured in accordance with ISO standards after it was left in an environment having a temperature of 23˚C and a relative humidity of 50 % for 24 hours.

(7) Flame retardancy

The composition was molded into a piece having a length of 130 mm, a width of 13 mm and a thickness of 2.0 mm. Molding was carried out by using an injection molding machine (IS-150EN of Toshiba Machine Co., Ltd.) at a cylinder temperature of 230˚C, a mold temperature of 120˚C and a molding cycle of 100 sec. The flame retardancy of the molded piece having a thickness of 2.0 mm was evaluated by the method (UL94) specified by Underwriters Laboratories Inc. of the U.S.

(8) Surface property

The composition was molded into a plate-like piece having a length of 150 mm, a width of 150 mm and a thickness of 3.0 mm. Molding was carried out by using an injection molding machine (IS-150EN of Toshiba Machine

Co., Ltd.) at a cylinder temperature of 230˚C, a mold temperature of 120˚C and a molding cycle of 200 sec. The surface property of the plate-like piece was judged visually based on the following criteria. The term "molding cycle" as used herein means the total of an injection time, a pressure keeping time and a cooling time. For the evaluation of the surface property, the injection peak pressure was set to 10 MPa and the kept pressure was set to 5 MPa.

○: surface property is satisfactory without any sink mark
Δ : a sink mark is slightly seen at the end of plate-like piece
× : surface property is poor due to production of a sink mark

(9) Dimensional change after moist heat

The composition was molded into a plate-like piece having a length of 150 mm, a width of 150 mm and a thickness of 1.0 mm. Molding was carried out by using an injection molding machine (IS-150EN of Toshiba Machine Co., Ltd.) at a cylinder temperature of 230˚C, a mold temperature of 50˚C and a molding cycle of 100 sec. The plate-like piece was subjected to a moist heat treatment at 70˚C and 60 %RH for 500 hours while only one end of the obtained plate-like piece was fixed, and the warpage of the plate-like piece before and after the moist heat treatment was measured with commercially available vernier calipers and judged based on the following criteria. The term "molding cycle" as used herein means the total of an injection time, a pressure keeping time and a cooling time.

○: warpage of plate-like piece before and after moist heat treatment is less than 0.5 cm
Δ: warpage of plate-like piece before and after moist heat treatment is not less than 0.5 cm and less than 1.0 cm
× : warpage of plate-like piece before and after moist heat treatment is not less than 1.0 cm

(10) Dimensional stability

The composition was molded into a piece having a length of 130 mm, a width of 13 mm and a thickness of 1 . 5 mm. Molding was carried out by using an injection molding machine (IS-150EN of Toshiba Machine Co., Ltd.) at a cylinder temperature of 230˚C, a mold temperature of 120˚C and a molding cycle of 100 sec. Only one end of the molded piece was fixed on a flat plate and a rise of the other unfixed end from the flat plate was measured with a commercially available height gauge and judged based on the following criteria. The term "molding cycle" as used herein is the total of an injection time, a pressure keeping time and a cooling time.

O: rise of unfixed end from flat plate is less than 0.1 mm
Δ: rise of unfixed end from flat plate is not less than 0.1 mm and less than 0.3 mm
X : rise of unfixed end from flat plate is not less than 0.3 mm

(11) Burr suppression property

The composition was molded into a piece having a length of 150 mm, a width of 13 mm and a thickness of 3.2 mm. Molding was carried out by using an injection molding machine (IS-150EN of Toshiba Machine Co., Ltd.) at a cylinder temperature of 230˚C, a mold temperature of 120˚C and a molding cycle of 100 sec. Burrs produced at one end corresponding to the resin filled end of the molded piece were measured with commercially available vernier calipers and judged based on the following criteria. The term "molding cycle" as used herein means the total of an injection time, a pressure keeping time and a cooling time. To make burr production conditions the same, the injection peak pressure was set to 10 MPa and the kept pressure was set to 5 MPa.

○: burrs produced at one end corresponding to resin filled end are less than 1.0 mm

Δ: burrs produced at one end corresponding to resin filled end are not less than 1.0 mm and less than 2.0 mm

× : burrs produced at one end corresponding to resin filled end are not less than 2.0 mm

The following components were used in Examples 1 to 44 and Comparative Examples 1 to 17.
(component A-α: polylactic acid)
A-α-1: poly-L-lactic acid obtained in Production Example 1
A-α-2: poly-D-lactic acid obtained in Production Example 2
A-α-3-1: stereocomplex polylactic acid-1 obtained in Production Example 3-1
A-α-3-2: stereocomplex polylactic acid-2 obtained in Production Example 3-2

A-α-3-3: stereocomplex polylactic acid-3 obtained in Production Example 3-3
(component A-β-1: aromatic polyester)
PBT: polybutylene terephthalate resin (300FP of Wintec Polymer Co., Ltd.)
(component A-β-2: polyolefin resin)
PP: polypropylene (Novatec FA3DA of Mitsui Chemical Co., Ltd. , MVR [240 ˚C, 2.16 kg] = 12 ($cm^3$/10 min)
(component A-β-3: methacrylic resin)
PMMA: methacrylic resin (Acripet VH of Mitsubishi Rayon Co. , Ltd., weight average molecular weight of 100,000, glass transition temperature of 105˚C, MVR[240˚C, 2.16 kg] = 2 ($cm^3$/10 min)
(component A-β-4: aromatic polycarbonate resin)
PC: aromatic polycarbonate (L-1225L of Teijin Chemicals Ltd.)
(component A-β-5: polyacetal resin)
POM: polyacetal (Jurakon M-90-44 of Polyplastics Co., Ltd.,
MVR[240˚C, 2.16 kg] = 19 ($cm^3$/10 min)
(component B: phosphono-fatty acid ester)
Component B-1: DHPA described in Reference Examples
Component B-2 (comparative): ammonium hypophosphite
[reagent]
(component C: phosphate metal salt)
Component C-1: sodium
2,2'-methylenebis(4,6-di-tert-butylphenyl)phosphate
(Adecastab NA-11: ADEKA Corporation)
(component D: antioxidant)
Component D-1: phosphite-based antioxidant (Adecastab PEP24G (trade name) of ADEKA Corporation)
Component D-2: phosphonite-based antioxidant (Sandstab P-EPQ (trade name) of Clariant Japan Co., Ltd.)
Component D-3: hindered phenol-based antioxidant (Irganox 1076 (trade name) of Ciba Specialty Chemicals Co., Ltd.)
Component D-4: thioether-based antioxidant (Adecastab AO-412S (trade name) of ADEKA Corporation)
(component E: end-sealing agent)
Component E-1: aliphatic polycarbodiimide (Carbodilite LA-1 (trade name) of Nisshinbo Industries, Inc.)
E-2: epoxy group-containing acrylic-styrene copolymer (ADR-4368CS (trade name) of BASF Japan Co., Ltd.)
E-3: oxazoline group-containing acrylic-styrene copolymer (Epochlos RPS-1005 (trade name) of Nippon Shokubai Co., Ltd.)
E-4: Seloquixide 2021P of Daicel Chemical Industries, Ltd. [(3',4'-epoxycyclohexane)methyl 3,4-epoxycyclohexane carboxylate]
(component F: hydrotalcite)
Component F-1 : DHT-4A-2 of Kyowa Chemical Industry Co., Ltd.
Component F-2: DHT-4A of Kyowa Chemical Industry Co., Ltd.
Component F-3: DHT-4C of Kyowa Chemical Industry Co., Ltd.
(component G: impact modifier)
Component G-1: ABS resin (AT-05 (trade name) of Japan A and L Co., Ltd.)
Component G-2: acrylic core-shell rubber (Palaroid BPM500 (trade name) of Rohm and Haas Co., Ltd.)
Component G-3: copolyethylene (Bond Fast 7M (trade name) of Sumitomo Chemical Co., Ltd.)
Component G-4: polyamide elastomer (TPAE32 (trade name) of Fuji Kasei Kogyo Co., Ltd.)
(component H: flame retardant)
(component H-1: phosphorus-based flame retardant)
H-1-1: phosphate-based flame retardant (PX-200 of Daihachi Chemical Industry Co., Ltd.) [resorcinol bis(di-2,6-xylyl phosphate)]
H-1-2: phosphonate-based flame retardant (FP-100 of Fushimi Pharmaceutical Co., Ltd. [phenoxyphosphagen oligomer]
H-1-3: polyphosphate-based flame retardant AP462 of Clariant Japan Co., Ltd. [ammonium polyphosphate]
H-1-4: phosphinate-based flame retardant EXOLIT1240 of Clariant Japan Co., Ltd. (ammonium diethyl phosphinate)
(component H-2: nitrogen-based flame retardant)
H-2-1: melamine phosphate MELAPUR 200 of Chiba Co., Ltd.
H-2-2: melamine isocyanurate MC610 of Nissan Chemical Industries, Ltd.
H-2-3: MELAPUR200 of Ciba Specialty Chemicals Co., Ltd. [melamine polyphosphate]
(component H-3: metal hydroxide compound-based flame retardant)
H-3: $Al(OH)_3$ reagent [purity of 95 %]
(component I: inorganic filler)
I-1 : talc (P-3 (trade name) of Nippon Talc Co. , Ltd. [average particle diameter of 5 μm]
I-2:Glass fiber (3PE-937S (trade name) of Nitto Boseki Co., Ltd. [average diameter of 13 μm, chopped strand having a

cut length of 3 mm]

Examples 1 to 13 and Comparative Examples 1 to 9

Each of the polylactic acids A-α-1, A-α-2 and A-α-3-1 to A-α-3-3 produced in Production Examples 1, 2 and 3-1 to 3-3 was used as polylactic acid and premixed with components shown in Tables 2 and 3 excluding the component I-2 uniformly by dry blending, the pre-mixture was supplied from a first feed port, the component I-2 was supplied from a second feed port, and all the components were melt extruded into a pellet. The first feed port is a feed port at the proximal end and the second feed port is provided in a side screw. When the component I-2 is not contained in the composition, it is needless to say that all the components are supplied from the first feed port. Melt extrusion was carried out by using a 30 mmϕ vented double-screw extruder having a side screw [TEX30XSST of The Japan Steel Works, Ltd.]. The extrusion temperatures of C1/C2 to C5/C6/C7 to C11/D were 10˚C/240˚C/230˚C/220˚C/220˚C, respectively, the revolution of the main screw was 150 rpm, the revolution of the side screw was 50 rpm, the delivery rate was 20 kg/h, and the vent vacuum degree was 3 kPa.

The obtained pellet was dried at 100˚C for 5 hours by a hot air circulating drier and molded by an injection molding machine (IS-150EN of Toshiba Machine Co., Ltd.) to evaluate its enantiomer chain length, releasability, tensile strength retention and mold contamination.

Table 2

| | | | Example 1 | Example 2 | Example 3 | Example 4 | Example 5 |
|---|---|---|---|---|---|---|---|
| Component A-α (polylactic acid) | A-α-1 | Parts by weight | 100 | | | | |
| | A-α-2 | | | 100 | | | |
| | A-α-3-1 | | | | 100 | 100 | |
| | A-α-3-2 | | | | | | 100 |
| | A-α-3-3 | | | | | | |
| Component B (phosphono-fatty acid ester) | B-1 Step(i) | | 0.082 | 0.082 | 0.082 | 0.082 | 1 |
| | B-1 Step(ii) | | 0.03 | 0.03 | 0.03 | | |
| | B-2 Step(ii) | | | | | | |
| Component C (phosphate metal salt) | C-1 | | 0.1 | 0.1 | 0.1 | 0.1 | 0.1 |
| Component D (antioxidant) | D-1 | | 0.05 | 0.05 | 0.05 | 0.05 | 0.05 |
| | D-2 | | | | | | |
| | D-3 | | 0.1 | 0.1 | 0.1 | 0.1 | 0.1 |
| | D-4 | | | | | | |
| Component E (end-sealing agent) | E-1 | | 1 | 1 | 1 | 1 | 1 |
| | E-2 | | | | | | |
| | E-3 | | | | | | |
| Component I (inorganic filler) | I-1 | | 1 | 1 | 1 | 1 | 1 |
| | I-2 | | 45 | 45 | | | |
| Enantiomer chain length | | | Not calculated | Not calculated | 24 | 23 | 22 |
| Releasability | | | △ | △ | ○ | ○ | ○ |
| ΔTY ratio-1 (during moist heat treatment) | | | 66% | 64% | 87% | 60% | 63% |
| ΔTY ratio-2 (during residence molding) | | | 69% | 67% | 82% | 62% | 65% |
| Mold contamination (mold temperature of 120°C) | | | ○ | ○ | ○ | ○ | △ |

Step (i): step in Production Examples 1 to 3
Step (ii): step of melt extruding the component A-α produced in Production Examples 1 to 3 and other components shown in the table

Table 2 (continued)

| | | | C.Ex.1 | C.Ex.2 | C.Ex.3 | C.Ex.4 | C.Ex. 5 | C.Ex.6 | C.Ex.7 | C.Ex.8 | C.Ex.9 |
|---|---|---|---|---|---|---|---|---|---|---|---|
| Component A-α (polylactic acid) | A-α-1 | Parts by weight | | | | | | | | | |
| | A-α-2 | | | | | | | | | | |
| | A-α-3-1 | | | 100 | 100 | 100 | 100 | 100 | 100 | 100 | 100 |
| | A-α-3-2 | | | | | | | | | | |
| | A-α-3-3 | | 100 | | | | | | | | |
| Component B (phosphono-fatty acid ester) | B-1 Step(i) | | | 0.082 | 0.082 | 0.082 | 0.082 | 0.082 | 0.082 | 0.082 | 0.082 |
| | B-1 Step(ii) | | | 11 | | | 0.03 | 0.03 | 0.03 | 0.03 | 0.03 |
| | B-2 Step(ii) | | | | 0.03 | 0.03 | | | | | |
| Component C (phosphate metal salt) | C-1 | | 0.1 | 0.1 | 0.1 | | | 0.1 | 0.1 | 0.1 | 0.1 |
| Component D (antioxidant) | D-1 | | 0.05 | 0.05 | 0.05 | 0.05 | 0.05 | | 3 | 0.05 | 0.05 |
| | D-2 | | | | | | | | | | |
| | D-3 | | 0.1 | 0.1 | 0.1 | 0.1 | 0.1 | | 3 | 0.1 | 0.1 |
| | D-4 | | | | | | | | | | |
| Component E (end-sealing agent) | E-1 | | 1 | 1 | 1 | 1 | 1 | 1 | 1 | | 15 |
| | E-2 | | | | | | | | | | |
| | E-3 | | | | | | | | | | |
| Component I (inorganic filler) | I-1 | | 1 | 1 | 1 | 1 | 1 | 1 | 1 | 1 | 1 |
| | I-2 | | | | | | | | | | |
| Enantiomer chain length | | | 18 | 22 | 21 | 22 | 22 | 22 | 22 | 21 | 19 |
| Releasability | | | ○ | ○ | ○ | × | × | ○ | ○ | ○ | ○ |
| ΔTY ratio-1 (during moist heat treatment) | | | 7% | 57% | 54% | 59% | 64% | 49% | 57% | 8% | 45% |
| ΔTY ratio-2 (during residence molding) | | | 31% | 44% | 48% | 52% | 62% | 44% | 58% | 56% | 34% |
| Mold contamination (mold temperature of 120°C) | | | ○ | × | ○ | ○ | ○ | △ | × | ○ | × |

C. Ex.: Comparative Example
Step (i): step in Production Examples 1 to 3
Step (ii): step of melt extruding the component A-α produced in Production Examples 1 to 3 and other components shown in the table

Table 3

| | | | Ex. 6 | Ex. 7 | Ex. 8 | Ex. 9 | Ex. 10 | Ex. 11 | Ex. 12 | Ex. 13 |
|---|---|---|---|---|---|---|---|---|---|---|
| Component A-α (polylactic acid) | A-α-3-1 | Parts by weight | 100 | 100 | 100 | 100 | 100 | 100 | 100 | 100 |
| Component B (phosphonofatty acid ester) | B-1 | | 0.082 | 0.082 | 0.082 | 0.082 | 0.082 | 0.082 | 0.082 | 0.082 |
| | B-1 Step (ii) | | 0.03 | 0.03 | 0.03 | 0.03 | 0.03 | 0.03 | 0.03 | 0.03 |
| | B-2 Step (ii) | | | | | | | | | |
| Component C (phosphate metal salt) | C-1 | | 0.1 | 0.1 | 0.1 | 0.1 | 0.1 | 0.1 | 0.1 | 0.1 |
| Component D (antioxidant) | D-1 | | 0.05 | | | | 0.05 | 0.05 | 0.05 | 0.05 |
| | D-2 | | | 0.05 | | | | | | |
| | D-3 | | | | 0.05 | | 0.1 | 0.1 | 0.1 | 0.1 |
| | D-4 | | | | | 0.05 | | | | |
| Component E (end-sealing agent) | E-1 | | 1 | 1 | 1 | 1 | 1 | | 1 | 1 |
| | E-2 | | | | | | 1 | | | |
| | E-3 | | | | | | | 1 | | |
| Component I (inorganic filler) | I-1 | | 1 | 1 | 1 | 1 | 1 | 1 | | 1 |
| | I-2 | | | | | | | | | 45 |
| Enantiomer chain length | | | 23 | 23 | 23 | 23 | 46 | 23 | 24 | 24 |
| Releasability | | | ○ | ○ | ○ | ○ | Δ | ○ | Δ | ○ |
| ΔTY ratio-1(during moist heat treatment) | | | 67% | 66% | 69% | 62% | 89% | 63% | 84% | 82% |
| ΔTY ratio-2(during residence molding) | | | 62% | 64% | 68% | 60% | 82% | 67% | 74% | 88% |
| Mold contamination (mold temperature of 120˚C) | | | ○ | ○ | ○ | ○ | ○ | ○ | ○ | ○ |

Ex.: Example
Step (i): step in Production Examples 1 to 3
Step (ii) : step of melt extruding the component A-α produced in Production Examples 1 to 3 and other components shown in the table

The composition comprising the components A to E has excellent characteristic properties with the small deterioration of physical properties during a moist heat treatment and residence molding. Examples 3 to 5 having an enantiomer chain length of 10 to 40 show high releasability.

In Comparative Examples 1 and 2 in which the amount of the component B is outside the claimed range, the deterioration of physical properties during a moist heat treatment and residence molding is large disadvantageously. Especially in Comparative Example 2 in which the amount of the component B-1 is above the claimed range, the contamination of the mold is severe, and a bad smell in the work environment is striking.

In Comparative Example 3 in which a component B other than the specific compound is used, the deterioration of physical properties during a moist heat treatment and residence molding is larger than that of Example 3 and Comparative Example 4 in which the component C is not contained is inferior in releasability, which is not preferred for practical use.

Comparative Example 5 in which the component C is not contained is inferior in releasability, which is not preferred for practical use.

In Comparative Examples 6 and 7 in which the amount of the component D is outside the claimed range, the deterioration of physical properties during a moist heat treatment and residence molding is larger than that of Example

3 disadvantageously. Especially in Comparative Example 7 in which the amount of the component D is above the claimed range, the contamination of the mold is severe, and a bad smell in the work environment is striking.

In Comparative Examples 8 and 9 in which the amount of the component E is outside the claimed range, the deterioration of physical properties during a moist heat treatment and residence molding is larger than that of Example 3 disadvantageously. Especially in Comparative Example 9 in which the amount of the component E is above the claimed range, the contamination of the mold is severe, and a bad smell in the work environment is striking.

Examples 6 to 9 in which one specific type of the component D is used are slightly inferior in the deterioration of physical properties during a moist heat treatment and residence molding to Example 3 in which specific two different types of the component D are used but have more excellent characteristic properties than those of Comparative Example 6.

Although Example 10 in which the components E-1 and E-2 are used in combination is superior to Comparative Example 8 in the retention of physical properties during a moist heat treatment and residence molding and slightly superior to Example 3 in the retention of physical properties during a moist heat treatment, it has an enantiomer chain length of more than 40 and is slightly inferior to Example 3 in releasability.

In Example 11 in which the component E-1 of Example 3 is changed to the component E-3, the deterioration of physical properties during a moist heat treatment and residence molding is slightly larger than that of Example 3 but much smaller than that of Comparative Example 8 in which the component E is not contained, and the industrial utility of the composition is recognized.

Example 12 in which the component I is not contained is slightly inferior in releasability but superior to Comparative Examples in the retention of physical properties during a moist heat treatment and residence molding, and the industrial utility of the composition is recognized.

Example 13 in which the component I-2 is contained is slightly superior to Example 13 in the retention of physical properties during residence molding, and the industrial utility of the composition is high.

Examples 14 to 27

Each of the polylactic acids A-α-3-1 to A-α-3-3 produced in Production Examples 3-1 to 3-3 was used as polylactic acid and premixed with components shown in Tables 4 and 5 excluding the component I-2 uniformly by dry blending, the pre-mixture was supplied from a first feed port, the component I-2 was supplied from a second feed port, and all the components were melt extruded into a pellet. The first feed port is a feed port at the proximal end and the second feed port is provided in a side screw. When the component I-2 is not contained in the composition, it is needless to say that all the components are supplied from the first feed port. Melt extrusion was carried out by using a 30 mmϕ vented double-screw extruder having a side screw [TEX30XSST of The Japan Steel Works, Ltd.]. The extrusion temperatures of C1/C2 to C5/C6/C7 to C11/Dwere 10°C/240°C/230°C/220°C/220°C, respectively, the revolution of the main screw was 150 rpm, the revolution of the side screw was 50 rpm, the delivery rate was 20 kg/h, and the vent vacuum degree was 3 kPa.

The obtained pellet was dried at 100°C for 5 hours by a hot air circulating drier and molded by an injection molding machine (IS-150EN of Toshiba Machine Co., Ltd.) to evaluate its enantiomer chain length, releasability, tensile strength retention, mold contamination, notched impact strength and flame retardancy.

Table 4

| | | | Ex. 14 | Ex. 15 | Ex. 16 | Ex. 17 | Ex. 18 | Ex. 19 |
|---|---|---|---|---|---|---|---|---|
| Component A-α (polylactic acid) | A-α-3-1 | Parts by weight | 100 | | | | | |
| | A-α-3-2 | | | 100 | | | | |
| | A-α-3-3 | | | | 100 | 100 | 100 | 100 |
| Component B (phosphonofatty acid ester) | B-1 Step(i) | | 0.082 | 0.082 | 0.082 | 0.082 | 0.082 | 0.082 |
| | B-1 Step(ii) | | 0.03 | 0.03 | 0.03 | 0.03 | 0.03 | 0.03 |
| | B-2 Step(ii) | | | | | | | |
| Component C (phosphate metal salt) | C-1 | | 0.1 | 0.1 | 0.1 | 0.1 | 0.1 | 0.1 |
| Component D (antioxidant) | D-1 | | 0.1 | 0.1 | 0.1 | 0.1 | 0.1 | 0.1 |
| | D-2 | | | | | | | |
| | D-3 | | 0.05 | 0.05 | 0.05 | 0.05 | 0.05 | 0.05 |
| | D-4 | | | | | | | |
| Component E (end-sealing agent) | E-1 | | 1 | 1 | 1 | 1 | 1 | 1 |
| | E-2 | | | | | | | |
| | E-3 | | | | | | | |
| Component G (impact modifier) | G-1 | | 20 | 20 | 20 | | | |
| | G-2 | | | | | 20 | | |
| | G-3 | | | | | | 20 | |
| | G-4 | | | | | | | 20 |
| Component I (inorganic filler) | I-1 | | 1 | 1 | 1 | 1 | 1 | 1 |
| | I-2 | | 45 | 45 | | | | |
| Enantiomer chain length | | | Not calculated | Not calculated | 23 | 23 | 23 | 23 |
| Notched impact value($kJ/m^2$) | | | 12 | 12 | 10 | 8 | 9 | 8 |
| Releasability | | | Δ | Δ | ○ | ○ | ○ | ○ |
| ΔTY ratio-1(during moist heat treatment) | | | 71% | 69% | 88% | 74% | 73% | 75% |
| ΔTY ratio-2(during residence molding) | | | 69% | 66% | 89% | 71% | 71% | 69% |
| Mold contamination (mold temperature of 120˚C) | | | ○ | ○ | ○ | ○ | ○ | ○ |

Ex.: Example
Step (i): step in Production Examples 1 to 3
Step (ii) : step of melt extruding the component A-α produced in Production Examples 1 to 3 and other components shown in the table

Table 5

| | | | Ex.20 | Ex.21 | Ex.22 | Ex.23 | Ex.24 | Ex.25 | Ex.26 | Ex.27 |
|---|---|---|---|---|---|---|---|---|---|---|
| Component A-α (polylactic acid) | A-α-3-1 | Parts by weight | 100 | | | | | | | |
| | A-α-3-2 | | | 100 | | | | | | |
| | A-α-3-3 | | | | 100 | 100 | 100 | 100 | 100 | 100 |
| Component B (phosphonofatty acid ester) | B-1 Step(i) | | 0.082 | 0.082 | 0.082 | 0.082 | 0.082 | 0.082 | 0.082 | 0.082 |
| | B-1 Step (ii) | | 0.03 | 0.03 | 0.03 | 0.03 | 0.03 | 0.03 | 0.03 | 0.03 |
| | B-2 Step (ii) | | | | | | | | | |
| Component C (phosphate metal salt) | C-1 | | 0.1 | 0.1 | 0.1 | 0.1 | 0.1 | 0.1 | 0.1 | 0.1 |
| Component D (antioxidant) | D-1 | | 0.1 | 0.1 | 0.1 | 0.1 | 0.1 | 0.1 | 0.1 | 0.1 |
| | D-2 | | | | | | | | | |
| | D-3 | | 0.05 | 0.05 | 0.05 | 0.05 | 0.05 | 0.05 | 0.05 | 0.05 |
| | D-4 | | | | | | | | | |
| Component E (end-sealing agent) | E-1 | | 1 | 1 | 1 | 1 | 1 | | | |
| | E-2 | | | | | | | 1 | 1 | 1 |
| | E-3 | | | | | | | | | |
| Component H (flame retardant) | H-1-1 | | 20 | 20 | 20 | | | | | |
| | H-1-2 | | | | | 25 | | | | |
| | H-1-3 | | | | | | 10 | | | |
| | H-1-4 | | | | | | | 10 | 15 | |
| | H-2-1 | | | | | | | 5 | | |
| | H-2-2 | | | | | | | | 5 | |
| | H-3 | | | | | | | | | |
| Component I (inorganic filler) | I-1 | | 1 | 1 | 1 | 1 | | | | 40 |
| | I-2 | | 45 | 45 | | | 1 | 1 | 1 | 1 |
| Enantiomer chain length | | | Not calculated | Not calculated | 23 | 23 | 23 | 23 | 32 | 43 |
| Releasability | | | Δ | Δ | ○ | ○ | ○ | ○ | ○ | ○ |

(continued)

| | Ex.20 | Ex.21 | Ex.22 | Ex.23 | Ex.24 | Ex.25 | Ex.26 | Ex.27 |
|---|---|---|---|---|---|---|---|---|
| ΔTY ratio-1(during moist heat treatment) | 60% | 58% | 70% | 74% | 73% | 75% | 73% | 75% |
| ΔTY ratio-2 (during residence molding) | 55% | 52% | 69% | 71% | 71% | 74% | 70% | 74% |
| Mold contamination (mold temperature of 120˚C) | ○ | ○ | ○ | ○ | ○ | ○ | ○ | ○ |
| Flame retardancy (2.0mm) | V-0 | V-0 | V-0 | V-0 | V-0 | V-0 | V-0 | V-0 |

Step (i): step in Production Examples 1 to 3
Step (ii): step of melt extruding the component A-α produced in Production Examples 1 to 3 and other components shown in the table other

Examples 28 to 40

PBT (A-β-1) as a thermoplastic resin and each of the polylactic acids A-α-1, A-α-2 and A-α-3-1 to A-α-3-3 produced in Production Examples 1, 2 and 3-1 to 3-3 as polylactic acid were used and premixed with components shown in Tables 6 and 7 excluding the component I-2 uniformly by dry blending, the pre-mixture was supplied from a first feed port, the component I-2 was supplied from a second feed port, and all the components were melt extruded into a pellet. The first feed port is a feed port at the proximal end and the second feed port is provided in a side screw. When the component I-2 is not contained in the composition, it is needless to say that all the components are supplied from the first feed port. Melt extrusion was carried out by using a 30 mmϕ vented double-screw extruder having a side screw [TEX30XSST of The Japan Steel Works, Ltd.]. The extrusion temperatures of C1/C2 to C5/C6/C7 to C11/D were 10˚C/240˚C/230˚C/220˚C/220˚C, respectively, the revolution of the main screw was 150 rpm, the revolution of the side screw was 50 rpm, the delivery rate was 20 kg/h, and the vent vacuum degree was 3 kPa.

The obtained pellet was dried at 100˚C for 5 hours by a hot air circulating drier and molded by an injection molding machine (IS-150EN of Toshiba Machine Co., Ltd.) to evaluate its enantiomer chain length, releasability, tensile strength retention and mold contamination.

The composition comprising the components A to E has excellent characteristic properties with the small deterioration of physical properties during a moist heat treatment and residence molding. Examples 30 to 32 having an enantiomer chain length of 10 to 40 show high releasability.

Example 37 in which the components E-1 and E-2 are used in combination is excellent in the retention of physical properties during a moist heat treatment and residence molding and slightly superior to Example 30 in the retention of physical properties during a moist heat treatment.

In Example 38 in which the component E-3 is used in place of the component E-1 of Example 30, the deterioration of physical properties during a moist heat treatment and residence molding is larger than that of Example 30.

Example 39 in which the component I is not contained is slightly inferior in releasability but excellent in the retention of physical properties during a moist heat treatment and residence molding. Example 40 in which the component I-2 is contained is slightly superior to Example 30 in the retention of physical properties during residence molding.

Table 6

| | | | Ex.28 | Ex.29 | Ex.30 | Ex.31 | Ex.32 |
|---|---|---|---|---|---|---|---|
| Component A-α (polylactic acid) | A-α-1 | Parts by weight | 75 | | | | |
| | A-α-2 | | | 75 | | | |
| | A-α-3-1 | | | | 75 | 75 | |
| | A-α-3-2 | | | | | | 75 |
| | A-α-3-3 | | | | | | |
| | A-β-1- (PBT) | | 25 | 25 | 25 | 25 | 25 |
| Component B (phosphonofatty acid ester) | B-1 Step(i) | | 0.063 | 0.063 | 0.063 | 0.063 | 0.75 |
| | B-1 Step(ii) | | 0.03 | 0.03 | 0.03 | | |
| | B-2 Step (ii) | | | | | | |
| Component C (phosphate metal salt) | C-1 | | 0.1 | 0.1 | 0.1 | 0.1 | 0.1 |
| Component D (antioxidant) | D-1 | | 0.05 | 0.05 | 0.05 | 0.05 | 0.05 |
| | D-2 | | | | | | |
| | D-3 | | 0.1 | 0.1 | 0.1 | 0.1 | 0.1 |
| | D-4 | | | | | | |
| Component E (end-sealing agent) | E-1 | | 1 | 1 | 1 | 1 | 1 |
| | E-2 | | | | | | |
| | E-3 | | | | | | |
| Component I (inorganic filler) | I-1 | | 1 | 1 | 1 | 1 | 1 |
| | I-2 | | 45 | 45 | | | |
| Enantiomer chain length | | | Not calculated | Not calculated | 20 | 20 | 20 |
| Releasability | | | Δ | Δ | ○ | ○ | ○ |
| ΔTY ratio-1(during moist heat treatment) | | | 61% | 60% | 85% | 60% | 60% |
| ΔTY ratio-2 (during residence molding) | | | 64% | 61% | 73% | 61% | 60% |
| Mold contamination (mold temperature of 120˚C) | | | ○ | ○ | ○ | ○ | Δ |

Ex.: Example
Step (i): step in Production Examples 1 to 3
Step (ii): step of melt extruding the component A-α produced in Production Examples 1 to 3 and other components shown in the table

Table 7

| | | | Ex.33 | Ex.34 | Ex.35 | Ex.36 | Ex.37 | Ex.38 | Ex.39 | Ex.40 |
|---|---|---|---|---|---|---|---|---|---|---|
| Component A-α (polylactic acid) | A-α-3-1 | Parts by weight | 75 | 75 | 75 | 75 | 75 | 75 | 75 | 75 |
| | A-β-1 (PBT) | | 25 | 25 | 25 | 25 | 25 | 25 | 25 | 25 |
| Component B (phosphonofatty acid ester) | B-1 Step (i) | | 0.063 | 0.063 | 0.063 | 0.063 | 0.063 | 0.063 | 0.063 | 0.063 |
| | Step(ii) B-1 Step (ii) | | 0.03 | 0.03 | 0.03 | 0.03 | 0.03 | 0.03 | 0.03 | 0.03 |
| | B-2 Step (ii) | | | | | | | | | |
| Component C (phosphate metal salt) | C-1 | | 0.1 | 0.1 | 0.1 | 0.1 | 0.1 | 0.1 | 0.1 | 0.1 |
| Component D (antioxidant) | D-1 | | 0.05 | | | | 0.05 | 0.05 | 0.05 | 0.05 |
| | D-2 | | | 0.05 | | | | | | |
| | D-3 | | | | 0.05 | | 0.1 | 0.1 | 0.1 | 0.1 |
| | D-4 | | | | | 0.05 | | | | |
| Component E (end-sealing agent) | E-1 | | 1 | 1 | 1 | 1 | 1 | | 1 | 1 |
| | E-2 | | | | | | 2 | | | |
| | E-3 | | | | | | | 1 | | |
| Component I (inorganic filler) | I-1 | | 1 | 1 | 1 | 1 | 1 | 1 | | 1 |
| | I-2 | | | | | | | | | 45 |
| Enantiomer chain length | | | 20 | 20 | 20 | 20 | 41 | 20 | 20 | 20 |
| Releasability | | | ○ | ○ | ○ | ○ | Δ | ○ | Δ | ○ |
| ΔTY ratio-1 (during moist heat treatment) | | | 62% | 61% | 64% | 60% | 84% | 60% | 79% | 78% |
| ΔTY ratio-2 (during residence molding) | | | 60% | 60% | 63% | 60% | 77% | 62% | 69% | 83% |
| Mold contamination (mold temperature of 120˚C) | | | ○ | ○ | ○ | ○ | ○ | ○ | ○ | ○ |

Ex.: Example
Step (i): step in Production Examples 1 to 3
Step (ii): step of melt extruding the component A-α produced in Production Examples 1 to 3 and other components shown in the table

Examples 41 to 44 and Comparative Example 10 to 17

Resin composition pellets were obtained in the same manner as in Example 28 except that a polyolefin resin (component A-β-2), a methacrylic resin (component A-β-3), an aromatic polycarbonate resin (component A-β-4) and a polyacetal resin (component A-β-5) shown in Tables 8 to 11 were used in place of the aromatic polyester resin (A-β-1) in amounts shown in Tables 8 to 11 and then molded to evaluate their physical properties. The results are shown in Tables 8 to 11.

Table 8

| | | | Example 41 | Comparative 10 | Comparative 11 |
|---|---|---|---|---|---|
| Component A-α (polylactic acid) | A-α-3-1 | Parts by weight | 75 | Example 75 | Example 75 |
| | A-β-2 (pp) | | 25 | 25 | 25 |
| Component B (phosphono-fatty acid ester) | B-1 Step (i) | | 0.063 | 0.063 | 0.063 |
| | B-1 Step (ii) | | 0.03 | 0.03 | 0.03 |
| | B-2 Step (ii) | | | | |
| Component C (phosphate metal salt) | C-1 | | 0.1 | 7 | |
| Component D (antioxidant) | D-1 | | 0.05 | 0.05 | 0.05 |
| | D-2 | | | | |
| | D-3 | | 0.1 | 0.1 | 0.1 |
| | D-4 | | | | |
| Component E (end-sealing agent) | E-1 | | 1 | 1 | 1 |
| | E-2 | | | | |
| | E-3 | | | | |
| Component I (inorganic filler) | I-1 | | 1 | 1 | 1 |
| | I-2 | | | | |
| Enantiomer chain length | | | 21 | 21 | 21 |
| Surface property | | | ○ | × | × |
| ΔTY ratio-1(during moist heat treatment) | | | 83% | 7% | 60% |
| ΔTY ratio-2 (during residence molding) | | | 74% | 20% | 63% |
| Mold contamination (mold temperature of 120˚C) | | | ○ | ○ | ○ |

Step (i): step in Production Examples 1 to 3
Step (ii) : step of melt extruding the component A-α produced in Production Examples 1 to 3 and other components shown in the table

Table 9

| | | | Example 42 | Comparative Example 12 | Comparative Example 13 |
|---|---|---|---|---|---|
| Component A-α (polylactic acid) | A-α-3-1 | Parts by weight | 75 | 75 | 75 |
| | A-β-3 (PMMA) | | 25 | 25 | 25 |
| Component B (phosphono-fatty acid ester) | B-1 Step(i) | | 0.063 | 0.063 | 0.063 |
| | B-1 Step (ii) | | 0.03 | 0.03 | 0.03 |
| | B-2 Step (ii) | | | | |
| Component C (phosphate metal salt) | C-1 | | 0.1 | 7 | |
| Component D (antioxidant) | D-1 | | 0.05 | 0.05 | 0.05 |
| | D-2 | | | | |
| | D-3 | | 0.1 | 0.1 | 0.1 |
| | D-4 | | | | |
| Component E (end-sealing agent) | E-1 | | 1 | 1 | 1 |
| | E-2 | | | | |
| | E-3 | | | | |
| Component I (inorganic filler) | I-1 | | 1 | 1 | 1 |
| | I-2 | | | | |
| Enantiomer chain length | | | 21 | 21 | 21 |
| Surface property | | | ○ | × | × |
| ΔTY ratio-1 (during moist heat treatment) | | | 90% | 14% | 67% |
| ΔTY ratio-2 (during residence molding) | | | 80% | 26% | 69% |
| Mold contamination (mold temperature of 120˚C) | | | ○ | ○ | ○ |
| Step (i): step in Production Examples 1 to 3<br>Step (ii) : step of melt extruding the component A-α produced in Production Examples 1 to 3 and other components shown in the table | | | | | |

Table 10

| | | | Example 43 | Comparative Example 14 | Comparative Example 15 |
|---|---|---|---|---|---|
| Component A-α (polylactic acid) | | Parts by weight | | | |
| | A-β-3-1 A-β-4 (pc) | | 25 | 25 | 25 |
| Component B (phosphono-fatty acid ester) | B-1 Step(i) | | 0.063 | 0.063 | 0.063 |
| | B-1 Step (ii) | | 0.03 | 0.03 | 0.03 |
| | B-2 Step(ii) | | | | |
| Component C (phosphate metal salt) | C-1 | | 0.1 | 7 | |
| Component D (antioxidant) | D-1 | | 0.05 | 0.05 | 0.05 |
| | D-2 | | | | |
| | D-3 | | 0.1 | 0.1 | 0.1 |
| | D-4 | | | | |
| Component E (end-sealing agent) | E-1 | | 1 | 1 | 1 |
| | E-2 | | | | |
| | E-3 | | | | |
| Component I (inorganic filler) | I-1 | | 1 | 1 | 1 |
| | I-2 | | | | |
| Enantiomer chain length | | | 21 | 21 | 21 |
| Surface property | | | ○ | × | × |
| ΔTY ratio-1 (during moist heat treatment) | | | 84% | 7% | 61% |
| ΔTY ratio-2 (during residence molding) | | | 72% | 16% | 61% |
| Mold contamination (mold temperature of 120˚C) | | | ○ | ○ | ○ |
| Step (i): step in Production Examples 1 to 3<br>Step (ii) : step of melt extruding the component A-α produced in Production Examples 1 to 3 and other components shown in the table | | | | | |

Table 11

| | | | Example 44 | Comparative Example 16 | Comparative Example 17 |
|---|---|---|---|---|---|
| Component A-α (polylactic acid) | A-α-3-1 | Parts by weight | 75 | 75 | 75 |
| | A-β-5 (POM) | | 25 | 25 | 25 |
| Component B (phosphono-fatty acid ester) | B-1 Step(i) | | 0.063 | 0.063 | 0.063 |
| | B-1 Step (ii) | | 0.03 | 0.03 | 0.03 |
| | B-2 Step(ii) | | | | |
| Component C (phosphate metal salt) | C-1 | | 0.1 | 7 | |
| Component D (antioxidant) | D-1 | | 0.05 | 0.05 | 0.05 |
| | D-2 | | | | |
| | D-3 | | 0.1 | 0.1 | 0.1 |
| | D-4 | | | | |
| Component E (end-sealing agent) | E-1 | | 1 | 1 | 1 |
| | E-2 | | | | |
| | E-3 | | | | |
| Component I (inorganic filler) | I-1 | | 1 | 1 | 1 |
| | I-2 | | | | |
| Enantiomer chain length | | | 21 | 21 | 21 |
| Burr suppression property | | | ○ | × | × |
| ΔTY ratio-1(during moist heat treatment) | | | 83% | 7% | 60% |
| ΔTY ratio-2 (during residence molding) | | | 73% | 19% | 62% |
| Mold contamination (mold temperature of 120˚C) | | | ○ | ○ | ○ |
| Step (i): step in Production Examples 1 to 3<br>Step (ii) : step of melt extruding the component A-α produced in Production Examples 1 to 3 and other components shown in the table | | | | | |

Examples 45 to 63

1. Production of polylactic acid

In Examples 45 to 63, polylactic acid was produced by the following method. Measurement values were obtained by the following methods.

(1) weight average molecular weight (Mw) and number average molecular weight (Mn) of polymer

They were measured by gel permeation chromatography (GPC) and calculated in terms of standard polystyrene. GPC measurement equipment include the RID-6A differential refractometer of Shimadzu Corporation as a detector and the TSKgelG3000HXL of Tosoh Corporation as a column. Measurement was carried out by using chloroform as an eluant and injecting 10 μl of a sample having a concentration of 1 mg/ml (chloroform containing 1 % of hexafluoroisopropanol) at a temperature of 40˚C and a flow rate of 1.0 ml/min.

(2) carboxyl group concentration

The sample was dissolved in purified o-cresol in a nitrogen gas stream and titrated with an ethanol solution of

0.05 N potassium hydroxide using Bromocresol Blue as an indicator.

(3) Stereo crystal rate

The parameter indicating the degree of forming the stereocomplex was evaluated from the following equation by using a melting enthalpy derived from the polylactic acid (component A) crystal in the temperature elevation step of DSC (TA-2920 of TA Instrument Co., Ltd.) measurement.

$$\text{Stereo crystal rate} = [\Delta Hms/(\Delta Hms + \Delta Hmh)] \times 100$$

[ΔHmh and ΔHms are the melting enthalpy (ΔHmh) of a crystal melting point which appears at a temperature lower than 190˚C and the melting enthalpy (ΔHms) of a crystal melting point which appears at 190˚C or higher and lower than 250˚C in the temperature elevation step of differential scanning calorimeter (DSC) measurement, respectively.]

The above ΔHmh and ΔHms were obtained by measuring the resin composition in a nitrogen atmosphere at a temperature elevation rate of 20˚C/min by means of a differential scanning calorimeter (DSC).

Production Example 4-1: component A-α-1, poly-L-lactic acid (PLLA)

100 parts by weight of L-lactide (manufactured by Musashino Kagaku Kenkyusho Co., Ltd., optical purity of 100 %) and 0.15 part by weight of stearyl alcohol were fed to a polymerization reactor having a cooling distillation tube from a raw material feed port in a nitrogen gas stream. Subsequently, the inside of the reactor was substituted by nitrogen 5 times, and L-lactide was molten at 190˚C. When L-lactide was molten completely, 500 μl of a toluene solution containing 0.005 part by weight of tin octylate was added to carry out polymerization at 190˚C for 1 hour. After the end of polymerization, 0.082 part by weight of ethyl di-n-hexylphosphonoacetate (DHPA) was added from the raw material feed port and kneaded for 15 minutes. Finally, excess L-lactide was volatilized, and the polymer was discharged from the reactor and cut into a chip to obtain poly-L-lactic acid (PLLA).

The obtained poly-L-lactic acid had a weight average molecular weight of 151,000, a glass transition point (Tg) of 55˚C, a melting peak temperature (Tmh) of 177˚C and a carboxyl group content of 15 eq/ton. The enantiomer average chain length could not be calculated as no syndiotactic sequences could be measured.

Production Example 4-2: component A-α-2, poly-D-lactic acid (PDLA)

The operation of Production Example 1 was repeated except that D-lactide (manufactured by Musashino Kagaku Kenkyusho Co., Ltd., optical purity of 100 %) was used in place of L-lactide of Production Example 4-1 so as to obtain poly-D-lactic acid (PDLA). The obtained poly-D-lactic acid had a weight average molecular weight of 152,000, a glass transition point (Tg) of 55˚C, a melting peak temperature (Tmh) of 177˚C and a carboxyl group content of 14 eq/ton. The enantiomer average chain length could not be calculated as no syndiotactic sequences could be measured.

Production Example 4-3: component A-α-3-1, stereocomplex polylactic acid-1 (scPLA-1)

100 parts by weight of polylactic acid consisting of 50 parts by weight of PLLA and 50 parts by weight of PDLA obtained in Production Examples 4-1 and 4-2 and 0.1 part by weight of sodium 2,2'-methylenebis(4,6-di-tert-butylphenyl) phosphate (Adecastab NA-11: ADEKA Corporation) were mixed together by means of a blender, and the resulting mixture was dried at 110˚C for 5 hours and supplied into a 30 mmϕ vented double-screw extruder [TEX30XSST of The Japan Steel Works, Ltd.] to be melt extruded into a pellet at a cylinder temperature of 250˚C, a screw revolution of 250 rpm, a delivery rate of 9 kg/h and a vent vacuum degree of 3 kPA so as to obtain stereocomplex polylactic acid-1. The obtained stereocomplex polylactic acid-1 had a weight average molecular weight of 131, 000, a glass transition point (Tg) of 58 ˚C, a complex-phase polylactic acid crystal melting peak temperature (Tms) of 221˚C, a carboxyl group content of 16 eq/ton, an enantiomer average chain length of 28 and a ratio of melting peaks at 195˚C or higher to all the melting peaks in the temperature elevation step of differential scanning calorimeter (DSC) measurement of 100 %. The amount of NA-11 was based on 100 parts by weight of the total of PLLA1 and PDLA1.

Production Example 4-4: component A-α-3-3, stereocomplex polylactic acid-3 (scPLA-3)

Stereocomplex polylactic acid-3 was produced in the same manner as in production Example 4-3 by using PLLA and PDLA obtained in the same manner as in Production Examples 4-1 and 4-2 except that 0.082 part by weight

of ethyl di-n-hexylphosphonoacetate used in Production Examples 4-1 and 4-2 was not added at all. The obtained stereocomplex polylactic acid-3 had a weight average molecular weight of 127,000, a glass transition point (Tg) of 58˚C, a complex-phase polylactic acid crystal melting peak temperature (Tms) of 221˚C, a carboxyl group content of 28 eq/ton, an enantiomer average chain length of 28 and a ratio of melting peaks at 195 or higher to all the melting peaks in the temperature elevation step of differential scanning calorimeter (DSC) measurement of 100 %. The amount of NA-11 was based on 100 parts by weight of the total of PLLA1 and PDLA1. The results are shown in Table 12.

Table 12

| Component | | A-α-1 | A-α-2 | A-α-3-1 | A-α-3-3 |
|---|---|---|---|---|---|
| Production Example | | Production Example 4-1 | Production Example 4-2 | Production Example 4-3 | Production Example 4-4 |
| | | PLLA | PDLA | scPLA-1 | scPLA-3 |
| DHPA | Parts by weight | 0.082 | 0.082 | 0.082 | None |
| NA-11 | Parts by weight | None | None | 0.1 | 0.1 |
| Tms | ˚C | Not detected | Not detected | 221 | 221 |
| Tmh | ˚C | 177 | 177 | Not detected | Not detected |
| Tg | ˚C | 55 | 55 | 58 | 58 |
| Stereo crystal rate | % | 0 | 0 | 100 | 100 |
| Mw | X10000 | 15.1 | 15.2 | 13.1 | 12.7 |
| Carboxyl group concentration | eq/ton | 15 | 14 | 16 | 28 |
| Enantiomer average chain length | - | could not be calculated | could not be calculated | 28 | 28 |

2. Production and evaluation of polylactic acid pellet

A resin composition pellet comprising polylactic acid (component A-α) and additives was produced by the following method. Values in Examples 45 to 63 were obtained by the following methods.

(1) Hydrolysis resistance

The composition was molded into a 4 mm-thick piece for ISO measurement. Molding was carried out by using an injection molding machine (IS-150EN of Toshiba Machine Co., Ltd.) at a cylinder temperature of 230˚C and a mold temperature of 120˚C. Then, this molded piece was subjected to a moist heat treatment at 80˚C and 95 %RH for 100 hours. A tensile test was conducted in accordance with IS0527-1 and IS0527-2 to calculate a retention from tensile maximum stress before a moist heat treatment and tensile maximum stress after a moist heat treatment [(tensile maximum stress after moist heat treatment/tensile maximum stress before moist heat treatment) x 100].

(2) Heat resistance (HDT)

The deflection temperature under load was measured under a load of 0.45 MPa in accordance with ISO75-1 and -2.

(3) Flame retardancy

The flame retardancy of a 1.5 mm-thick test piece was evaluated by the method (UL94) specified by Underwriters Laboratories Inc. of the U.S.

The above-described components A-α-1 to A-α-3 were used as the component A. The components F-1 to F-3 shown in Table 13 were used as the component F.

Table 13

| | Manufacturer | Trade name | Structural formula | Baking | Surface treatment with fatty acid |
|---|---|---|---|---|---|
| F-1 | Kyowa Chemical Industry Co., Ltd. | DHT-4A-2 | $[Mg_{0.68}Al_{0.32}(OH_2)][CO_3]$ | done | done |
| F-2 | Kyowa Chemical Industry Co., Ltd. | DHT-4A | $[Mg_{0.68}Al_{0.32}(OH_2)]$ $[CO_3 0.52H_2O]$ | not done | done |
| F-3 | Kyowa Chemical Industry Co., Ltd. | DHT-4C | $[Mg_{0.68}Al_{0.32}(OH_2)][CO_3]$ | done | not done |

The following other raw materials were used in Examples 45 to 63.
<component E: end-sealing agent>
E-1: Carbodilite LA-1 of Nisshinbo Industries, Inc.
[aliphatic carbodiimide]
E-2: ADR-4368CS of BASF Japan Co., Ltd. [epoxy group-containing acrylic-styrene copolymer]
E-4: Seloquixide 2021P of Daicel Chemical Industries, Ltd.
[(3',4'-epoxycyclohexane)methyl 3,4-epoxycyclohexane carboxylate]
<component D: antioxidant>
D-3: Irganox 1076 of Ciba Specialty Chemicals Co., Ltd.
[n-octadecyl-3-(3',5'-di-tert-butyl-4'-hydroxyphenyl) propionate]
D-1: PEP24G of ADEKA Corporation
[bis(2,4-di-tert-butylphenyl)pentaerythritol diphosphite]
<component I: inorganic filler>
I-1:P-3 of Nippon Talc Co. , Ltd. (average particle diameter of 5 μm)
I-2: 3PE-937S of Nitto Boseki Co., Ltd. (chipped strand having an average diameter of 13 μm and a cut length of 3 mm)
<component H: flame retardant)
H-1-1: PX-200 of Daihachi Chemical Industry, Co., Ltd.
[resorcinol bis(di-2,6-xylylphosphate)]
H-4: APA-100 of Taihei Kagaku Sangyo Co., Ltd. [aluminum phosphite]
H-2-3: MELAPUR200 of Ciba Specialty Chemicals Co., Ltd. [melamine polyphosphate]

Example 45

The polylactic acid A-α-1 produced in Production Example 4-1 was used as polylactic acid and premixed with components shown in Table 14 uniformly by dry blending, and the pre-mixture was supplied from a first feed port and melt extruded into a pellet. The first feed port is existent at the proximal end. Melt extrusion was carried out by using a 30 mmϕ vented double-screw extruder having a side screw [TEX30XSST of The Japan Steel Works, Ltd.]. The extrusion temperatures of C1/C2 to C5/C6/C7 to C11/D were 10˚C/240˚C/230˚C/220˚C/220˚C, respectively, the revolution of the main screw was 150 rpm, the revolution of the side screw was 50 rpm, the delivery rate was 20 kg/h, and the vent vacuum degree was 3 kPa. The obtained pellet was dried at 100˚C for 5 hours by a hot air circulating drier and molded by an injection molding machine (IS-150EN of Toshiba Machine Co., Ltd.) to carry out evaluations. The results are shown in Table 14.

Example 46

A pellet was obtained and evaluated in the same manner as in Example 1 except that the polylactic acid A-α-2 produced in Production Example 4-2 was used as polylactic acid. The results are shown in Table 14.

Examples 47 to 63

A pellet was obtained and evaluated in the same manner as in Example 45 except that the polylactic acid A-α-3-1 produced in Production Example 4-3 was used as polylactic acid. In the case of the composition comprising the component I-2, after the components excluding the component I-2 were premixed together uniformly by dry blending, the pre-mixture was supplied from the first feed port and the component I-2 was supplied from the second feed port.

The second feed port is provided in the side screw. The results are shown in Tables 14 to 17. Examples 45 to 63 in which the component F was contained had a high retention of hydrolysis resistance and excellent hydrolysis resistance.

Comparative Example 18

A pellet was obtained and evaluated in the same manner as in Example 45 except that the polylactic acid A-α-3-3 produced in Production Example 4-4 was used as polylactic acid and the component B was not used. The results are shown in Table 14. Since the component B was not contained, the resulting pellet had a low retention of hydrolysis resistance and very low hydrolysis resistance.

Table 14

| | | Unit | Ex.45 | Ex.46 | Ex.47 | Ex.48 | Ex.49 | C.Ex. 18 |
|---|---|---|---|---|---|---|---|---|
| Component A-α (polylactic acid) | A-α-1 | Parts by weight | 100 | | | | | |
| | A-α-2 | | | 100 | | | | |
| | A-α-3-1 | | | | 100 | 100 | 100 | 100 |
| | A-α-3-3 | | | | | | | |
| Component B (phosphono-fatty acid ester) | B-1 Step (i) | | 0.082 | 0.082 | 0.082 | 0.082 | 0.082 | |
| | B-1 Step (ii) | | 0.03 | 0.03 | 0.03 | 0.03 | 0.03 | |
| | B-2 Step (ii) | | | | | | | |
| Component C (phosphate metal salt) | C-1 | | 0.1 | 0.1 | 0.1 | 0.1 | 0.1 | 0.1 |
| Component F (Hydrotalcite) | F-1 | | 0.1 | 0.1 | 0.1 | | | 0.1 |
| | F-2 | | | | | 0.1 | | |
| | F-3 | | | | | | 0.1 | |
| Component E (end-sealing agent) | E-1 | | 1 | 1 | 1 | 1 | 1 | 1 |
| Component D (antioxidant) | D-3 | | 0.1 | 0.1 | 0.1 | 0.1 | 0.1 | 0.1 |
| | D-1 | | 0.05 | 0.05 | 0.05 | 0.05 | 0.05 | 0.05 |
| Component I (inorganic filler) | I-1 | | 1 | 1 | 1 | 1 | 1 | 1 |
| Hydrolysis resistance | Tensile strength retention | % | 98 | 97 | 97 | 93 | 94 | 10 |
| HDT (0.45MPa) | | ˚C | 89 | 88 | 114 | 103 | 102 | 113 |

Ex. :Example C.Ex.:Comparative Example
Step (i): step in Production Examples 1 to 3
Step (ii): step of melt extruding the component A-α produced in Production Examples 1 to 3 and other components shown in the table

Table 15

| | | Unit | Ex.50 | Ex.51 | Ex.52 | Ex.53 | Ex.54 | Ex.55 | Ex.56 |
|---|---|---|---|---|---|---|---|---|---|
| Component A-α (polylactic acid) | A-α-3-1 | Parts by weight | 100 | 100 | 100 | 100 | 100 | 100 | 100 |
| Component B (phosphono-fatty acid ester) | B-1 Step (i) | | 0.082 | 0.082 | 0.082 | 0.082 | 0.082 | 0.082 | 0.082 |
| | B-1 step (ii) | | 0.03 | 0.03 | 0.03 | 0.03 | 0.03 | 0.03 | 0.03 |
| | B-2 Step (ii) | | | | | | | | |
| Component C (phosphate metal salt) | C-1 | | 0.1 | 0.1 | 0.1 | 0.1 | 0.1 | 0.1 | 0.1 |
| Component F (Hydrotalcite) | F-1 | | 0.1 | | | 0.1 | | | 0.1 |
| | F-2 | | | 0.1 | | | 0.1 | | |
| | F-3 | | | | 0.1 | | | | |
| Component E (end-sealing agent) | E-1 | | | | | | | | 0.5 |
| | E-2 | | 1 | 1 | 1 | | | | 0.5 |
| | E-4 | | | | | 1 | 1 | 1 | |
| Component D (antioxidant) | D-3 | | 0.1 | 0.1 | 0.1 | 0.1 | 0.1 | 0.1 | 0.1 |
| | D-1 | | 0.05 | 0.05 | 0.05 | 0.05 | 0.05 | 0.05 | 0.05 |
| Component I (inorganic filler) | I-1 | | 1 | 1 | 1 | 1 | 1 | 1 | 1 |
| Hydrolysis resistance | Tensile strength retention | % | 89 | 78 | 82 | 88 | 74 | 79 | 97 |
| HDT (0.45MPa) | | ˚C | 104 | 100 | 102 | 105 | 101 | 103 | 106 |

STep (i) : step in Production Examples 1 to 3
Step (ii): step of melt extruding the component A-α produced in Production Examples 1 to 3 and other components shown in the table

Table 16

| | | Unit | Ex.57 | Ex.58 | Ex.59 |
|---|---|---|---|---|---|
| Component A-α (polylactic acid) | A-α-3-1 | Parts by weight | 100 | 100 | 100 |
| Component B (phosphono-fatty acid ester) | B-1 Step (i) | | 0.082 | 0.082 | 0.082 |
| | B-1 Step (ii) | | 0.03 | 0.03 | 0.03 |
| | B-2 Step (ii) | | | | |
| Component C (phosphate metal salt) | C-1 | | 0.1 | 0.1 | 0.1 |
| Component F (Hydrotalcite) | F-1 | | 0.1 | 0.1 | 0.1 |
| Component E (end-sealing agent) | E-1 | | 1 | 1 | 1 |
| Component D (antioxidant) | D-3 | | 0.1 | 0.1 | 0.1 |
| | D-1 | | 0.05 | 0.05 | 0.05 |
| Component I (inorganic filler) | I-1 | | 1 | 1 | 1 |
| | I-2 | | 20 | 50 | 100 |
| Hydrolysis resistance | Tensile strength retention | % | 98 | 93 | 92 |
| HDT(0.45MPa) | | ˚C | 209 | 208 | 207 |

Step (i): step in Production Examples 1 to 3
Step (ii): step of melt extruding the component A-α produced in Production Examples 1 to 3 and other components shown in the table

Table 17

| | | Unit | Ex.60 | Ex.61 | Ex.62 | Ex.63 |
|---|---|---|---|---|---|---|
| Component A-α (polylactic acid) | A-α-3-1 | Parts by weight | 100 | 100 | 100 | 100 |
| Component B (phosphono-fatty acid ester) | B-1 Step (i) | | 0.082 | 0.082 | 0.082 | 0.082 |
| | B-1 Step (ii) | | 0.03 | 0.03 | 0.03 | 0.03 |
| | B-2 Step (ii) | | | | | |
| Component C (phosphate metal salt) | C-1 | | 0.1 | 0.1 | 0.1 | 0.1 |
| Component F (Hydrotalcite) | F-1 | | 0.1 | 0.1 | 0.1 | 0.1 |
| Component E (end-sealing agent) | E-1 | | 1 | 1 | 1 | 1 |
| Component D (antioxidant) | D-3 | | 0.1 | 0.1 | 0.1 | 0.1 |
| | D-1 | | 0.05 | 0.05 | 0.05 | 0.05 |
| Component I (inorganic filler) | I-1 | | 1 | 1 | 1 | 1 |
| | I-2 | | | | | 50 |
| Component H (flame retardant) | H-1-1 | | 10 | 5 | 5 | 10 |
| | H-4 | | | 5 | | |
| | H-2-3 | | | | 5 | |
| Hydrolysis resistance | Tensile strength retention | % | 91 | 90 | 92 | 89 |
| HDT (0.45MPa) | | ˚C | 92 | 104 | 102 | 206 |

(continued)

| | Unit | Ex.60 | Ex.61 | Ex.62 | Ex.63 |
|---|---|---|---|---|---|
| Flame retardancy | - | V-2 | V-2 | V-2 | V-2 |
| Step (i) : step in Production Examples 1 to 3<br>Step (ii) : step of melt extruding the component A-α produced in Production Examples 1 to 3 and other components shown in the table | | | | | |

Examples 64 to 70 and Comparative Examples 19 to 23

Compositions were molded into pieces having a length of 130 mm, a width of 13 mm and a thickness of 1.5 mm. 2,000 shots were molded by using an injection molding machine (IS-150EN of Toshiba Machine Co., Ltd.) at a cylinder temperature of 240˚C, a mold temperature of 100˚C and a molding cycle of 100 sec. Foreign matter contained in the 2, 000-th shot molded product was checked visually to evaluate its moldability as follows.

○ : no foreign matter is seen in molded product

Δ : brown foreign matter is seen in molded product

× : a large amount of black foreign matter is seen in molded product

Table 18

| | Example 64 | Example 65 | Example 66 | Comparative Example 19 |
|---|---|---|---|---|
| Composition | same as in Example 3 | same as in Example 4 | same as in Example 5 | same as in Comparative Example 1 |
| Moldability | ○ | ○ | ○ | × |

Table 19

| | Example 67 | Comparative Example 20 |
|---|---|---|
| Composition | same as Example 41 | same as Example 67 except component B is not added |
| Moldability | ○ | × |

Table 20

| | Example 68 | Comparative Example 21 |
|---|---|---|
| Composition | same as Example 42 Example | same as Example 68 except component B is not added |
| Moldability | ○ | × |

Table 21

| | Example 69 | Comparative Example 22 |
|---|---|---|
| Composition | same as Example 43 | same as Example 69 except component B is not added |
| Moldability | ○ | × |

Table 22

| | Example 70 | Comparative Example 23 |
|---|---|---|
| Composition | same as Example 44 | same as Example 70 except component B is not added |
| Moldability | ○ | × |

As obvious from the above results, the composition of the present invention does not have any problem and exhibits excellent moldability even when molding is carried out for a long time.

Effect of the Invention

The polylactic acid composition and molded article thereof of the present invention have excellent heat stability, especially moist heat stability. By the production method of the present invention, there can be provided a polylactic acid composition which has excellent heat stability, especially moist heat stability. Further, there can be provided a composition which has a high molding cycle due to excellent releasability as it comprises a polymer alloy with an aromatic polyester.

Industrial Applicability

The composition of the present invention is useful as a material for auto parts, electric and electronic parts, electric equipment exterior parts and OA exterior parts.

## Claims

1. A composition comprising
100 parts by weight of a resin component (component A) which is composed of 5 to 100 wt% of polylactic acid (component A-$\alpha$) and 95 to 0 wt% of a thermoplastic resin (component A-$\beta$), 0.001 to 5 parts by weight of a phosphono-fatty acid ester (component B),
0.01 to 5 parts by weight of a phosphate metal salt (component C),
0.001 to 2 parts by weight of at least one antioxidant (component D) selected from the group consisting of a phosphite-based compound, a phosphonite-based compound, a hindered phenol-based compound and a thioether-based compound, and
0.001 to 10 parts by weight of an end-sealing agent (component E).

2. The composition according to claim 1 which further comprises 0.01 to 0.3 part by weight of a hydrotalcite (component F) based on 100 parts by weight of the resin component (component A).

3. The composition according to claim 1 or 2 which further comprises 2 to 100 parts by weight of an impact modifier (component G) based on 100 parts by weight of the resin component (component A).

4. The composition according to any one of claims 1 to 3 which further comprises at least one flame retardant (component H) selected from the group consisting of a phosphorus-based flame retardant (component H-1), a nitrogen-based flame retardant (component H-2) and a metal hydroxide compound-based flame retardant (component H-3) based on 100 parts by weight of the resin component (component A) .

5. The composition according to any one of claims 1 to 4 which further comprises 0.05 to 100 parts by weight of an inorganic filler (component I) based on 100 parts by weight of the resin component (component A).

6. The composition according to any one of claims 1 to 5, wherein the polylactic acid (component A-$\alpha$) comprises poly-L-lactic acid (component A-$\alpha$-1) essentially composed of an L-lactic acid unit and poly-D-lactic acid (component A-$\alpha$-2) essentially composed of a D-lactic acid unit, and the weight ratio of the component A-$\alpha$-1 to the component A-$\alpha$-2 is 10:90 to 90:10.

7. The composition according to claim 6, wherein the poly-L-lactic acid (component A-$\alpha$-1) contains not less than 90 mol% of the L-lactic acid unit and the poly-D-lactic acid (component A-$\alpha$-2) contains not less than 90 mol% of the D-lactic acid unit.

**8.** The composition according to any one of claims 1 to 7, wherein the polylactic acid (component A-α) has a ratio of the total area consolidated melting peaks detected at the temperature zone of higher than 195°C to the total area of all the peaks detected during DSC measurement, to be not less than 80%.

**9.** The composition according to any one of claims 1 to 8, wherein the phosphono-fatty acid ester (component B) is represented by the following formula (1).

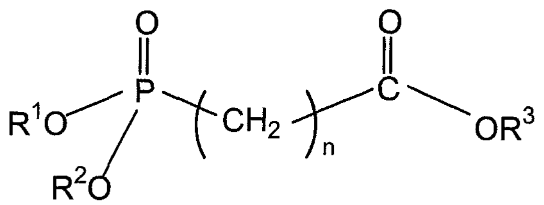

(1)

(in the above formula, $R^1$ to $R^3$ are each independently an alkyl group having 1 to 20 carbon atoms or aryl group having 6 to 12 carbon atoms, and n is an integer of 1 to 3.)

**10.** The composition according to any one of claims 1 to 9, wherein the phosphate metal salt (component C) is represented by the following formula (2) or (3).

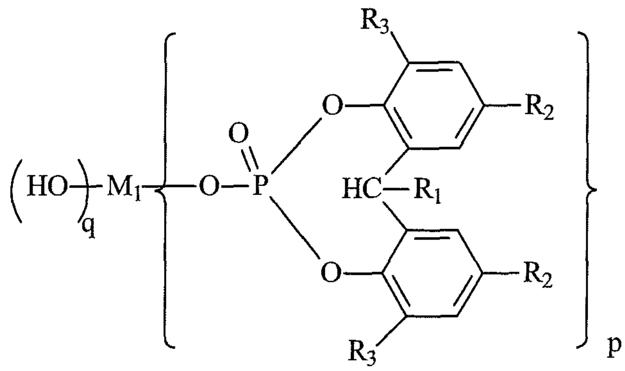

(2)

(in the above formula, $R_1$ is a hydrogen atom or alkyl group having 1 to 4 carbon atoms, $R_2$ and $R_3$ are each independently a hydrogen atom or alkyl group having 1 to 12 carbon atoms, $M_1$ is an alkali metal atom, alkali earth metal atom, zinc atom or aluminum atom, p is 1 or 2, and q is 0 when $M_1$ is an alkali metal atom, alkali earth metal atom or zinc atom and 1 or 2 when $M_1$ is an aluminum atom.)

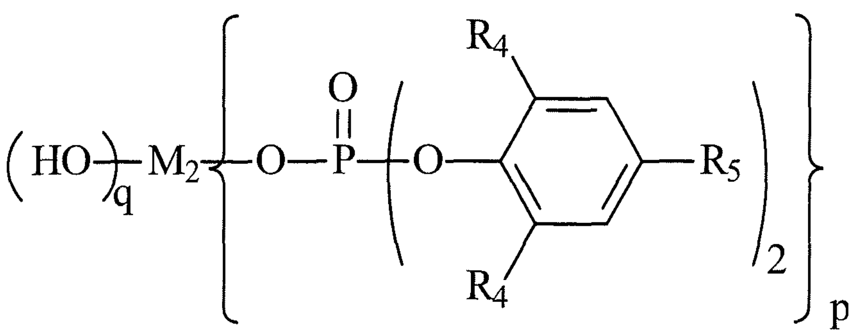

(3)

(in the above formula, $R_4$ and $R_5$ are each independently a hydrogen atom or alkyl group having 1 to 12 carbon atoms, $M_2$ is an alkali metal atom, alkali earth metal atom, zinc atom or aluminum atom, p is 1 to 2, and q is 0 when $M_2$ is an alkali metal atom, alkali earth metal atom or zinc atom and 1 or 2 when $M_2$ is an aluminum atom.)

**11.** The composition according to any one of claims 1 to 10, wherein the antioxidant (component D) is a combination of a phosphite-based compound and a hindered phenol-based compound.

**12.** The composition according to any one of claims 1 to 11, wherein the end-sealing agent (component E) is at least one member selected from the group consisting of a carbodiimide compound, an epoxy compound, an oxazoline compound and an oxazine compound.

**13.** The composition according to any one of claims 1 to 12, wherein the thermoplastic resin (component A-β) is at least one resin selected from the group consisting of an aromatic polyester resin (A-β-1), a polyolefin resin (component A-β-2), a methacrylic resin (component A-β-3), an aromatic polycarbonate resin (component A-β-4) and a polyacetal resin (component A-β-5).

**14.** A method of producing the composition of claim 1, comprising the steps of:

(i) melt kneading together composition-1 which comprises 100 parts by weight of poly-L-lactic acid (component A-α-1) and 0.001 to 3 parts by weight of a phosphono-fatty acid ester (component B) and composition-2 which comprises 100 parts by weight of poly-D-lactic acid (component A-α-2) and 0.001 to 3 parts by weight of a phosphono-fatty acid ester (component B) in the presence of 0.01 to 5 parts by weight of a phosphate metal salt (component C) based on 100 parts by weight of the total of the composition-1 and the composition-2 to prepare stereocomplex polylactic acid; and

(ii) melt kneading together 100 parts by weight of a resin component (component A) which is composed of 5 to 100 wt% of the obtained stereocomplex polylactic acid (component A-α) and 95 to 0 wt% of a thermoplastic resin (component A-β), 0.001 to 2 parts by weight of at least one antioxidant (component D) selected from the group consisting of a phosphite-based compound, a phosphonite-based compound, a hindered phenol-based compound and a thioether-based compound and 0.001 to 10 parts by weight of an end-sealing agent (component E).

**15.** A molded article of the composition of any one of claims 1 to 13.

## INTERNATIONAL SEARCH REPORT

International application No.
PCT/JP2009/069022

A. CLASSIFICATION OF SUBJECT MATTER
*C08L67/04*(2006.01)i, *C08K3/00*(2006.01)i, *C08K5/00*(2006.01)i, *C08K5/521*(2006.01)i, *C08K5/5317*(2006.01)i, *C08L67/02*(2006.01)i, *C08L101/16*(2006.01)n

According to International Patent Classification (IPC) or to both national classification and IPC

B. FIELDS SEARCHED

Minimum documentation searched (classification system followed by classification symbols)
C08L67/04, C08K3/00, C08K5/00, C08K5/521, C08K5/5317, C08L67/02, C08L101/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2007/114459 A1 (Teijin Ltd.), 11 October 2007 (11.10.2007), claims; pages 7 to 11 & US 2009/0062437 A1 & EP 2006331 A2 & CA 2647873 A & KR 10-2008-0106161 A & CN 101415776 A | 1-15 |
| Y | WO 2008/075775 A1 (Kao Corp.), 26 June 2008 (26.06.2008), claims; pages 14 to 20; examples & JP 2008-174735 A & JP 2008-173966 A | 1,4-15 |
| Y | JP 2005-343970 A (Okura Industrial Co., Ltd.), 15 December 2005 (15.12.2005), paragraphs [0014], [0015] (Family: none) | 1,12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 January, 2010 (15.01.10) | 26 January, 2010 (26.01.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2009/069022

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-156616 A (Toray Industries, Inc.), 10 July 2008 (10.07.2008), claims; paragraphs [0039] to [0148], [0154] to [0185], [0188] to [0207] (Family: none) | 1,3-15 |
| Y | JP 2003-192883 A (Asahi Denka Co., Ltd., Toyota Motor Corp.), 09 July 2003 (09.07.2003), claims & US 2005/0001358 A1 & EP 1460107 A1 & WO 2003/057781 A1 & DE 60231548 D & CN 1522282 A | 1,2 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63241024 A
- JP 2862071 B
- JP 3487388 B
- JP 10036651 A
- WO 2007114459 A


### Non-patent literature cited in the description


- *Makromol. Chem.,* 1990, vol. 191, 2287